# EUROPEAN PATENT SPECIFICATION

(11) **EP 1 637 565 B1**
(45) Date of publication and mention of the grant of the patent: **05.05.2010**
(21) Application number: 04735987.2
(22) Date of filing: 03.06.2004
(51) Int. Cl.: C08L 101/10, C08L 71/00, C08K 5/053, C08K 5/103

(54) **CURING COMPOSITION**
HÄRTENDE ZUSAMMENSETZUNG
COMPOSITION DE DURCISSEMENT

(30) Priority: 20.06.2003 JP 2003175825
(43) Date of publication of application: 22.03.2006
(73) Proprietor: KANEKA CORPORATION, Osaka-shi, Osaka 530-8288 (JP)
(72) Inventor: HASEGAWA, Nobuhiro, Osaka-Factory, Settsu-shi, Osaka 566-0072 (JP); NAKAGAWA, Yoshiki,Osaka-Factory, Settsu-shi, Osaka 566-0072 (JP)
(74) Representative: Hart-Davis, Jason
(86) International application number: PCT/JP2004/008091
(87) International publication number: WO 2004/113450

(56) References cited:
- JP-A- 6 228 367
- JP-A- 7 026 154
- JP-A- 7 173 404
- JP-A- 11 012 455
- JP-A- 11 193 343
- JP-A- 57 012 058
- JP-A- 2001 354 830

## Description

### Technical Field

The present invention relates to a curable composition. In particular, the present invention relates to a curable composition comprising a vinyl polymer (I) having at least one crosslinkable silyl group on average, and a compound (II) having an β- or α,γ-diol structure in the molecule.

### Background Art

A known curable liquid polymer having a crosslinkable silyl group at the terminal includes polysiloxane, polyoxypropylene, and polyisobutylene polymers. However, the curable composition employing these each have problems. Although a polysiloxane polymer is superior in for example weather resistance, heat resistance, cold resistance, and flexibility, it has a problem of peripheral contamination by bleeding of the low molecular weight component, or in the coatability because it repels paint. A polyoxypropylene polymer is superior in flexibility, coatability, and stain resistance, but weather resistance is not always sufficient, and it is especially difficult to employ on use around glass. A polyisobutylene polymer is superior in weather resistance and moisture permeation resistance, but there are problems that viscosity is relatively high, as well as that it is difficult to use in a one-component composition. Accordingly, the present inventors invented a vinyl polymer having at least one crosslinkable silyl group on average which is superior in weather resistance and heat resistance, and which is also possible to make into a one-component composition. However, many of the side chains of the said polymer were relatively large in comparison to the main chain, and therefore upon curing of the polymer, a cured product with low modulus and high elongation was in some cases difficult to obtain. In addition, the curing rate of this curable composition was sometimes decreased during storage.

On the other hand, it is disclosed that a curable composition can be obtained using a reactive silicon group-containing oxyalkylene polymer and a compound having an α,β- or α,γ-diol structure in the molecule, which has good rubber physical property with low stress and high elongation, without decreasing for example tackiness, stability, curing property, weather resistance, and storage stability. However, this curable composition uses an oxyalkylene polymer and therefore cannot tolerate severe heat and weather conditions, and a curable composition having a better rubber physical property that is superior in heat and weather resistance, as well as with low stress and high elongation has been desired.
[Patent Document 1] Japanese Patent Laid-Open No. 11-080533

Independently, JP-2001-354830 describes a fire-resistant sealing material comprising (I) a vinyl polymer having at least one cross-linking functional group, and (II) a foaming agent, which thermally decomposes to emit an inert gas. The compositions may contain a polyfunctional alcohol (VI) to aid in swelling during carbonization.

### Disclosure of the Invention

The object of the present invention is to provide a curable composition having a good rubber physical property that is superior in weather or heat resistance, as well as with low stress and high elongation.

Accordingly, as a result of intensive studies in light of the aforementioned situations, the present invention found that the above problems can be improved by using a curable composition comprising a vinyl polymer (I) having at least one crosslinkable silyl group on average, and an ester compound (II) having an α,β- or α,γ-diol structure in the molecule, wherein the ester compound (II) is selected from the group consisting of: a glycerol monocarboxylic acid ester, a polyglycerol carboxylic acid ester, a pentaerythritol monocarboxylic acid ester, a pentaerythritol dicarboxylic acid ester, a sorbitan monocarboxylic acid ester, and a sorbitan dicarboxylic acid ester, and thereby completed the present invention.

The cured product obtained from the curable composition of the present invention has good rubber physical property, as seen in superiority in weather and heat resistance, as well as low stress and high elongation. In addition, the curable composition of the present invention has good storage stability.

### Best Mode for Carrying Out the Invention

The curable composition of the present invention will be described in detail below.

### <<Vinyl Polymer (I)>>

### <Main Chain>

The present inventors have previously invented numerous inventions related to vinyl polymers having various crosslinkable functional groups at the polymer terminal, methods for producing the same, curable compositions, and applications of the same (see, for example Japanese Patent Laid-Open No. 11-080249, Japanese Patent Laid-Open No. 11-080250, Japanese Patent Laid-Open No. 11-005815, Japanese Patent Laid-Open No. 11-116617, Japanese Patent Laid-Open No. 11-116606, Japanese Patent Laid-Open No. 11-080571, Japanese Patent Laid-Open No. 11-080570, Japanese Patent Laid-Open No. 11-130931, Japanese Patent Laid-Open No. 11-100433, Japanese Patent Laid-Open No. 11-116763, Japanese Patent Laid-Open No. 9-272714, and Japanese Patent Laid-Open No. 9-272715). The vinyl polymer (I) of the present invention is not particularly limited, and any polymer disclosed in the inventions exemplified above can be suitably used.

The vinyl monomer constituting the main chain of the vinyl polymer of the present invention is not particularly limited, and various monomers can be used. Examples of a monomer include: a (meth)acrylic monomer such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, isononyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth) acrylate, γ-(methacryloyloxypropyl) trimethoxysilane, an ethylene oxide adduct of (meth)acrylic acid, trifluoromethylmethyl (meth)acrylate, 2-trifluoromethylethyl (meth)acrylate, perfluoroethylmethyl (meth)acrylate, 2-perfluoroethylethyl (meth)acrylate, perfluoroethylperfluorobutylmethyl (meth)acrylate, 2-perfluoroethyl-2-perfluorobutylethyl (meth)acrylate, perfluoroethyl (meth)acrylate, perfluoromethyl (meth)acrylate, diperfluoromethylmethyl (meth)acrylate, 2,2-diperfluoromethylethyl (meth)acrylate, perfluoromethylperfluoroethylmethyl (meth)acrylate, 2-perfluoromethyl-2-perfluoroethylethyl (meth)acrylate, 2-perfluorohexylmethyl (meth)acrylate, 2-perfluorohexylethyl (meth)acrylate, 2-perfluorodecylmethyl (meth)acrylate, 2-perfluorodecylethyl (meth)acrylate, 2-perfluorohexadecylmethyl (meth)acrylate, and 2-perfluorohexadecylethyl (meth)acrylate; an aromatic vinyl monomer such as styrene, vinyl toluene, α-methylstyrene, chlorstyrene, styrene sulfonate, and a salt thereof; a fluorine-containing vinyl monomer such as perfluoroethylene, perfluoropropylene, and vinylidene fluoride; a silicon-containing vinyl monomer such as vinyltrimethoxysilane and vinyltriethoxysilane; maleic anhydride, maleic acid, and monoalkyl- and dialkylesters of maleic acid; fumaric acid, and monoalkyl- and dialkyl- ester of fumaric acid; a maleimide monomer such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; an acrylonitrile monomer such as acrylonitrile and methacrylonitrile; an amide-containing vinyl monomer such as acrylamide and methacrylamide; a vinyl ester such as vinyl acetate, vinyl propionate, vinyl pivalate, vinyl benzoate, and vinyl cinnamate; an alkene such as ethylene and propylene; a conjugated diene such as butadiene and isoprene; vinyl chloride, vinylidene chloride, allyl chloride and allyl alcohol. These may be used alone, or two or more may be copolymerized.

It is preferred that the main chain of the vinyl polymer is produced by polymerization using as the main component at least one monomer selected from the group consisting of a (meth)acrylic monomer, an acrylonitrile monomer, an aromatic vinyl monomer, a fluorine-containing vinyl monomer and a silicon-containing vinyl monomer. "As the main component" as used herein means that 30 mol % or more, preferably from 50 mol % or more, further preferably 70 mol % or more of the monomer unit constituting the vinyl polymer is the above monomer. "(Meth)acrylic" means "acrylic" and/or "methacrylic".

Among these, in view of physical properties etc. of the product to be obtained, a styrene monomer and a (meth)acrylic monomer are preferred, more preferably an acrylic ester monomer and a methacrylic ester monomer, particularly preferably an acrylic ester monomer. In application to general construction, a butyl acrylate monomer is further preferred, since low viscosity of the formulation, and physical property of the cured product such as low modulus, high elongation, weather resistance, and heat resistance is desired. On the other hand, in application to for example automobiles where oil resistance etc. is desired, a copolymer having ethyl acrylate as the main component is further preferred. This polymer having ethyl acrylate as the main component is superior in oil resistance but has a tendency to be a little inferior in low-temperature property (cold resistance). It is therefore possible to substitute a part of the ethyl acrylate with butyl acrylate to improve the low-temperature property. However, because increase in the percentage of butyl acrylate is accompanied by loss of its good oil resistance, it is preferred to have the percentage at 80 mol % or less, more preferably at 60 mol % or less, further preferably at 40 mol % or less, and more preferably at 30 mol % or less depending on the application demanding the oil resistance. To improve for example the low-temperature property without losing the oil resistance, it is also preferable to use for example 2-methoxyethyl acrylate or 2-ethoxyethyl acrylate having an oxygen introduced into an alkyl group of the side chain. However, because introduction of an alkoxy group having an ether bond in the side chain may lead to impairing of heat resistance, when heat resistance is desired, it is preferred that this is used in the percentage of 60 mol % or less, further preferably 40 mol % or less. Depending on the various applications and the objectives desired, it is possible to obtain a suitable polymer by taking into account the physical property necessary such as oil resistance, heat resistance, and low-temperature property, to modify the percentage. An example of those superior in the balance between physical properties such as oil resistance, heat resistance, and low-temperature property include, but is not limited to, a copolymer of ethyl acrylate/butyl acrylate/2-methoxyethyl acrylate (at a molar ratio 40 to 50/20 to 30/40 to 20).

A monomer having a long chain alkyl group etc. such as a stearyl group or a lauryl group may be copolymerized to improve compatibility with other polymers, for example a modified silicone resin (an oxyalkylene polymer having a crosslinkable silyl group). Although it is not particularly limited, compatibility with a modified silicone resin becomes very good by copolymerizing for example stearyl acrylate or lauryl acrylate at from 5 to 20 mol %. Since compatibility varies depending on the molecular weight of each polymer, it is preferred to select the percentage of the monomer to be copolymerized accordingly. When doing so, they may also be block copolymerized. In some cases, the effect is exhibited with small amounts.

The curing property of the curable composition comprising a vinyl polymer having a functional silyl group may become slow while in storage, i.e. the storage stability may become impaired. For example, by copolymerizing methyl acrylate, it may be possible to suppress such decrease in stability. Methyl acrylate may be used also to improve the strength of the cured product. In this case as well, the percentage of the monomer to be copolymerized may be selected according to the molecular weight, and/or it may be block copolymerized.

According to the present invention, these preferred monomers and other monomers may be copolymerized, and further block copolymerized. In such a case, it is preferred that these preferred monomers are incorporated at 40% by weight or more. In the above expressions, "(meth)acrylic acid" for example indicates acrylic acid and/or methacrylic acid.

The molecular weight distribution of the vinyl (meth)acrylate polymer of the present invention, i.e. the ratio of the weight average molecular weight (Mw) to the number average molecular weight (Mn) (Mw/Mn) as measured by gel permeation chromatography is not particularly limited. In view of workability, it is preferred that the molecular weight distribution is less than 1.8, in particular 1.3 or less. Measurement of GPC in the present invention typically uses chloroform as the mobile phase, the measurement is carried out on a polystyrene gel column, and the number average molecular weight etc. can be calculated as a polystyrene-equivalent value.

The number average molecular weight of the vinyl polymer of the present invention is not particularly limited. When measured by gel permeation chromatography, it is preferably from 500 to 1,000,000, in particular from 5,000 to 50,000, in view of workability and physical property.

### <Method for Synthesizing the Main Chain>

The method for synthesizing the vinyl polymer according to the present invention is not limited. It may be synthesized by free radical polymerization, although control radical polymerization is preferred, living radical polymerization is more preferred, and atom transfer radical polymerization is particularly preferred. These will be described below.

### Control Radical Polymerization

The radical polymerization method can be categorized into "general radical polymerization method" in which a monomer having a particular functional group and a vinyl monomer are simply copolymerized using for example an azo compound or a peroxide as the polymerization initiator, and "control radical polymerization method" in which it is possible to introduce a particular functional group at a controlled site such as the terminal.

Although "general radical polymerization method" is a simple method, when using this method, a monomer having a particular functional group is introduced into the polymer only at a certain probability. When a polymer with high functionalization rate is to be obtained, the monomer must be used at a considerably large amount. On the other hand, when only a small amount of the monomer is used, there exists a problem that the percentage of the polymer into which this particular functional group is not introduced increases. In addition, since this is a free radical polymerization, there also exists a problem that only a polymer having wide molecular weight distribution and high viscosity can be obtained.

"Control radical polymerization method" can further be categorized into "chain transfer agent method" in which a vinyl polymer having a functional group at the terminal can be obtained by polymerization using a chain transfer agent having a particular functional group and "living radical polymerization" in which a polymer having the molecular weight almost as designed can be obtained by extension without for example termination reaction at the polymerization growth terminal.

A polymer with high functionalization rate can be obtained by "chain transfer agent method," although a considerably large amount of a chain transfer agent having a particular functional group relative to the initiator is required, and thus leads to financial problems including disposal. In addition, as with the aforementioned "general radical polymerization method," this is a free radical polymerization and therefore there also exists a problem that only a polymer having wide molecular weight distribution and high viscosity can be obtained.

Radical polymerizations are thought to be difficult to control due to high polymerization velocity and tendency of the reaction to terminate by for example coupling among radicals. Unlike these polymerization methods, although "living radical polymerization" is a radical polymerization, termination reaction does not tend to occur, polymer with narrow molecular weight distribution (Mw/Mn of about 1.1 to 1.5) can be obtained, and molecular weight can be freely controlled by controlling the charge ratio between the monomer and the initiator.

Accordingly, "living radical polymerization" allows for obtaining a polymer with narrow molecular weight distribution and low viscosity. In addition, since a monomer having a particular functional group can be introduced into virtually any site within the polymer, this production method is more preferred for producing a vinyl polymer having the above particular functional group.

Living polymerization in a narrow sense means a polymerization in which the termini remains constantly active and the molecular chain keeps growing, although generally, pseudo-living polymerization in which inactive and active termini are in an equilibrium state but still grow is also included. Its definition in the present invention is the latter.

In recent years, the "living radical polymerization" has actively been studied by various study groups. Examples of such studies include, for example, a method using cobalt-porphyrin complex as described in Journal of American Chemical Society (J. Am. Chem. Soc.), 1994, vol. 116, p. 7943; a method using a radical capping agent such as a nitroxide compound as described in Macromolecules, 1994, vol. 27, pp. 7228; and "atom transfer radical polymerization" in which organic halide etc. is used as an initiator and a transition metal complex is used as a catalyst (Atom Transfer Radical Polymerization: ATRP).

Among the "living radical polymerizations," "atom transfer radical polymerization," in which a vinyl monomer is polymerized using for example an organic halide or a halogenated sulfonyl compound as the initiator and a transition metal complex as the catalyst, is further preferred as the method for producing a vinyl polymer having a particular functional group. The reasons for this are as follows: the above characteristics of the "living radical polymerization"; a halogen etc. which is relatively useful for conversion reaction of the functional group is present at the terminal; and there is a high degree of flexibility in designing of the initiator and catalyst. Examples of this atom transfer radical polymerization include Matyjaszewski et al., Journal of American Chemical Society (J. Am. Chem. Soc.), 1995, vol. 117, p. 5614; Macromolecules, 1995, vol. 28, p. 7901; Science, 1996, vol. 272, p. 866; WO96/30421, WO97/18247, WO98/01480, WO98/40415; or Sawamoto et al., Macromolecules, 1995, vol. 28, pp. 1721; Japanese Patent Laid-Open No. 9-208616, and Japanese Patent Laid-Open No. 8-41117.

It is not particularly limited which of these living radical polymerizations is used in the present invention. However, atom transfer radical polymerization is preferred.

Details on the living radical polymerization will be described below, following the description on the control radical polymerization method which can be used for producing the vinyl polymer described later on, i.e. polymerization using a chain transfer agent. Radical polymerization using a chain transfer agent (telomer) is not particularly limited. The following two methods are examples of a method for obtaining a vinyl polymer having a terminal structure suitable for the present invention.

Japanese Patent Laid-Open No. 4-132706 describes a method for obtaining a polymer having a halogen terminal by using a halogenated hydrocarbon as the chain transfer agent. Japanese Patent Laid-Open No. 61-271306, Japanese Patent No. 2594402, and Japanese Patent Laid-Open No. 54-47782 describe a method for obtaining a polymer having a hydroxyl group terminal by using for example hydroxyl group-containing mercaptan or hydroxyl group-containing polysulfide as the chain transfer agent.

Living radical polymerization will be described below.

Among these, a method using a radical capping agent such as a nitroxide compound will be described first. This polymerization generally uses a stable nitroxy free radical (=N-O•) as a radical capping agent. Preferred compounds include, but are not limited to, a nitroxy free radical from a cyclic hydroxyamine such as 2,2,6,6-substituted-1-piperidinyloxy radical or 2,2,5,5-substituted-1-pyrrolidinyloxy radical. A suitable substituent includes an alkyl group having 4 or less carbon atoms such as methyl and ethyl groups. A particular nitroxy free radical compound includes, but is not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N,N-di-t-butylamineoxy radical. A stable free radical such as galvinoxyl free radical may be used instead of the nitroxy free radical.

The above radical capping agent is used together with a radical generator. It is thought that the reaction product of the radical capping agent and the radical generator serves as the polymerization initiator to allow the polymerization of addition polymer monomers to progress. The ratio of the radical capping agent and generator is not particularly limited. One mol of the radical capping agent to 0.1 to 10 mols of the radical generator is suitable.

Various compounds can be used as a radical generator. A peroxide which can generate a radical under polymerization temperature condition is preferred. Examples of this peroxide include, but are not limited to, a diacyl peroxide such as benzoyl peroxide and lauroyl peroxide; a diacyl peroxide such as dicumyl peroxide and di-t-butyl peroxide; a peroxy carbonate such as diisopropylperoxy dicarbonate and bis(4-t-butylcyclohexyl)peroxy dicarbonate; and an alkyl perester such as t-butylperoxy octoate and t-butylperoxybenzoate. Benzoyl peroxide is particularly preferred. In addition, a radical generator, for example a radical-generating azo compound such as azobisisobutylonitrile may be used instead of a peroxide.

As reported in Macromolecules, 1995, 28, P. 2993, an alkoxyamine compound of the following formula may be used as the initiator instead of using the radical capping agent and radical generator together.

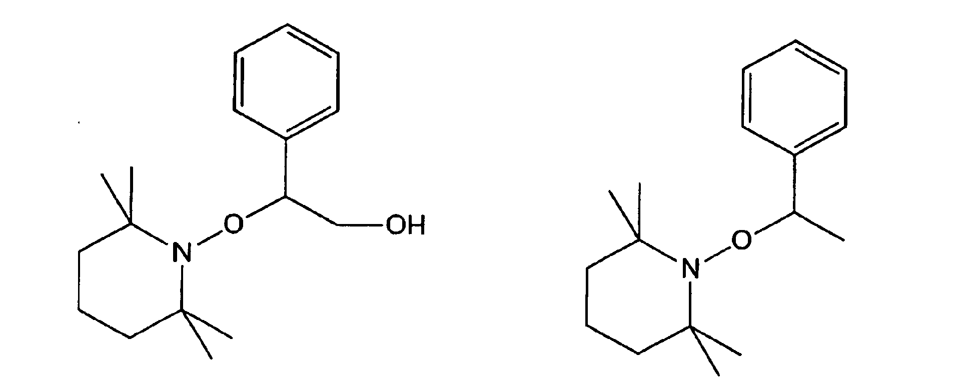

When using the alkoxyamine compound as the initiator, a polymer having a functional group at the terminal can be obtained by using a compound such as those shown in the above formula having a functional group such as a hydroxyl group. A polymer having a functional group at the terminal can be obtained by employing this step in the method of the present invention.

The monomer, the solvent, and the polymerization condition such as polymerization temperature employed in the polymerization using the above radical capping agent such as a nitroxide compound are not limited. Those used in atom transfer radical polymerization as described below may be used.

### Atom Transfer Radical Polymerization

Atom transfer radical polymerization, which is more preferred as the living radical polymerization of the present invention, will be described next.

In atom transfer radical polymerization, an organic halide, in particular an organic halide having a highly reactive carbon-halogen bond (for example, a carbonyl compound having a halogen at the α-position, or a compound having a halogen at the benzyl position), or a halogenated sulfonyl compound etc. are used as the initiator.

Specific examples of this compound include:
C₆H₅-CH₂X, C₆H₅-C (H) (X) CH₃, and C₆H₅-C (X) (CH₃)₂,
wherein C₆H₅ is a phenyl group, and X is chlorine, bromine, or iodine;
R³-C(H)(X)-CO₂R⁴, R³-C (CH₃) (X) -CO₂R⁴, R³-C (H) (X) -C (O) R⁴, and
R³-C(CH₃)(X)-C(O)R⁴,
wherein R³ and R⁴ are a hydrogen atom or an alkyl, aryl, or aralkyl group having 1 to 20 carbons, and X is chlorine, bromine, or iodine; and
R³-C₆H₄-SO₂X,
wherein R³ is a hydrogen atom or an alkyl, aryl, or aralkyl group having 1 to 20 carbons, and X is chlorine, bromine, or iodine).

An organic halide or a halogenated sulfonyl compound having a functional group other than those that initiate polymerization can be used as the initiator for atom transfer radical polymerization. In such a case, a vinyl polymer having a functional group at one of the main chain termini, and a growth terminal structure of the atom transfer radical polymerization at the other main chain terminal, is produced. Examples of this functional group include alkenyl, crosslinkable silyl, hydroxyl, epoxy, amino, and amide groups.

An organic halide having an alkenyl group is not limited. Examples are those having a structure as shown in the general formula (2):

R⁶R⁷C(X)-R⁸-R⁹-C(R⁵)=CH₂ (2)

wherein R⁵ is a hydrogen or a methyl group; R⁶ and R⁷ are a hydrogen, or a monovalent alkyl, aryl, or aralkyl group having 1 to 20 carbons, or are linked to one another at the other terminal; R⁸ is -C (O) O- (ester group), -C(O)-(keto group), or o-,m-,p-phenylene group; R⁹ is a direct bond, or a divalent organic group having 1 to 20 carbons which may comprise one or more ether bond(s); and X is chlorine, bromine, or iodine.

Examples of substituents R⁶ and R⁷ include a hydrogen, methyl, ethyl, n-propyl, isopropyl, butyl, pentyl, and hexyl groups. R⁶ and R⁷ may be linked at the other terminal to form a cyclic skeleton.

Specific examples of an organic halide having an alkenyl group as shown in the general formula (2) include:
XCH₂C(O)O(CH₂)ₙCH=CH₂, H₃CC(H) (X)C(O)O(CH₂)ₙCH=CH₂,
(H₃C)₂C(X) C (O) O (CH₂)ₙCH=CH₂, and
CH₃CH₂C(H) (X) C (O) O (CH₂)ₙCH=CH₂, 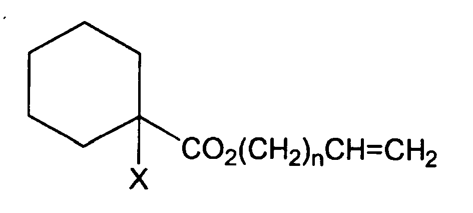 wherein in X is chlorine, bromine, or iodine, and n is an integer from 0 to 20;
XCH₂C(O)O(CH₂)ₙO(CH₂)ₘCH=CH₂,
H₃CC(H) (X) C(O)O(CH₂)ₙO(CH₂)ₘCH=CH₂,
(H₃C)₂C (X) C(O)O(CH₂)ₙO(CH₂)ₘCH=CH₂, and
CH₃CH₂C(H) (X) C(O)O(CH₂)ₙO(CH₂)ₘCH=CH₂, 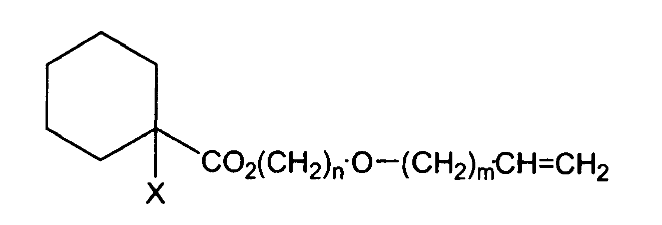 wherein X is chlorine, bromine, or iodine, n is an integer from 1 to 20, and m is an integer from 0 to 20; o, m, p-XCH₂-C₆H₄- (CH₂) ₙ-CH=CH₂, o, m, p-CH₃C (H) (X) -C₆H₄- (CH₂) ₙ-CH=CH₂, and o,m, p-CH₃CH₂C(H) (X)-C₆H₄-(CH₂)ₙ-CH=CH₂,
   wherein X is chlorine, bromine, or iodine; and n is an integer from 0 to 20;
   o, m, p-XCH₂-C₆H₄-(CH₂)ₙ-O-(CH₂)ₘ-CH=CH₂, o, m, p-CH₃C(H)(X)-C₆H₄-(CH₂)ₙ-O-(CH₂)ₘ-CH=CH₂, and o, m, p-CH₃CH₂C(H) (X) -C₆H₄-(CH₂)ₙ-O-(CH₂)ₘCH=CH₂,
   wherein X is chlorine, bromine, or iodine; n is an integer from 1 to 20, and m is an integer from 0 to 20; o, m, p-XCH₂-C₆H₄-O- (CH₂)ₙ-CH=CH₂, o, m, p-CH₃C (H)(X)-C₆H₄-O-(CH₂)ₙ-CH=CH₂, and o, m, p-CH₃CH₂C (H) (X) -C₆H₄-O- (CH₂)ₙ-CH=CH₂,
   wherein X is chlorine, bromine, or iodine; and n is an integer from 0 to 20; and
   o,m,p-XCH₂-C₆H₄-O-(CH₂)ₙ-O-(CH₂)ₘ-CH=CH₂, o,m,p-CH₃C (H) (X) - C₆H₄-O-(CH₂)ₙ-O- (CH₂)ₘ-CH=CH₂, and o,m,p-CH₃CH₂C(H) (X)-C₆H₄-O-(CH₂)ₙ-O-(CH₂)ₘ-CH=CH₂,
   wherein X is chlorine, bromine, or iodine; n is an integer from 1 to 20, and m is an integer from 0 to 20.

Examples of an organic halide having an alkenyl group further include the compounds shown in the general formula (3):

H₂C=C(R⁵)-R⁹-C(R⁶)(X)-R¹⁰-R⁷ (3)

wherein R⁵, R⁶, R⁷, R⁹, and X are as described above, and R¹⁰ represents a direct bond, -C(O)O-(ester group), - C(O)-(keto group), or o-,m-,p-phenylene group.

R⁹ is a direct bond, or a divalent organic group having 1 to 20 carbons (which may comprise one or more ether bond(s)). When it is a direct bond, a vinyl group is connected to the carbon to which a halogen is connected, and this becomes a halogenated allyl compound. In this case, since the carbon-halogen bond is activated by the adjacent vinyl group, it is not necessary to have a C(O)O group or a phenylene group as R¹⁰, and this may be a direct bond. When R⁹ is not a direct bond, it is preferred to have a C(O)O, C(O), or phenylene group as R¹⁰ for activating the carbon-halogen bond.

Specific examples of a compound of the general formula (3) include:
CH₂=CHCH₂X, CH₂=C(CH₃)CH₂X, CH₂=CHC(H) (X)CH₃,
CH₂=C(CH₃)C(H) (X)CH₃, CH₂=CHC(X) (CH₃)₂, CH₂=CHC(H) (X)C₂H₅,
CH₂=CHC(H) (X)CH(CH₃)₂, CH₂=CHC(H) (X) C₆H₅,
CH₂=CHC(H) (X)CH₂C₆H₅, CH₂=CHCH₂C (H) (X)-CO₂R,
CH₂=CH (CH₂)₂C (H) (X) -CO₂R, CH₂=CH (CH₂)₃C (H) (X) -CO₂R,
CH₂=CH (CH₂)₈C (H) (X) -CO₂R, CH₂=CHCH₂C (H) (X) -C₆H₅,
CH₂=CH(CH₂)₂C(H) (X)-C₆H₅, and CH₂=CH(CH₂)₃C(H) (X)-C₆H₅,
wherein X is chlorine, bromine, or iodine, and R is an alkyl, aryl, or aralkyl group having 1 to 20 carbons.

Specific examples of a halogenated sulfonyl compound having an alkenyl group include:
o-,m-,p-CH₂=CH-(CH₂)ₙ-C₆H₄-SO₂X, and o-,m-,p-CH₂=CH-(CH₂)ₙ-O-C₆H₄-SO₂X,
   wherein X is chlorine, bromine, or iodine, and n is an integer from 0 to 20.

An organic halide having the above crosslinkable silyl group is not particularly limited. Examples are those having a structure as shown in the general formula (4) :

R⁶R⁷C (X)-R⁸-R⁹-C(H) (R⁵) CH₂-[Si(R¹¹)_{2-b}(Y)_{b}O]ₘ-Si(R¹²)₃₋ₐ (Y)ₐ (4)

wherein R⁵, R⁶, R⁷, R⁸, R⁹, and X are as described above, R¹¹ and R¹² both represent an alkyl, aryl, or aralkyl group having 1 to 20 carbons, or represent a triorganosiloxy group represented by (R')₃SiO-, wherein R' is a monovalent hydrocarbon group having 1 to 20 carbons, and the three R' may be the same or different; when two or more R¹¹s and two or more or R¹²s are present, respectively, the R¹¹s and R¹²s may be the same or different; Y is a hydroxyl group or a hydrolyzable group, when two or more Ys are present, the Ys may be the same or different; a represents 0, 1, 2, or 3; b represents 0, 1, or 2; and m represents an integer from 0 to 19; provided that a + mb ≥ 1.

Specific examples of a compound of the general formula (4) include:
XCH₂C (O) O (CH₂)ₙSi (OCH₃)₃, CH₃C (H) (X) C (O) O (CH₂)ₙSi (OCH₃)₃, (CH₃)₂C (X) C (O) O (CH₂)ₙSi (OCH₃)₃, XCH₂C (O) O (CH₂)ₙSi (CH₃) (OCH₃)₂, CH₃C(H) (X) C (O) O (CH₂)ₙSi (CH₃) (OCH₃)₂, and
(CH₃)₂C(X)C(O)O(CH₂)ₙSi (CH₃) (OCH₃)₂,
wherein X is chlorine, bromine, iodine, and n is an integer from 0 to 20;
XCH₂C (O) O (CH₂)ₙO (CH₂)ₘSi (OCH₃)₃,
H₃CC(H) (X)C(O)O(CH₂)ₙO(CH₂)ₘSi (OCH₃)₃,
(H₃C)₂C (X) C (O) O (CH₂)ₙO (CH₂)ₘSi (OCH₃)₃,
CH₃CH₂C (H) (X) C (O) O (CH₂)ₙO (CH₂)ₘSi (OCH₃)₃,
XCH₂C (O) O (CH₂)ₙO (CH₂)ₘSi (CH₃) (OCH₃)₂,
H₃CC(H) (X)C(O)O(CH₂)ₙO(CH₂)ₘ-Si(CH₃) (OCH₃)₂,
(H₃C)₂C(X)C(O)O(CH₂)ₙO(CH₂)ₘ-Si(CH₃) (OCH₃)₂, and
CH₃CH₂C (H) (X) C (O) O (CH₂)ₙO (CH₂)ₘ-Si (CH₃) (OCH₃)₂,
wherein X is chlorine, bromine, iodine, n is an integer from 1 to 20, and m is an integer from 0 to 20; and
o,m, p-XCH₂-C₆H₄-(CH₂)₂Si(OCH₃)₃, o,m,p-CH₃C(H) (X)-C₆H₄-(CH₂)₂Si (OCH₃)₃, o,m, p-CH₃CH₂C(H) (X)-C₆H₄-(CH₂)₂Si(OCH₃)₃, o,m,p-XCH₂-C₆H₄-(CH₂)₃Si (OCH₃)₃, o,m,p-CH₃C(H) (X)-C₆H₄-(CH₂)₃Si (OCH₃)₃, o, m, p-CH₃CH₂C (H) (X) -C₆H₄- (CH₂)₃Si (OCH₃)₃, o,m,p-XCH₂-C₆H₄-(CH₂)₂-O-(CH₂)₃Si(OCH₃)₃, o,m,p-CH₃C(H) (X)-C₆H₄- (CH₂)₂-O- (CH₂)₃Si (OCH₃)₃, o, m, p-CH₃CH₂C (H) (X) -C₆H₄-(CH₂)₂-O- (CH₂)₃Si (OCH₃)₃, o,m,p,-XCH₂-C₆H₄-O- (CH₂)₃Si (OCH₃)₃, o,m,p-CH₃C(H) (X)-C₆H₄-O-(CH₂)₃Si(OCH₃)₃, o,m,p-CH₃CH₂C(H) (X)-C₆H₄-O-(CH₂)₃-Si(OCH₃)₃, o,m,p-XCH₂-C₆H₄-O-(CH₂)₂-O- (CH₂)₃-Si (OCH₃)₃, o,m,p-CH₃C (H) (X)-C₆H₄-O- (CH₂)₂-O-(CH₂)₃Si(OCH₃)₃, o, m, p-CH₃CH₂C (H) (X)-C₆H₄-O-(CH₂)₂-O-(CH₂)₃Si(OCH₃)₃,
wherein X is chlorine, bromine, or iodine.

Examples of an organic halide having the above crosslinkable silyl group further include those having the structure as shown in the general formula (5):

(R¹²)₃₋ₐ (Y)ₐSi-[OSi (R¹¹)_{2-b}(Y)_{b}]ₘ-CH₂-C (H) (R⁵)-R⁹-C (R⁶) (X)-R¹⁰-R⁷ (5)

wherein R⁵, R⁶, R⁷, R⁹, R¹⁰, R¹¹, R¹², a, b, m, X, and Y are as described above.

Specific examples of this compound include:
(CH₃O)₃SiCH₂CH₂C (H) (X) C₆H₅, (CH₃O)₂ (CH₃) SiCH₂CH₂C (H) (X) C₆H₅, (CH₃O)₃Si (CH₂)₂C(H) (X) -CO₂R, (CH₃O)₂ (CH₃) Si (CH₂) ₂C (H) (X) - CO₂R, (CH₃O)₃Si (CH₂)₃C (H) (X) -CO₂R,
(CH₃O)₂ (CH₃) Si (CH₂)₃C (H) (X) -CO₂R, (CH₃O)₃Si (CH₂)₄C (H) (X) - CO₂R, (CH₃O)₂(CH₃) Si (CH₂)₄C (H) (X)-CO₂R,
(CH₃O)₃Si (CH₂)₉C(H) (X) -CO₂R, (CH₃O)₂(CH₃)Si (CH₂)₉C(H) (X) - CO₂R, (CH₃O)₃Si (CH₂)₃C (H) (X) -C₆H₅,
(CH₃O)₂(CH₃)Si (CH₂)₃C (H) (X) -C₆H₅, (CH₃O)₃Si (CH₂)₄C (H) (X) -C₆H₅, and (CH₃O)₂(CH₃) Si (CH₂)₄C (H) (X)-C₆H₅,
wherein X is chlorine, bromine, or iodine; and R is an alkyl, aryl, or aralkyl group having 1 to 20 carbons.

Examples of an organic halide or a halogenated sulfonyl compound having the above hydroxyl group are not particularly limited. Examples include:
HO-(CH₂)ₙ-OC(O)C(H) (R) (X)
   wherein X is chlorine, bromine, or iodine, R is a hydrogen atom or an alkyl, aryl, or aralkyl group having 1 to 20 carbons; and n is an integer from 1 to 20.

Examples of an organic halide or a halogenated sulfonyl compound having the above amino group are not particularly limited. Examples include:
H₂N-(CH₂)ₙ-OC(O)C(H) (R) (X)
   wherein X is chlorine, bromine, or iodine, R is a hydrogen atom or an alkyl, aryl, or aralkyl group having 1 to 20 carbons; and n is an integer from 1 to 20.

Examples of an organic halide or a halogenated sulfonyl compound having the above epoxy group are not particularly limited. Examples include: 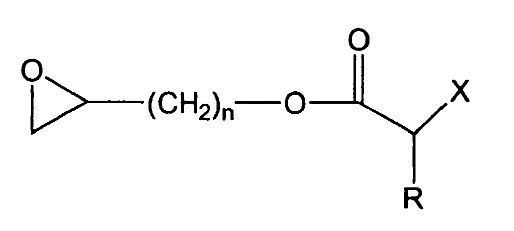 wherein X is chlorine, bromine, or iodine, R is a hydrogen atom or an alkyl, aryl, or aralkyl group having 1 to 20 carbons, and n is an integer from 1 to 20.

In order to obtain a polymer having two or more growth terminal structures per molecule, it is preferred to use an organic halide or a halogenated sulfonyl compound having two or more initiation points as the initiator. Specific examples include:
o,m,p-X-CH₂-C₆H₄-CH₂-X 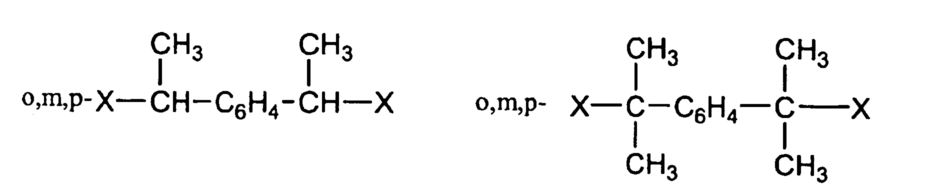
wherein C₆H₄ represents a phenylene group, and X is chlorine, bromine, or iodine; 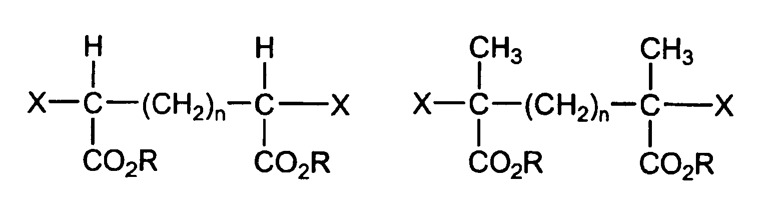 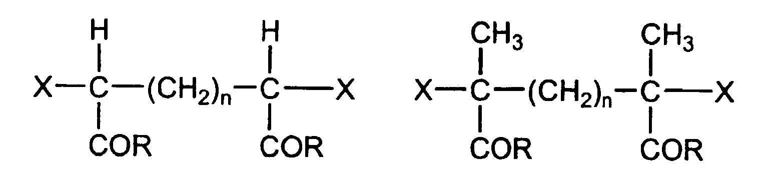 wherein R is an alkyl, aryl, or aralkyl group having 1 to 20 carbons, n is an integer from 0 to 20 and X is chlorine, bromine, or iodine; 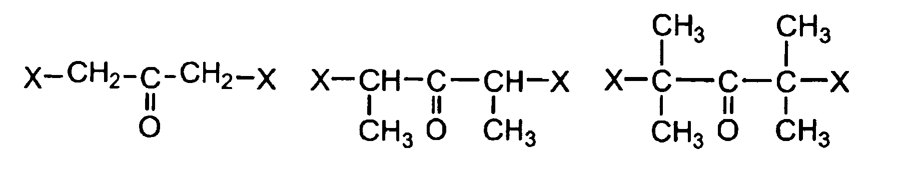 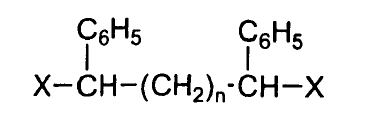 wherein X is chlorine, bromine, or iodine, and n is an integer from 0 to 20; 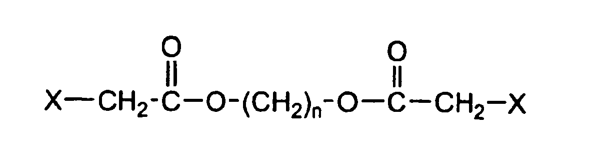 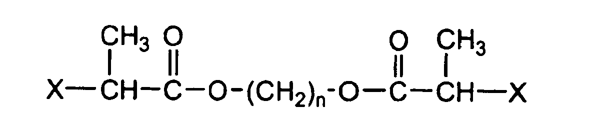 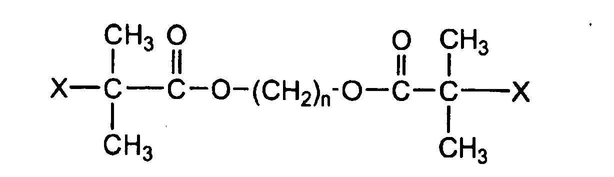 wherein n is an integer from 1 to 20, and X is chlorine, bromine, or iodine; and

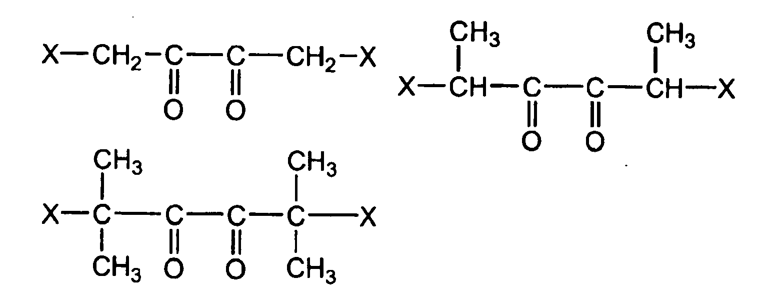

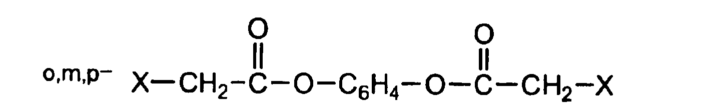

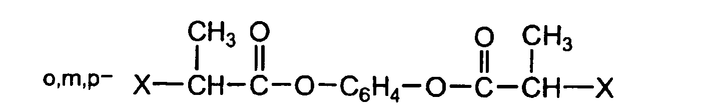

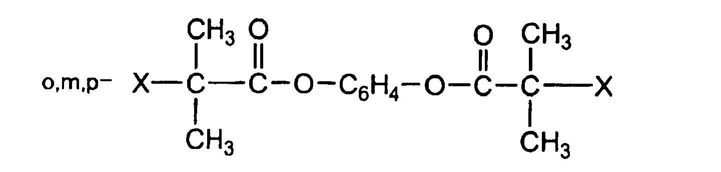

o,m,p- X-SO₂-C₅H₄-SO₂-X

wherein X is chlorine, bromine, or iodine.

The vinyl monomer used in this polymerization is not particularly limited, and any of those already exemplified can be suitably used.

The transition metal complex used as the polymerization catalyst is not particularly limited. A metal complex having an element from the 7th, 8th, 9th, 10th, or 11th group of the periodic table as the central metal is preferred. A complex of zero-valent copper, monovalent copper, divalent ruthenium, divalent iron or divalent nickel is further preferred, and a copper complex is particularly preferred. Specific examples of a monovalent copper compound include, for example, cuprous chloride, cuprous bromide, cuprous iodide, cuprous cyanide, cuprous oxide, and cuprous perchlorate. When using a copper compound, a ligand including 2,2'-bipyridyl and a derivative thereof, 1,10-phenanthroline and a derivative thereof, or a polyamine such as tetramethylethylenediamine, pentamethyldiethylenetriamine, and hexamethyltris(2-aminoethyl)amine is added to enhance catalytic activity. A preferred ligand is a nitrogen-containing compound, more preferably a chelating nitrogen-containing compound, further preferably N,N,N',N",N"-pentamethyldiethylenetriamine. Tris-triphenylphosphine complex of ruthenium dichloride (RuCl₂(PPh₃)₃) is also a suitable catalyst. When using a ruthenium compound as the catalyst, aluminum alkoxide is added as an activator. In addition, bistriphenylphosphine complex of divalent iron (FeCl₂(PPh₃)₂), bistriphenylphosphine complex of divalent nickel (NiCl₂(PPh₃)₂), and bistributylphosphine complex of divalent nickel (NiBr₂(PBu₃)₂) are also suitable as a catalyst.

Polymerization can be carried out in the absence of solvents or in various solvents. A solvent which can be used includes a hydrocarbon solvent such as benzene and toluene; an ether solvent such as diethyl ether and tetrahydrofuran; a halogenated hydrocarbon solvent such as methylene chloride and chloroform; a ketone solvent such as acetone, methylethyl ketone and methylisobutyl ketone; an alcohol solvent such as methanol, ethanol, propanol, isopropanol, n-butyl alcohol, and tert-butyl alcohol; a nitrile solvent such as acetonitrile, propionitrile, and benzonitrile; an ester solvent such as ethyl acetate and butyl acetate; a carbonate solvent such as ethylene carbonate and propylene carbonate. These can be used alone, or two or more can be mixed.

Further, although it is not limited, polymerization can be carried out at a temperature in the range of 0°C to 200°C, preferably from 50 to 150°C.

The atom transfer radical polymerization of the present invention includes the so-called reverse atom transfer radical polymerization. Reverse atom transfer radical polymerization is a method in which as opposed to the high oxidization state when a radical is generated by the conventional atom transfer radical polymerization catalyst, for example Cu (II') generated when using Cu (I) as the catalyst, a general radical initiator such as a peroxide is allowed to act, and as a result an equilibrium state that is the same as in the atom transfer radical polymerization is brought about (see Macromolecules, 1999, 32, 2872).

### <Functional Group>

### The Number of Crosslinkable Silyl Groups

The number of crosslinkable silyl groups in the vinyl polymer is not particularly limited. In view of the curing property of the composition and the physical property of the cured product, it is preferred to have one or more on average per molecule, more preferably between 1.1 or more and 4.0 or less, and further preferably between 1.2 or more and 3.5 or less.

### The Position of Crosslinkable Silyl Group

When a rubber-like property is particularly desired in the cured product obtained by curing the curable composition of the present invention, it is preferred that at least one of the crosslinkable functional group is at the molecular chain terminal, since large molecular weight between crosslinking points that significantly affects rubber elasticity is allowed. It is more preferred that all of the crosslinkable functional groups are at the molecular chain terminal.

A method for producing a vinyl polymer having at least one of the above crosslinkable silyl groups at the molecular terminal, in particular a (meth)acrylic polymer, is disclosed in for example Japanese Patent Publication No. 3-14068, Japanese Patent Publication No. 4-55444, and Japanese Patent Laid-Open No. 6-211922. However, because these methods are free radical polymerization methods that uses the above "chain transfer agent method", the polymer obtained has a relatively high percentage of crosslinkable silyl groups at the molecular chain terminal, and generally has a wide molecular weight distribution represented by Mw/Mn of 2 or more. This causes a problem of high viscosity. Accordingly, when obtaining a vinyl polymer with narrow molecular weight distribution and low viscosity that comprises crosslinkable silyl groups at the molecular chain terminal in a high percentage, it is preferred to use the above "living radical polymerization". This is however not limited to a polymer with narrow molecular weight distribution.

The functional groups will be described below.

### Crosslinkable Silyl Group

The crosslinkable silyl group of the present invention includes a group represented by the general formula (1):

-[Si(R¹)_{2-b}(Y)_{b}O]ₘ-Si(R²)₃₋ₐ(Y)ₐ (1)

wherein R¹ and R² both represent an alkyl group having 1 to 20 carbons, an aryl group having 6 to 20 carbons, an aralkyl group having 7 to 20 carbons, or represent a triorganosiloxy group represented by (R')₃SiO-, wherein R' is a monovalent hydrocarbon group having 1 to 20 carbons, and the three R's may be the same or different; when two or more R¹s or R²s are present, the R¹s or R²s may be the same or different; Y is a hydroxyl group or a hydrolyzable group; when two or more Ys are present, the Ys may be the same or different; a represents 0, 1, 2, or 3; b represents 0, 1, or 2; and m represents an integer from 0 to 19; provided that a + mb ≥ 1}.

A hydrolyzable group includes, for example, commonly used groups such as a hydrogen atom, alkoxy, acyloxy, ketoximate, amino, amide, aminooxy, mercapto, and alkenyloxy groups. Among these, alkoxy, amide, and aminooxy groups are preferred, and an alkoxy group is particularly preferred because hydrolysis will be mild and easy to handle. Among the alkoxy groups, those with fewer carbons have higher reactivity. The reactivity decreases in the order of methoxy group > ethoxy group > propoxy group etc., and it can be selected according to the objective or application.

One to three hydrolyzable or hydroxyl groups can be bound to one silicon atom, and (a + Σb) is preferably in the range of from 1 to 5. When two or more hydrolyzable or hydroxyl groups are bound to the crosslinkable silyl group, they may be the same or different. The number of silicon atoms forming the crosslinkable silyl group is one or more. When this is a silicon atom connected by for example a siloxane bond, the number is preferably 20 or less. In particular, a crosslinkable silyl group represented by the general formula (6):

-Si(R²)₃₋ₐ(Y)ₐ (6)

wherein R² and Y are as described above; and a is an integer from 1 to 3) is preferred due to its availability.

Although it is not particularly limited, taking into account the curing property, a is preferably 2 or more.

The vinyl polymer having the above crosslinkable silyl group often uses a polymer having a hydrolyzable silicon group formed by two hydrolyzable groups per silicon atom bound together, but especially when very fast curing rate is desired, for example for adhesive applications or when using at low temperatures, the curing rate will not be sufficient. In addition, when flexibility after curing is desired, it is necessary to decrease the crosslinking density. This sometimes resulted in insufficient crosslinking density and therefore stickiness (surface tackiness). In such a case, the crosslinkable silyl group used is preferably a group where a is 3 (e.g. trimethoxy functional group).

Moreover, a group where a is 3 (e.g. trimethoxy functional group) has a faster curing rate than a group where a is 2 (e.g. dimethoxy functional group), but a group where a is 2 may be superior in terms of storage stability and dynamic physical property (e.g. elongation). In order to balance out the curing property and the physical property, a group where a is 2 (e.g. dimethoxy functional group) and a group where a is 3 (e.g. trimethoxy functional group) may be used together.

For example, when Y is the same, the reactivity of Y rises as a increases. It is therefore possible to control for example the curing property or the mechanical property of the cured product by selecting various Y and a. They can be selected according to the objective or application. Further, a group where a is 1 can be blended and used with a polymer having a crosslinkable silyl group, in particular at least one polymer consisting of polysiloxane, polyoxypropylene, and polyisobutylene as the chain elongation agent. A composition having low viscosity before curing, and high elongation at fracture, low bleed, low contamination of surface, and superior paint adherence after curing can be provided.

### Method for Introducing Crosslinkable Silyl Group

A method for introducing a crosslinkable silyl group into the vinyl polymer of the present invention will be described below. The methods will not be limited to these.

A method for introducing a crosslinkable silyl group, alkenyl group, and hydroxyl group by conversion of the terminal functional group will be described first. Since these functional groups may be a precursor to one another, it will be described in the order going back from crosslinkable silyl group.

Examples of a method for synthesizing a vinyl polymer having at least one crosslinkable silyl group include the following:
(A) a method of adding a hydrosilane compound having a crosslinkable silyl group to a vinyl polymer having at least one alkenyl group, in the presence of a hydrosilylation catalyst;
(B) a method of reacting the vinyl polymer having at least one hydroxyl group with a compound having a group that may react with a hydroxyl group such as a compound having both a crosslinkable silyl group and an isocyanate group within one molecule;
(C) a method of reacting a compound having both a polymerizable alkenyl group and a crosslinkable silyl group within one molecule when synthesizing a vinyl polymer by radical polymerization;
(D) a method of using a chain transfer agent having a crosslinkable silyl group when synthesizing a vinyl polymer by radical polymerization; and
(E) a method of reacting a vinyl polymer having at least one highly reactive carbon-halogen bond with a compound having both a crosslinkable silyl group and a stable carbanion within one molecule.

A vinyl polymer having at least one alkenyl group used in method (A) is obtained by various methods. Methods for synthesis thereof will be exemplified below, but will not be limited to these.

(A-a) A method in which when synthesizing a vinyl polymer by radical polymerization, a compound having both a polymerizable alkenyl group and a polymerizable lower alkenyl group within one molecule such as a polymer as shown in the following general formula (9) allowed to be reacted as the second monomer:

H₂C=C(R¹⁴)-R¹⁵-R¹⁶-C(R¹⁷)=CH₂ (9)

wherein R¹⁴ represents a hydrogen or a methyl group; R¹⁵ represents -C(O)O- or o-,m-,p-phenylene group; R¹⁶ represents a direct bond, or a divalent organic group having 1 to 20 carbons which may comprise one or more ether bond(s); and R¹⁷ represents a hydrogen, or an alkyl group having 1 to 20 carbons, an aryl group having 6 to 20 carbons or an aralkyl group having 7 to 20 carbons.
The timing for reacting the compound having both a polymerizable alkenyl group and a polymerizable lower alkenyl group within one molecule is not limited, although especially in a living radical polymerization, when a rubber-like property is anticipated, it is preferred to allow the reaction of the compound as the second monomer to be carried out towards the end of the polymerization reaction or after the reaction of the given monomer.

(A-b) A method in which when synthesizing a vinyl polymer by living radical polymerization, a compound having at least two polymerizable lower alkenyl groups such as for example 1,5-hexadiene, 1,7-octadiene, and 1,9-decadiene is allowed to react towards the end of the polymerization reaction or after the reaction of the given monomer.

(A-c) A method in which a vinyl polymer having at least one highly reactive carbon-halogen bond is reacted with various organic metal compounds having an alkenyl group including for example an organic tin such as allyltributyltin or allyltrioctyltin, and the halogen is substituted.

(A-d) A method in which a vinyl polymer having at least one highly reactive carbon-halogen bond is reacted with a stabilized carbanion having an alkenyl group as shown in the general formula (10), and the halogen is substituted:

M⁺C-(R¹⁸) (R¹⁹)-R²⁰-C(R^{m})=CH₂ (10)

wherein R¹⁷ is as described above; R¹⁸ and R¹⁹ are both an electron-withdrawing group that stabilizes the carbanion C⁻, or one is the said electron-withdrawing group and the other is a hydrogen or an alkyl group having 1 to 10 carbons, or a phenyl group; R²⁰ is a direct bond, or a divalent organic group having 1 to 10 carbons which may comprise one or more ether bond(s); and M⁺ is an alkali metal ion or a quaternary ammonium ion.

Particularly preferred electron-withdrawing groups of R¹⁸ and R¹⁹ are those having the structures -CO₂R, - C (O) R and -CN.

(A-e) A method in which an elemental metal such as zinc or an organic metal compound is allowed to act on a vinyl polymer having at least one highly reactive carbon-halogen bond to prepare an enolate anion, and then reacting with an electrophilic compound having an alkenyl group, for example, an alkenyl group-containing compound having a leaving group such as a halogen or an acetyl group, a carbonyl compound having an alkenyl group, an isocyanate compound having an alkenyl group, and an acid halide having an alkenyl group.

(A-f) A method in which a vinyl polymer having at least one highly reactive carbon-halogen bond is reacted with an oxyanion or a carboxylate anion having an alkenyl group as shown in for example the general formula (11) or (12):

H₂C=C(R¹⁷)-R²¹-O⁻M⁺ (11)

wherein R¹⁷ and M⁺ are as described above; and R²¹ is a divalent organic group having 1 to 20 carbons which may comprise one or more ether bond(s); or

H₂C=C (R¹⁷)-R²²-C(O)O⁻M⁺ (12)

wherein R¹⁷ and M⁺ are as described above, and R²² is a direct bond, or a divalent organic group having 1 to 20 carbons which may comprise one or more ether bond(s); and the halogen is substituted.

The method for synthesizing the aforementioned vinyl polymer having at least one highly reactive carbon-halogen bond includes, but is not limited to, atom transfer radical polymerization using the above organic halide etc. as the initiator and a transition metal complex as the catalyst.

Furthermore, the vinyl polymer having at least one alkenyl group can be obtained from the vinyl polymer having at least one hydroxyl group, using the methods exemplified below. These include, but are not limited to, for example:
(A-g) a method of allowing a base such as sodium methoxide to act on the hydroxyl group of the vinyl polymer having at least one hydroxyl group, followed by reaction with an alkenyl group-containing halide such as allyl chloride;
(A-h) a method of allowing the hydroxyl group of the vinyl polymer having at least one hydroxyl group to react with an alkenyl group-containing isocyanate compound such as an allyl isocyanate;
(A-i) a method of allowing the hydroxyl group of the vinyl polymer having at least one hydroxyl group to react with an alkenyl group-containing acid halide such as (meth)acrylic acid chloride in the presence of a base such as pyridine; and
(A-j) a method of allowing the hydroxyl group of the vinyl polymer having at least one hydroxyl group to react with an alkenyl group-containing carboxylic acid such as acrylic acid in the presence of an acid catalyst.

According to the present invention, when the halogen does not directly participate in the method for introducing an alkenyl group such as (A-a) and (A-b), it is preferred to synthesize the vinyl polymer using living radical polymerization. Method (A-b) is further preferred because it can be controlled more easily.

When an alkenyl group is introduced by converting the halogen of the vinyl polymer having at least one highly reactive carbon-halogen bond, it is preferred to use the vinyl polymer having at least one highly reactive carbon-halogen bond at the terminal, obtained by radical polymerizing a vinyl monomer (atom transfer radical polymerization) using an organic halide having at least one highly reactive carbon-halogen bond or a halogenated sulfonyl compound as the an initiator and a transition metal complex as the catalyst. Method (A-f) is further preferred because it can be controlled more easily.

A hydrosilane compound having a crosslinkable silyl group is not particularly limited. Representative examples include a compound shown in the general formula (13):

H-[Si(R¹)_{2-b}(Y)_{b}O]ₘ-Si(R²)₃₋ₐ(Y)ₐ (13)

wherein R¹ and R² both represent an alkyl group having 1 to 20 carbons, an aryl group having 6 to 20 carbons, an aralkyl group having 7 to 20 carbons, or represent a triorganosiloxy group represented by (R')₃SiO-, wherein R' is a monovalent hydrocarbon group having 1 to 20 carbons, and the three R's may be the same or different; when two or more R¹s or R²s are present, the R¹s or R²s may be the same or different; Y is a hydroxyl group or a hydrolyzable group; when two or more Ys are present, the Ys may be the same or different; a represents 0, 1, 2, or 3; b represents 0, 1, or 2; and m represents an integer from 0 to 19; provided that a + mb ≥ 1}

Among these hydrosilane compounds, a compound having a crosslinkable group as shown in the general formula (14):

H-Si(R²)₃₋ₐ(Y)ₐ (14)

wherein R² and Y are as described above; and a is an integer from 1 to 3) in preferred due to its availability.

When adding the above hydrosilane compound having a crosslinkable silyl group to an alkenyl group, a transition metal catalyst is typically used. A transition metal catalyst includes, for example, an elemental platinum, those where solid platinum is scattered onto a support such as alumina, silica, and carbon black, a complex of chloroplatinic acid or chloroplatinic acid with for example an alcohol, aldehyde, or ketone, platinum-olefin complex, and platinum(0)-divinyltetramethyldisiloxane. Examples of a catalyst other than platinum compounds include, for example, RhCl(PPh₃)₃, RhCl₃, RuCl₃, IrCl₃, FeCl₃, AlCl₃, PdCl₂·H₂O, NiCl₂, and TiCl₄.

Examples of a method for producing the vinyl polymer having at least one hydroxyl group used in methods (B) and (A-g) to (A-j) include, but is not limited to the following.

(B-a) A method in which when synthesizing a vinyl polymer by radical polymerization, a compound having both an polymerizable alkenyl group and a hydroxyl group within one molecule, such as a compound as shown in the following general formula (15) is allowed to be reacted as the second monomer:

H₂C=C(R¹⁴) -R¹⁵-R¹⁶-OH (15)

wherein R¹⁴, R¹⁵, R¹⁶ are as described above.

The timing for reacting the compound having both an polymerizable alkenyl group and a hydroxyl group within one molecule is not limited, although especially in a living radical polymerization, when a rubber-like property is anticipated, it is preferred to allow the reaction of the compound as the second monomer to be carried out towards the end of the polymerization reaction or after the reaction of the given monomer.

(B-b) A method in which when synthesizing a vinyl polymer by living radical polymerization, an alkenyl alcohol such as for example 10-undecenol, 5-hexenol, and allyl alcohol is allowed to react towards the end of the polymerization reaction or after the reaction of the given monomer.

(B-c) A method in which a large amount of a hydroxyl group-containing chain transfer agent such as a hydroxyl group-containing polysulfide is used for radical polymerizing a vinyl monomer as shown in for example Japanese Patent Laid-Open No. 5-262808.

(B-d) A method for radical polymerizing a vinyl monomer using hydrogen peroxide or a hydroxyl group-containing initiator as shown in for example Japanese Patent Laid-Open No. 6-239912 and Japanese Patent Laid-Open No. 8-283310.

(B-e) A method for radical polymerizing a vinyl monomer using an excess amount of an alcohol as shown in for example Japanese Patent Laid-Open No. 6-116312.

(B-f) A method of introducing a hydroxyl group at the terminal, in which the halogen of the vinyl polymer having at least one highly reactive carbon-halogen bond is hydrolyzed or reacted with a compound containing a hydroxyl group, as shown in the method of for example Japanese Patent Laid-Open No. 4-132706.

(B-g) A method in which a vinyl polymer having at least one highly reactive carbon-halogen bond is reacted with a stabilized carbanion having a hydroxyl group as shown in the general formula (16), and the halogen is substituted:

M⁺C-(R¹⁸)(R¹⁹)-R²⁰-OH (16)

wherein R¹⁸, R¹⁹, and R²⁰ are as described above)

Particularly preferred electron withdrawing groups of R¹⁸ and R¹⁹ are those having the structures -CO₂R, - C(O)R and -CN.

(B-h) A method in which an elemental metal such as zinc or an organic metal compound is allowed to act on a vinyl polymer having at least one highly reactive carbon-halogen bond to prepare an enolate anion, and then reacting with an aldehyde or ketone.

(B-i) A method in which a vinyl polymer having at least one highly reactive carbon-halogen bond is reacted with an oxyanion or a carboxylate anion having a hydroxyl group as shown in for example the general formula (17) or (18):

HO-R²¹-O⁻M⁺ (17)

wherein R²¹ and M⁺ are as described above, or

HO-R²²-C(O)O⁻M⁺ (18)

wherein R²² and M⁺ are as described above, and the halogen is substituted.

(B-j) A method in which when synthesizing a vinyl polymer by living radical polymerization, a compound having a polymerizable lower alkenyl group and a hydroxyl group in one molecule allowed to be reacted as the second monomer towards the end of the polymerization reaction or after the reaction of the given monomer.

Examples of such a compound include, but are not particularly limited to, a compound shown in the general formula (19):

H₂C=C(R¹⁴)-R²¹-OH (19)

wherein R¹⁴ and R²¹ are as described above.

The compound shown in the above general formula (19) is not particularly limited. An alkenyl alcohol such as 10-undecenol, 5-hexenol, and an allyl alcohol are preferred due to their availability.

According to the present invention, when the halogen does not directly participate in the methods of introducing a hydroxyl group such as methods (B-a) to (Be) and (B-j), it is preferred to synthesize the vinyl polymer using living radical polymerization. Method (B-b) is further preferred because it can be controlled more easily.

When a hydroxyl group is introduced by converting the halogen of the vinyl polymer having at least one highly reactive carbon-halogen bond, it is preferred to use the vinyl polymer having at least one highly reactive carbon-halogen bond at the terminal, obtained by radical polymerizing a vinyl monomer (atom transfer radical polymerization) using an organic halide or a halogenated sulfonyl compound the an initiator and a transition metal complex as the catalyst. Method (B-i) is further preferred because it can be controlled more easily.

Examples of a compound having a group that may react with a hydroxyl group such as a compound having both a crosslinkable silyl group and an isocyanate group within one molecule include γ-isocyanatepropyltrimethoxysilane, γ-isocyanatepropylmethyldimethoxysilane, and γ-isocyanatepropyltriethoxysilane. A commonly known catalyst of urethane reaction can be used as necessary.

Examples of a compound having both a polymerizable alkenyl group and a crosslinkable silyl group within one molecule used in method (C) include, for example, those shown in the following general formula (20) such as trimethoxysilylpropyl (meth)acrylate and methyldimethoxysilylpropyl (meth)acrylate:

H₂C=C(R¹⁴)-R¹⁵-R²³-[Si(R¹)_{2-b}(Y)_{2-b}(Y)_{b}O]ₘ-Si(R²)₃₋ₐ(Y)ₐ (20)

wherein R¹, R², R¹⁴, R¹⁵, Y, a, b, and m are as described above; and R²³ is a direct bond, or a divalent organic group having 1 to 20 carbons which may comprise one or more ether bond(s).

The timing for reacting the compound having both a polymerizable alkenyl group and a crosslinkable silyl group within one molecule is not limited, although especially in a living radical polymerization, when a rubber-like property is anticipated, it is preferred to allow the reaction of the compound as the second monomer to be carried out towards the end of the polymerization reaction or after the reaction of the given monomer.

Examples of a chain transfer agent having a crosslinkable silyl group used in the chain transfer agent method (D) include, for example, a mercaptan having a crosslinkable silyl group or a hydrosilane having a crosslinkable silyl group shown in Japanese Patent Publication No. 3-14068 and Japanese Patent Publication No. 4-55444.

A method for synthesizing the aforementioned vinyl polymer having at least one highly reactive carbon-halogen bond used in method (E) includes, but is not limited to, atom transfer radical polymerization using the above organic halide etc. as the initiator and a transition metal complex as the catalyst. Examples of a compound having both a crosslinkable silyl group and a stabilized carbanion within one molecule include those shown in the general formula (21):

M⁺C (R¹⁸) (R¹⁹)-R²⁴-C(H)(R²⁵)-CH₂-[Si (R¹)_{2-b} (Y)_{b}O]ₘ-Si (R²) ₃₋ₐ(Y)ₐ (21)

wherein R¹, R², R¹⁸, R¹⁹, Y, a, b, and m are as described above; R²⁴ is a direct bond, or a divalent organic group having 1 to 10 carbons which may comprise one or more ether bond(s); R²⁵ is a hydrogen, or an alkyl group having 1 to 10 carbons, an aryl group having 6 to 10 carbons or an aralkyl group having 7 to 10 carbons.

Particularly preferred electron withdrawing groups of R¹⁸ and R¹⁹ are those having the structures -CO₂R, - C(O)R and -CN.

### <Use of Multiple Vinyl Polymers>

The aforementioned vinyl polymers can be used alone, or a combination of two or more vinyl polymers can be used. When used alone, it is preferred to use a vinyl polymer having a molecular weight of from 5,000 to 50,000 and the number of crosslinkable silyl groups at from 1.2 to 3.5. When a combination of two or more vinyl polymers is used, a cured product having high elongation at fracture, low bleed, low contamination of surface, and superior paint adherence can be obtained by using a first polymer having a vinyl polymer having a molecular weight of from 5,000 to 50,000 and number of crosslinkable silyl groups at from 1.2 to 3.5, and a second polymer having a low number of crosslinkable silyl groups. In addition, by using a second polymer having a smaller molecular weight, the viscosity of the composition can be decreased. Preferred molecular weight of the polymer to be the low molecular weight component is less than 10,000, further less than 5,000, and the preferred number of crosslinkable silyl groups is less than 1.2, further 1 or less. A molecular weight distribution of less than 1.8 is preferred because the viscosity can be further decreased. The viscosity-reducing effect is significant when a vinyl polymer having a crosslinkable functional group and a molecular weight distribution of 1.8 or more and a vinyl polymer having a crosslinkable silyl group at one of the termini is added.

Preferred polymer with low molecular weight and low number of crosslinkable silyl groups used is a vinyl polymer having a crosslinkable silyl group at one of the termini obtained by the following production methods, because introduction of the crosslinkable silyl group is ensured.

The vinyl polymer having a crosslinkable silyl group at one of the termini is a polymer having about one crosslinkable silyl group per molecule at the polymer terminal. The said living radical polymerization, in particular the atom transfer radical polymerization is preferably used, because a vinyl polymer having crosslinkable silyl groups at the molecular chain terminal in a high percentage and a molecular weight distribution of less than 1.8, having narrow molecular weight distribution and low viscosity can be obtained.

A method which can be used for introducing a crosslinkable silyl group at one of the termini include for example the methods shown below. The methods for introducing a crosslinkable silyl group, alkenyl group, or hydroxyl group by conversion of the terminal functional group will be described in an order going back from the method for introducing the crosslinkable silyl group, since these functional groups may be a precursor to one another.
(1) A method in which a hydrosilane compound having a crosslinkable silyl group is added to a polymer having one alkenyl group per molecule at the molecular chain terminal, in the presence of a hydrosilylation catalyst.
(2) A method of reacting a polymer having one hydroxyl group per molecule at the molecular chain terminal with a compound having a group that may react with a hydroxyl group such as a compound having both a crosslinkable silyl group and an isocyanate group within one molecule.
(3) A method of reacting a polymer having one highly reactive carbon-halogen bond per molecule at the molecular chain terminal with a compound having both a crosslinkable silyl group and a stable carbanion within one molecule.

The polymer having one alkenyl group per molecule at the molecular chain terminal used in method (1) can be obtained by various methods. Methods for production thereof will be exemplified below, although it will not be limited to these.

(1-1) A method in which a polymer having one highly reactive carbon-halogen bond per molecule at the molecular chain terminal is reacted with various organic metal compounds having an alkenyl group including for example an organic tin such as allyltributyltin or allyloctyltin, and the halogen is substituted.

(1-2) A method in which a polymer having one highly reactive carbon-halogen bond per molecule at the molecular chain terminal is reacted with a stabilized carbanion having an alkenyl group as shown in the general formula (10), and the halogen is substituted:

M⁺C-(R¹⁸) (R¹⁹)-R²⁰-C(R¹⁷)-CH₂ (10)

wherein R¹⁸ and R¹⁹ are both electron-withdrawing groups which stabilizes the carbanion C⁻, or one is the said electron-withdrawing group and the other is a hydrogen or an alkyl group having 1 to 10 carbons, or a phenyl group; R²⁰ is a direct bond, or a divalent organic group having 1 to 10 carbons which may comprise one or more ether bond(s); R¹⁷ represents a hydrogen, or an alkyl group having 1 to 20 carbons, an aryl group having 6 to 20 carbons or an aralkyl group having 7 to 20 carbons; and M⁺ is an alkali metal ion or a quaternary ammonium ion.

Particularly preferred electron-withdrawing groups of R¹⁸ and R¹⁹ are those having the structures -CO₂R, - C(O)R and -CN.

(1-3) A method in which an elemental metal such as zinc or an organic metal compound is allowed to act on a polymer having one highly reactive carbon-halogen bond per molecule at the molecular chain terminal to prepare an enolate anion, and then reacting with an electrophilic compound having an alkenyl group, for example, an alkenyl group-containing compound having a leaving group such as a halogen or an acetyl group, a carbonyl compound having an alkenyl group, an isocyanate compound having an alkenyl group, and an acid halide having an alkenyl group.

(1-4) A method in which a polymer having one highly reactive carbon-halogen bond per molecule at the molecular chain terminal is reacted with an oxyanion or a carboxylate anion having an alkenyl group as shown in for example the general formula (11) or (12);

H₂C=C (R¹⁷) -R²¹-O-M⁺ (11)

wherein R¹⁷ and M⁺ are as described above, and R²¹ is a divalent organic group having 1 to 20 carbons which may comprise one or more ether bond(s); or

H₂C=C (R¹⁷)-R²²-C (O)O⁻M⁺ (12)

wherein R¹⁷ and M⁺ are as described above, and R²² is a direct bond, or a divalent organic group having 1 to 20 carbons which may comprise one or more ether bond(s); and the halogen is substituted.

A method for synthesizing the aforementioned polymer having one highly reactive carbon-halogen bond per molecule at the molecular chain terminal includes, but is not limited to, atom transfer radical polymerization using the above organic halide etc. as the initiator and a transition metal complex as the catalyst.

It is also possible to obtain the polymer having one alkenyl group per molecule at the molecular chain terminal from a polymer having at least one hydroxyl group at the molecular chain terminal. The methods exemplified below can be employed, but it will not be limited to these.

(1-5) A method of allowing a base such as sodium methoxide to act on the hydroxyl group of the polymer having at least one hydroxyl group at the molecular chain terminal, followed by reaction with an alkenyl group-containing halide such as allyl chloride.

(1-6) A method of allowing the hydroxyl group of the polymer having at least one hydroxyl group at the molecular chain terminal to react with an alkenyl group-containing isocyanate compound such as an allyl isocyanate.

(1-7) A method of allowing the hydroxyl group of the polymer having at least one hydroxyl group at the molecular chain terminal to react with an alkenyl group-containing acid halide such as (meth)acrylic acid chloride in the presence of a base such as pyridine.

(1-8) A method of allowing the hydroxyl group of the polymer having at least one hydroxyl group at the molecular chain terminal to react with an alkenyl group-containing carboxylic acid such as acrylic acid in the presence of an acid catalyst.

When an alkenyl group is introduced by converting the halogen of the polymer having one highly reactive carbon-halogen bond per molecule at the molecular chain terminal, it is preferable to use a polymer having one highly reactive carbon-halogen bond per molecule at the molecular chain terminal, obtained by radical polymerization (atom transfer radical polymerization) of a vinyl monomer using an organic halide having one highly reactive carbon-halogen bond per molecule or a halogenated sulfonyl compound as the an initiator and a transition metal complex as the catalyst.

The hydrosilane compound having a crosslinkable silyl group is not particularly limited. Representative examples include a compound shown in the general formula (13):

H- [Si (R¹_{2-b}) (Y_{b}) O]ₘ-Si (R²₃₋ₐ) Yₐ (13)

wherein R¹, R², Y, a, b, and m are as described above; and when two or more of R¹ or R² are present, these may be the same or different; provided that a + mob ≥ 1.

Among these hydrosilane compounds, a compound having a crosslinkable silyl group as shown in the general formula (14):

H-Si (R²₃₋ₐ) Yₐ (14)

wherein R² and Y are as described above; and a is an integer from 1 to 3,
is preferred due to its availability.

When adding the above hydrosilane compound having a crosslinkable silyl group to an alkenyl group, a transition metal catalyst is typically used. A transition metal catalyst includes, for example, an elemental platinum, those where solid platinum is scattered onto a support such as alumina, silica, and carbon black, a complex of chloroplatinic acid or chloroplatinic acid with for example an alcohol, aldehyde, or ketone, platinum-olefin complex, and platinum(0)-divinyltetramethyldisiloxane. Examples of a catalyst other than platinum compounds include, for example, RhCl(PPh₃)₃, RhCl₃, RuCl₃, IrCl₃, FeCl₃, AlCl₃, PdCl₂•H₂O, NiCl₂, and TiCl₄.

The amount of the vinyl polymer having a crosslinkable silyl group at one of the termini used, preferably a polymer with a molecular weight distribution of less than 1.8, is preferably from 5 to 400 parts by weight relative to 100 parts by weight of the vinyl polymer, in view of modulus and elongation.

As a second aspect of using a combination of two or more vinyl polymers, a combination of a vinyl polymer with a molecular weight distribution of 1.8 or more and a vinyl polymer with a molecular weight distribution of less than 1.8 can be used. The vinyl polymer with a molecular weight distribution of 1.8 or more may or may not need to comprise a crosslinkable silicon group, although it is preferred to have a crosslinkable silicon group because weather resistance, the adhesive strength, or strength at fracture is improved more. In addition, improvement in tear strength of the cured product of the composition can be anticipated. A vinyl polymer with a molecular weight distribution of 1.8 or more which can be used as the first polymer, or the main chain of the vinyl polymer with a molecular weight distribution of less than 1.8 which can be used as the second polymer include a polymer originating from previously described vinyl monomers. It is preferred that both polymers are acrylic ester polymers.

A vinyl polymer with a molecular weight distribution of 1.8 or more can be obtained by a general method of vinyl polymerization, for example solution polymerization method by radical reaction. Polymerization is generally carried out by adding for example the said monomer and a radical initiator or a chain transfer agent and allowing the reaction at from 50 to 150°C to be carried out. In this case, a vinyl polymer with a molecular weight distribution of 1.8 or more are generally obtained.

Examples of the said radical initiator include an azo initiator such as 2,2'-azobisisobutylonitrile, 2,2'-azobis(2-methylbutyronitrile), 4,4'-azobis(4-cyanovaleric) acid, 1,1'-azobis(1-cyclohexanecarbonitrile), azobisisobutyrate amidine hydrochloride, and 2,2'-azobis(2,4-dimethylvaleronitrile); an organic peroxide initiator such as benzoyl peroxide and di-tert-butyl peroxide. It is preferable to use an azo initiator, because it is not affected by the solvent used in polymerization, and its risk of for example explosion in low.

Examples of a chain transfer agent include a mercaptan such as n-dodecyl mercaptan, tert-dodecyl mercaptan, lauryl mercaptan, γ-mercaptopropyltrimethoxysilane, γ-mercaptopropylmethyldimethoxysilane, γ-mercaptopropyltriethoxysilane, and γ-mercaptopropylmethyldiethoxysilane, and a compound comprising halogen.

Polymerization may be carried out in a solvent. Examples of a preferred solvent include a non-reactive solvent such as an ether, a hydrocarbon, or an ester.

Examples of a method for introducing a crosslinkable silyl group include, for example, copolymerizing a compound having both a polymerizable unsaturated bond and a crosslinkable silyl group with a(meth)acrylate ester monomer unit. The compound having both a polymerizable unsaturated bond and a crosslinkable silyl group includes a monomer represented by the general formula (26):

CH₂=C (R²⁸) COOR³⁰-[Si (R¹_{2-b}) (Y_{b}) O]ₘSi (R²₃₋ₐ) Yₐ (26)

wherein R²⁸ represents a hydrogen atom or a methyl group; R³⁰ represents a divalent alkylene group having 1 to 6 carbons; and R¹, R², Y, a, b, and m are as described above)
or the general formula (27):

CH₂=C(R²⁸)-[Si(R¹_{2-b})(Y_{b})O]ₘSi(R²₃₋ₐ)Yₐ (27)

wherein R²⁸, R¹, R², Y, a, b, and m are as described above),
for example, a γ-methacryloxypropylpolyalkoxysilane such as γ-methacryloxypropyltrimethoxysilane, γ-methacryloxypropylmethyldimethoxysilane, and γ-methacryloxypropyltriethoxysilane; a γ-acryloxypropylpolyalkoxysilane such as γ-acryloxypropyltrimethoxysilane, γ-acryloxypropylmethyldimethoxysilane, and γ-acryloxypropyltriethoxysilane; a vinylalkylpolyalkoxysilane such as vinyltrimethoxysilane, vinylmethyldimethoxysilane, and vinyltriethoxysilane. In addition, by using a compound having both a mercapto group and a crosslinkable silyl group as the chain transfer agent, a crosslinkable silyl group can be introduced at the polymer terminal. Examples of such chain transfer agents include a mercaptan such as γ-mercaptopropyltrimethoxysilane, γ-mercaptopropylmethyldimethoxysilane, γ-mercaptopropyltriethoxysilane, and γ-mercaptopropylmethyldiethoxysilane.

The vinyl polymer having a crosslinkable functional group and a molecular weight distribution of 1.8 or more is preferably those having a number average molecular weight in polystyrene-equivalent value of from 500 to 100,000, as determined by GPC measurement, because it will be easy to handle. Furthermore, those having a number average molecular weight of from 1,500 to 30,000 are more preferred because weather resistance and workability of the cured product are good.

### «Compound (II) Having an α,β- or α,γ- Diol Structure In the molecule »

An ester compound is employed as a compound (II) having an α,β- or α,γ-diol structure in the molecule incorporated into the curable composition of the present invention. When used herein, the above α,β-diol structure represents a structure having two hydroxyl groups on adjacent carbon atoms, and the above α,γ-diol structure represents a structure having two hydroxyl groups on carbon atoms spaced apart by one atom. A polyol such as a triol or a tetraol comprising both or one of α,β- and α,γ-diol structures, represented by for example glycerol, is also included in the α,β- or α,γ-diol structures.

An ester compound having an α,β- or α,γ-diol structure in the molecule to be used in the invention includes: a glycerol monocarboxylic acid ester such as glycerol monostearate, glycerol monoisostearate, glycerol monooleate, glycerol monolaurate, glycerol monopalmitate, glycerol monocaprylate, glycerol monoacetate, and glycerol monobehenate;
a polyglycerol carboxylic acid ester such as diglycerol monostearate, diglycerol monooleate, diglycerol monolaurate, tetraglycerol monostearate, tetraglycerol monooleate, tetraglycerol monolaurate, tetraglycerol distearate, tetraglycerol dioleate, tetraglycerol dilaurate, decaglycerol monostearate, decaglycerol monooleate, decaglycerol monolaurate, decaglycerol distearate, decaglycerol dioleate, and decaglycerol dilaurate;
a pentaerythritol monocarboxylic acid ester such as pentaerythritol monostearate, pentaerythritol monoisostearate, pentaerythritol monooleate, and pentaerythritol monolaurate;
a pentaerythritol dicarboxylic acid ester such as pentaerythritol distearate, pentaerythritol dioleate, and pentaerythritol dilaurate;
a sorbitan monocarboxylic acid ester such as sorbitan monostearate, sorbitan monooleate, sorbitan monolaurate, sorbitan monopalmitate, and sorbitan monobehenate;
a sorbitan dicarboxylic acid ester such as sorbitan distearate, sorbitan dioleate, sorbitan dilaurate, sorbitan dipalmitate, and sorbitan dibehenate.

Many of the above compounds are generally used as an emulsifier, a surfactant, a dispersing agent, an antifoaming agent, an anti-fogging agent, a solubilizer, a thickener, or a lubricant, and are readily available.

The above compound (II) may be used alone, or a combination of two or more may be used. The amount of the above compound (II) is preferably from 0.01 to 100 parts by weight relative to 100 parts by weight of the vinyl polymer, i.e. the above component (I). When the amount is less than 0.01 parts by weight, the intended effect cannot be obtained, and when the amount is greater than 100 parts by weight, the mechanical strength of the cured product will not be sufficient. These become a problem and are therefore not preferred. More preferably, the amount is from 0.1 to 20 parts by weight.

### «Polyether Polymer Having a Crosslinkable Functional Group»

### Main Chain

The main chain of the polyether polymer is not particularly limited, and includes, for example, polyethylene oxide, polypropylene oxide, polybutylene oxide, and polyphenylene oxide. Among these, it preferably essentially a polyoxyalkylene, more preferably essentially a polypropylene oxide. In addition to propylene oxide, this may also comprise for example ethylene oxide, butylene oxide, or phenylene oxide. Moreover, the polyether polymer may or may not need to comprise an urethane bond within the main chain. "The main chain is essentially a polypropylene oxide" as used herein indicates that the propylene oxide unit constitutes 50% or more, preferably 70% or more, more preferably 90% or more of the repeating units constituting the main chain. Since lower viscosity leads to good handling, a polypropylene oxide polymer having a molecular weight distribution (Mw/Mn) of 1.5 or less is more preferred.

### Crosslinkable Functional Group

The crosslinkable functional group within the polyether polymer is not particularly limited. Preferred examples include a crosslinkable silyl group, an alkenyl group, a hydroxyl group, an amino group, a group comprising a polymerizable carbon-carbon double bond, and an epoxy group, in particular a crosslinkable silyl group.

The number of crosslinkable functional groups within the polyether polymer is preferably at least one, although it may be 1 or less. In view of the curing property of the composition, it is preferably more than one, more preferably from 1.1 to 4.0 on average, further preferably from 1.5 to 2.5 on average. In view of the rubber elasticity of the cured product, it is also preferred that the crosslinkable functional group is at the terminal of the polyether polymer, more preferably the functional groups are at both termini of the polymer.

### Molecular Weight

A preferred polyether polymer having at least one crosslinkable functional group is a polymer having a number average molecular weight of 7500 or more. Those having a number average molecular weight of 7500 or less are also acceptable. In particular, it is more preferred to use an organic polymer having a number average molecular weight of from 7500 to 25000. When the number average molecular weight of the polyether polymer is less than 7500, the cured product becomes hard with low elongation, and when the number average molecular weight is greater than 25000, although the flexibility and elongation of the cured product will have no problems, the adhesiveness of the said polymer itself will decrease significantly and the practicality thereof decreases. However, even when the molecular weight is low, flexibility and elongation may improve if the number of crosslinkable functional groups is small, and even when the molecular weight is high, adhesiveness may improve if the number of crosslinkable functional groups is high. The preferred number average molecular weight is in particular from 8000 to 20000 in view of viscosity, and 8000 or less or 20000 or more is also acceptable.

### Blending Ratio

The vinyl polymer and the polyether polymer may be blended at any ratio. When blending, it is preferably blended at a ratio per weight in the range of from 100/1 to 1/100, more preferably in the range of from 100/5 to 5/100, further preferably in the range of from 100/10 to 10/100. When the blending ratio of the vinyl polymer is low, superior weather resistance, which is one of the objectives of the present invention, may not be expressed well.

A (meth)acrylic polymer produced by a general radical polymerization method, or a continuous high temperature aggregated polymer (e.g. SOLID GRADE OLIGOMER (SGO) from TOAGOSEI CO., LTD., or mixture where a silylated polymer thereof is blended in advance) may be used in the above polyether polymer for blending with the vinyl polymer.

### <Polyether Polymer Having a Crosslinkable Silyl Group>

A polyether polymer having a crosslinkable silyl group will be described below.

### Main Chain

The structure of the main chain of the polyether polymer having a crosslinkable silyl group is as described above. The main chain may be linear or branched, or a mixture thereof. Among these, a main chain originating from polyoxypropylene diol, polyoxypropylene triol, or a mixture thereof is particularly preferred. Other monomer units etc. may also be incorporated, although it is preferred that the monomer unit shown in the above formula is present in the polymer at 50% by weight or more, preferably 80% by weight or more.

The main chain may or may not need to comprise an urethane bond or an urea bond.

The molecular structure of the polyether polymer varies according to the application for use or the intended property, and those described in for example Japanese Patent Laid-Open No. 63-112642 can be used. These polyoxyalkylenes can be obtained by for example a common polymerization method (anionic polymerization method using a caustic alkali), or a method using a catalyst comprised of a cesium metal catalyst; a porphyrin/aluminum complex catalyst as illustrated in for example Japanese Patent Laid-Open No. 61-197631, Japanese Patent Laid-Open No. 61-215622, Japanese Patent Laid-Open No. 61-215623, and Japanese Patent Laid-Open No. 61-218632; a composite metal cyanide complex catalyst as illustrated in for example Japanese Patent Publication No. 46-27250, and Japanese Patent Publication No. 59-15336; or a polyphosphazene salt as illustrated in Japanese Patent Laid-Open No. 10-273512.

When employing a method using a catalyst comprised of a porphyrin/aluminum complex catalyst, a composite metal cyanide complex catalyst, or a polyphosphazene salt, an oxyalkylene polymer with a small molecular weight distribution (Mw/Mn) such as 1.6 or less, further 1.5 or less can be obtained. When the molecular weight distribution is small, there is an advantage that the low modulus and high elongation of the cured product is maintained and the viscosity of the composition can be decreased.

### Crosslinkable Silyl Group

As with the vinyl polymer, a group shown in the general formula (1), preferably a group shown in the general formula (6) can be used as the crosslinkable silyl group. The descriptions on the groups shown in the general formula (1) or (6) are also applicable to the polyether polymer having a crosslinkable silyl group. The crosslinkable silyl group within the polyether polymer may have the same structure as the crosslinkable silyl group within the vinyl polymer having a crosslinkable silyl group, or may have a different structure.

Because the binding site between the crosslinkable silyl group and the polyether moiety is resistant to hydrolyzation, the crosslinkable silyl group is preferably an alkylene group such as trimethylene or tetramethylene, where at least three carbon atoms are present between the silicon atom of the silyl group and the ether oxygen atom of the polyether moiety.

### The Number And Position of Crosslinkable Silyl Group

In view of for example the curing property of the composition, the number of crosslinkable silyl groups at preferably at least more than 1.2, more preferably between 1.2 or more and 4.0 or less, further preferably from 1.5 to 2.5 or less. In view of the rubber elasticity of the cured product, it is preferred that the crosslinkable silyl group of the polyether polymer is at the molecular chain terminal, more preferably the functional groups are at both termini of the polymer.

A polyether polymer having less than 1.2 crosslinkable silyl groups on average can also be used. In this case, a cured product having high elongation at fracture, low bleed, low contamination of surface, and superior paint adherence can be obtained. In addition, by setting a lower molecular weight for the polymer, the viscosity of the composition can be decreased. The lowest number of crosslinkable silyl groups is preferably at least 0.1 or more, more preferably 0.3 or more, and further preferably 0.5 or more. The crosslinkable silyl group is preferably at the molecular chain terminal. The crosslinkable silyl group of the polyether polymer is preferably at only one of the termini of the main chain and is not present at the other terminal, although it is not particularly limited provided that these are 1.2 or less on average. When viscosity-reducing is to be carried out using the polyether polymer having less than 1.2 crosslinkable silyl groups on average, the preferred molecular weight is less than 10,000, further less than 5,000.

### Method for Introducing A Crosslinkable Silyl Group

Introduction of a crosslinkable silyl group may be carried out by a well known method. In other words, the following methods for example can be mentioned. For example, an oxyalkylene polymer obtained by using a composite metal cyanide complex catalyst is described in Japanese Patent Laid-Open No. 3-72527, and an oxyalkylene polymer obtained by using a polyphosphazene salt and an active hydrogen as catalysts is described in Japanese Patent Laid-Open No. 11-60723.
(1) An unsaturated group-containing oxyalkylene polymer is obtained by reacting an oxyalkylene polymer having a functional group such as hydroxyl group at the terminal with an organic compound having an active group showing reactivity towards this functional group and an unsaturated group, or by copolymerizing with an unsaturated group-containing epoxy compound. Then, a hydrosilane having a crosslinkable silyl group is allowed to act on the reaction product obtained to allow hydrosilylation.
(2) An unsaturated group-containing oxyalkylene polymer obtained as in method (1) is reacted with a compound having a mercapto group and a crosslinkable silyl group.
(3) An oxyalkylene polymer having a functional group such as hydroxyl, epoxy or isocyanate groups (hereinafter referred to as "Y functional group") at the terminal is reacted with a compound having a functional group showing reactivity towards this Y functional group (hereinafter referred to as "Y' functional group") and a crosslinkable silyl group.

Specific examples of a silicon compound having the Y' functional group include, but is not limited to, for example an amino group-containing silane such as γ-(2-aminoethyl)aminopropyltrimethoxysilane, γ-(2-aminoethyl)aminopropylmethyldimethoxysilane, γ-aminopropyltriethoxysilane, 3-amino,2-methylpropyltrimethoxysilane, N-ethyl-3-amino,2-methylpropyltrimethoxysilane, 4-amino,3-methylpropyltrimethoxysilane, 4-amino,3-methylpropylmethyldimethoxysilane, N-phenyl-3-aminopropyltrimethoxysilane, as well as a partial Michael addition reaction product between various amino group-containing silanes and a maleic acid ester or an acrylate compound; a mercapto group-containing silane such as γ-mercaptopropyltrimethoxysilane and γ-mercaptopropylmethyldimethoxysilane; an epoxy silane such as γ-glycidoxypropyltrimethoxysilane and β-(3,4-epoxycyclohexyl)ethyltrimethoxysilane; a vinyl unsaturated group-containing silane such as vinyltriethoxysilane, γ-methacryloyloxypropyltrimethoxysilane, and γ-acryloyloxypropylmethyldimethoxysilane; a chlorine atom-containing silane such as γ-chloropropyltrimethoxysilane; an isocyanate-containing silane such as γ-isocyanatepropyltriethoxysilane, γ-isocyanatepropylmethyldimethoxysilane, and γ-isocyanatepropyltrimethoxysilane; a hydrosilane such as methyldimethoxysilane, trimethoxysilane, methyldiethoxysilane, and triethoxysilane.

In addition, when producing a polymer having 1.2 or less crosslinkable silyl groups on average, the following two methods can be used: a method in which when introducing a crosslinkable silyl group, a polyether polymer having only one functional group per molecule is used, and a compound having a crosslinkable silyl group in an amount equivalent to or less than the functional group is reacted to obtain the polyether polymer having 1.2 or less crosslinkable silyl groups on average; and a method in which polyether polymer having one or more functional groups(s) on average per molecule is used, and a compound having a crosslinkable silyl group in an amount further less than the functional group is reacted, and as a result obtain a polyether polymer having 1.2 or less crosslinkable silyl groups on average is obtained.

### The Amount of Polyether Polymer Having A Crosslinkable Silyl Group Used

The amount of the polyether polymer having a crosslinkable silyl group used is preferably such that the vinyl polymer and the polyether polymer is blended at a ratio per weight in the range of from 100/1 to 1/100, more preferably in the range of from 100/5 to 5/100, and further preferably in the range of from 100/10 to 10/100. When the amount of the vinyl polymer is too small, the weather and heat resistance may decrease.

When a polyether polymer having 1.2 or less crosslinkable silyl groups on average is used, the amount used is preferably between 1 part by weight or more and 200 parts by weight or less, more preferably between 3 parts by weight or more and 100 parts by weight or less, and further preferably between 5 parts by weight or more and 80 parts by weight or less, relative to 100 parts by weight of the vinyl polymer. When the amount is less than 1 part by weight, the effect of addition may not be obtained, and when the amount is greater than 200 parts by weight, the physical property of the cured product tend to be unstabilized.

Aspects for use by blending include, but are not limited to, for example: (i) adding a polyether polymer having a crosslinkable silyl group as well as a polyether polymer having 1.2 or less crosslinkable silyl groups on average to a vinyl polymer having a crosslinkable silyl group represented by the general formula (1); (ii) adding a polyether polymer having a crosslinkable silyl group as well as a vinyl polymer having a crosslinkable silyl group at one of the termini; (iii) when adding a polyether polymer having a crosslinkable silyl group as well as a vinyl polymer having a crosslinkable functional group with a molecular weight distribution of 1.8 or more, a polyether polymer having 1.2 or less crosslinkable silyl groups on average as well as a vinyl polymer having a crosslinkable silyl group at one of the termini is added; (iv) adding a polyether polymer having 1.2 or less crosslinkable silyl groups on average and a vinyl polymer having a crosslinkable functional group with a molecular weight distribution of 1.8 or more.

### <Polyether Polymer Having an Alkenyl Group>

A polyether polymer having an alkenyl group will be described below

The main chain and the number and position of the alkenyl group is the same as in the said polyether polymer having a crosslinkable silyl group.

### Alkenyl Group

The alkenyl group according to the present invention is not limited. It is preferably those represented by the general formula (28).

H₂C=C (R²⁶) - (28):

wherein R²⁶ is a hydrogen atom or a hydrocarbon group having 1 to 20 carbons.

In the general formula (28), R²⁶ is a hydrogen atom or a hydrocarbon group having 1 to 20 carbons, in particular for example the following groups:
- (CH₂)ₙ-CH₃, -CH (CH₃)- (CH₂)ₙ-CH₃, -CH (CH₂CH₃) - (CH₂)ₙ-CH₃, - CH (CH₂CH₃)₂, -C (CH₃) ₂- (CH₂)ₙ-CH₃, -C(CH₃) (CH₂CH₃)-(CH₂)ₙ-CH₃, -C₆H₅, -C₆H₅(CH₃), -C₆H₅(CH₃)₂, - (CH₂)ₙ-C₆H₅, - (CH₂)ₙ-C₆H₅(CH₃), and -(CH₂)ₙ-C₆H₅(CH₃)₂,
   wherein n is 0 or an integer greater than or equal to 1; and the total number of carbons for all the groups is 20 or less.

Among these, a hydrogen atom is preferred.

The type of bond between the alkenyl group and the main chain of the polymer is not particularly limited. It is preferred that they are bound though for example a carbon-carbon bond, ester bond, ether bond, carbonate bond, amide bond, or urethane bond.

### Method For Introducing An Alkenyl Group

Introduction of an alkenyl group may be carried out by a well known method. In other words, the following methods for example can be mentioned. For example, an oxyalkylene polymer obtained by using a composite metal cyanide complex catalyst is described in Japanese Patent Laid-Open No. 3-72527, and an oxyalkylene polymer obtained by using a polyphosphazene salt and an active hydrogen as catalysts is described in Japanese Patent Laid-Open No. 11-60723.
(1) An alkenyl group-containing oxyalkylene polymer is obtained by reacting an oxyalkylene polymer having a functional group such as hydroxyl group at the terminal with an organic compound having an active group showing reactivity towards this functional group and an alkenyl group, or by copolymerizing with an alkenyl group-containing epoxy compound.
(2) An oxyalkylene polymer having a functional group such as hydroxyl, epoxy or isocyanate groups (hereinafter referred to as "Y functional group") at the terminal is reacted with a compound having a functional group showing reactivity towards this Y functional group (hereinafter referred to as "Y' functional group") and an alkenyl group.

Specific examples of a silicon compound having the Y' functional group include, but is not limited to, for example an alkenyl group-containing epoxy compound such as allyl glycidyl ether; an alkenyl group-containing (meth)acrylate such as allyl (meth)acrylate and allyl acrylate; an alkenyl group-containing isocyanate such as allyl isocyanate; an alkenyl group-containing amine such as allylamine; an alkenyl group-containing mercaptan such as allyl mercaptan.

### <<Optional Polymer Component Having Various Crosslinkable Functional Groups>>

According to the curable composition of the present invention, a polymer having various crosslinkable functional groups may be added as an optional component. Examples of a polymer having a crosslinkable functional group include (i) a polyisobutylene polymer having a crosslinkable functional group, in particular a polyisobutylene polymer having a crosslinkable silyl group, and (ii) polysiloxane. These polymers can be added alone, or two or more can be added.

When adding these optional polymer components to the vinyl polymer having the crosslinkable silyl group according to the present invention, a combination of a vinyl polymer having a hydrolyzable silicon group formed by two hydrolyzable groups per silicon atom bound together and an optional polymer component formed by three hydrolyzable groups per crosslinkable functional group bound together, or vice versa, that is, a combination of a vinyl polymer having a hydrolyzable silicon group formed by three hydrolyzable groups per silicon atom bound together and an optional polymer component formed by two hydrolyzable groups per crosslinkable functional group bound together, may be used. Further, any polymer may be used in a combination having a crosslinkable functional group formed by three hydrolyzable groups bound together, or in a combination having a crosslinkable functional group formed by two hydrolyzable groups bound together. Moreover, a mixture of those formed by from 1 to 3 hydrolyzable groups may be used.

### «Curable Composition»

According to the curable composition of the present invention, a curing catalyst or a curing agent is often added. Various formulating agents may also be added depending on the intended physical property.

### <Curing Catalyst And Curing Agent>

A polymer having a crosslinkable silyl group is crosslinked and cured by forming a siloxane bond in or without the presence of a conventionally well known various condensation catalyst. The aspects of the cured product that can be produced are in a wide range depending on the molecular weight of the polymer and the main chain skeleton, including a rubber form and a resin form.

Examples of such a condensation catalyst include, a reaction product of for example a dialkyltin dicarboxylate such as dibutyltin dilaurate, dibutyltin diacetate, dibutyltin diethylhexanoate, dibutyltin dioctate, dibutyltin dimethylmalate, dibutyltin diethylmalate, dibutyltin dibutylmalate, dibutyltin diisooctylmalate, dibutyltin ditridecylmalate, dibutyltin dibenzylmalate, dibutyltin maleate, dioctyltin diacetate, dioctyltin distearate, dioctyltin dilaurate, dioctyltin diethylmalate, and dioctyltin diisooctylmalate, for example a dialkyltin alkoxide such as dibutyltin dimethoxide and dibutyltin diphenoxide, for example an intramolecular coordination derivative of dialkyltin such as dibutyltin diacetylacetonate and dibutyltin diethylacetoacetate, for example a dialkyltin oxide such as dibutyltin oxide and dioctyltin oxide, with for example an ester compound such as dioctyl phthalate, diisodecyl phthalate, and methyl maleate; a reaction product of for example a dialkyltin oxide such as dibutyltin bistriethoxysilicate and dioctyltin bistriethoxysilicate with a silicate compound, and a tetravalent tin compound such as an oxy derivative of these dialkyltin compounds (stannoxane compounds); for example a divalent tin compound such as tin 2-ethylhexanoate, tin naphthenate, tin stearate, and tin phelzatate, or a reaction product of these with an amine compound such as laurylamine as described below, and a mixture thereof; for example a monobutyltin compound such as monobutyltin trisoctoate and monobutyltin triisopropoxide or a monoalkyltin such as a monooctyltin compound; for example a titanate ester such as tetrabutyl titanate, tetrapropyl titanate, tetra(2-ethylhexyl)titanate, and isopropoxy titanium bis(ethylacetoacetate); an organic aluminum compound such as aluminum trisacetylacetonate, aluminum trisethylacetoacetate, and diisopropoxy aluminum ethyl acetoacetate; a carboxylic acid (such as 2-ethylhexanoic acid, neodecanoic acid, versatic acid, oleic acid, and naphthenic acid) metal salt such as bismuth carboxylate, iron carboxylate, titanium carboxylate, lead carboxylate, vanadium carboxylate, zirconium carboxylate, calcium carboxylate, potassium carboxylate, barium carboxylate, manganese carboxylate, cerium carboxylate, nickel carboxylate, cobalt carboxylate, zinc carboxylate, and aluminum carboxylate, or a reaction product of these with an amine compound such as lauryl amine as described below, and a mixture thereof; a chelate compound such as zirconium tetraacetylacetonate, zirconium tributoxy acetylacetonate, dibutoxy zirconium diacetylacetonate, zirconium acetylacetonate bis(ethylacetoacetate, and titanium tetraacetylacetonate; an aliphatic primary amine such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; an aliphatic secondary amine such as dimethylamine, diethylamine, dipropylamine, diisopropylamine, dibutylamine, diamylamine, dioctylamine, di(2-ethylhexyl)amine, didecylamine, dilaurylamine, dicetylamine, distearylamine, methylstearylamine, ethylstearylamine, and butylstearylamine; an aliphatic tertiary amine such as triamylamine, trihexylamine, and trioctylamine; an aliphatic unsaturated amine such as triallylamine and oleylamine; an aromatic amine such as lauryl aniline, stearyl aniline, and triphenylamine; and other amines including an amine compound such as monoethanolamine, diethanolamine, triethanolamine, diethylenetriamine, triethylenetetramine, oleylamine, cyclohexylamine, benzylamine, diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, 1,8-diazabicyclo(5,4,0)undecene-7 (DBU), or a salt of these amine compounds and a carboxylic acid; a reaction product of an amine compound with an organic tin compound and a mixture thereof such as a reaction product of laurylamine with tin 2-ethylhexanoate or a mixture thereof; a low molecular weight polyamide resin obtained from an excess amount of a polyamine and a polybasic acid; a reaction product of an excess amount of a polyamine with an epoxy compound; and for example γ-aminopropyltrimethoxysilane, y-aminopropyltriethoxysilane, γ-aminopropyltriisopropoxysilane, γ-aminopropylmethyldimethoxysilane, γ-aminopropylmethyldiethoxysilane, N-(β-aminoethyl)aminopropyltrimethoxysilane, N-(β-aminoethyl)aminopropylmethyldimethoxysilane, N-(β-aminoethyl)aminopropyltriethoxysilane, N-(β-aminoethyl)aminopropylmethyldiethoxysilane, N-(β-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, N-vinylbenzyl-γ-aminopropyltriethoxysilane. In addition, a silanol condensation catalyst such as a silane coupling agent containing an amino group such as a modified derivative of the above, i.e. an amino-modified silyl polymer, a silylated amino polymer, an unsaturated amino silane complex, a phenylamino long chain alkyl silane, and an aminosilylated silicon; as well as well known silanol condensation catalysts including a fatty acid such as phelzatic acid, other acidic catalysts such as an organic acidic phosphoric ester compound, or a basic catalyst can be exemplified.

Examples of an acidic catalyst, i.e. an organic acidic phosphoric ester compound include, but is not limited to, for example (CH₃O)₂-P(=O)(-OH), (CH₃O)-P(=O) (-OH)₂, (C₂H₅O)₂-P(=O)(-OH), (C₂H₅O)-P(=O)(-OH)₂, (C₃H₇O)₂-P(=O)(-OH), (C₃H₇O)-P(=O)(-OH)₂, (C₄H₉O)₂-P(=O)(-OH), (C₄H₉O)-P(=O)(-OH)₂, (C₈H₁₇O)₂-P(=O)(-OH), (C₈H₁₇O)-P(=O) (-OH) ₂, (C₁₀H₂₁O)₂-P(=O)(-OH), (C₁₀H₂₁O)-P(=O)(-OH)₂, (C₁₃H₂₇O)₂-P(=O)(-OH), (C₁₃H₂₇O)-P(=O)(-OH)₂, (C₁₆H₃₃O)₂-P(=O)(-OH), (C₁₆H₃₃O)-P(=O)(-OH)₂, (HO-C₆H₁₂O)₂-P(=O)(-OH) , (HO-C₆H₁₂O)-P(=O)(-OH)₂, (HO-C₈H₁₆O)-P(=O)(-OH), (HO-C₈H₁₆O)-P(=O)(-OH)₂, [(CH₂OH)(CHOH)O]₂-P(=O)(-OH), [(CH₂OH)(CHOH)O]-P(=O)(-OH)₂, [(CH₂OH)(CHOH)C₂H₄O]₂-P(=O) (-OH), and [(CH₂OH) (CHOH) C₂H₄O] -P (=O) (-OH)₂.

The use of a combination of these organic acids and amines is more preferred because it will lead to high catalytic activity, and therefore the amount used can be decreased. Among the combination of an organic acid and an amine, a combination of an acidic phosphoric ester and an amine, of an organic carboxylic acid and an amine, in particular of an organic acidic phosphoric ester and an amine, of an aliphatic carboxylic acid and an amine is preferred because it will lead to higher catalytic activity and faster curing.

These catalysts may be used alone, or two or may used in combination. The amount of the condensation catalyst incorporated is preferably from about 0.01 to 20 parts (parts by weight, will mean the same hereinafter), further preferably from 0.5 to 5 parts, relative to 100 parts of the polymer having a crosslinkable silyl group. When the amount of the silanol condensation catalyst incorporated is lower than this range, the curing rate may become slow, and the curing reaction may not progress sufficiently. On the other hand, when the amount of the silanol condensation catalyst incorporated is greater than this range, localized generation of heat and foaming will occur upon curing and a good cured product may not be obtained, and therefore the pot life will become too short. This is not preferred also in view of workability. Although it is not particularly limited, a tin curing catalyst gives a preferable result because the curing property will be easy to control.

Although it is not particularly limited, when a one-component composition as described below is to be produced, in view of for example the curing rate or the storage stability of the composition, if a tin curing catalyst is used a tetravalent tin is preferred. A combination of a divalent tin and an organic amine or a non-tin compound can also be used.

Additionally, although it is not particularly limited, when employed in a use such as a sealing agent for siding board, a tetravalent tin is preferred regardless of whether it is a one-component or a two-component, since the adherend is not damaged and peeling is less likely to occur at the adhesive interface because it is easier for the cured product to be relieved of stress.

There has been focus on environmental problems in recent years, and tin catalysts are sometimes disfavored. In such a case, other non-tin catalysts such as bismuth carboxylate or titanium carboxylate may be selected.

According to the curable composition of the present invention, as with the amine compounds, the above amino group-containing silane coupling agent can be used as a co-catalyst in order to enhance the activity of the condensation catalyst. This amino group-containing silane coupling agent is a compound having a group containing a silicon atom bound to a hydrolyzable group (hereinafter referred to as a "hydrolyzable silyl group") and an amino group. Examples include a group previously exemplified as this hydrolyzable group. Methoxy and ethoxy groups are for example preferable in view of hydrolysis rate. The preferred number of hydrolyzable groups is 2 or more, in particular 3 or more.

The amount of these amine compounds incorporated is preferably from about 0.01 to 50 parts by weight, more preferably from 0.1 to 20 parts by weight, relative to 100 parts by weight of the polymer having a crosslinkable silyl group. When the amount of the amine compound incorporated is less than 0.01 parts by weight, the curing rate may become slow, and the curing reaction may not progress sufficiently. On the other hand, when the amount of the amine compound incorporated is greater than 50 parts by weight, the pot life will become too short. This is not preferred also in view of workability.

These amine compounds may be used alone, or two or more may be blended and used.

In addition, a silicon compound without any amino or silanol groups may be added as a co-catalyst. A preferred silicon compound includes, but is not limited to, for example phenyltrimethoxysilane, phenylmethyldimethoxysilane, phenyldimethylmethoxysilane, diphenyldimethoxysilane, diphenyldiethoxysilane, and triphenyl methoxysilane. In particular, diphenyldimethoxysilane or diphenyldiethoxysilane is most preferred because it is low cost and readily available.

The amount of the silicon compound incorporated is preferably from about 0.01 to 20 parts, further preferably from 0.1 to 10 parts, relative to 100 parts of the polymer having a crosslinkable silyl group. When the amount of the silicon compound incorporated is lower than this range, the effect of accelerating the curing reaction may decrease. On the other hand, when the amount of the silicon compound incorporated is greater than this range, the hardness or tensile strength of the cured product may decrease.

It is also possible to control for example the curing property or the mechanical property of the present invention according to the objective or application, by changing the type of the curing catalyst and curing agent and the amount added. It is also possible to vary the type of the curing catalyst and curing agent and the amount added according to the reactivity of the silyl group of a polymer having a crosslinkable silyl group. When the reactivity is high, a small amount in the range of from 0.01 to 1 parts is sufficient for curing.

The type of the curing catalyst and curing agent and the amount added can be selected according to the type of Y and the number of a of the vinyl polymer of the present invention, and it is possible to control for example the curing property or the mechanical property of the present invention according to the objective or application. When Y is an alkoxy group, the reactivity is higher if the number of carbons is lower. When a is higher, it is possible to sufficiently carry out curing with a small amount because the reactivity will be higher.

### <Dehydrating Agent>

Thickening and gelling of the curable composition progress while it is in storage, by for example the water content caused upon production. As a result, workability upon use may have flaws, and by using the curable composition in which thickening and gelling has progressed, the physical property of the cured product after curing may decrease and therefore a problem may rise where the original objective such as the sealing property is lost. In other words, the storage stability of the curable composition may become questionable.

A method for improving the storage stability of the curable composition is a method of reducing the water content of the curable composition by azeotropic dehydration. An example of a method is a method in which a volatile organic compound having a minimum azeotropic point to water is added in an amount of from about 0.1 to 10 parts by weight, homogeneously blended, and then heated to from about 50 to 90°C, and the azeotropic composition of water-organic compound is taken out of the system while aspirating with a vacuum pump. An example of a volatile organic compound having a minimum azeotropic point to water includes a halide such as methylene chloride, chloroform, carbon tetrachloride, and trichloroethylene; an alcohol such as ethanol, an allyl alcohol, 1-propanol, and butanol; an ester such as ethyl acetate and methyl propionate; a ketone such as methylethyl ketone and 3-methyl-2-butanone; an ether such as ethyl ether and isopropyl ether; a hydrocarbon such as benzene, toluene, xylene, and hexane. However, since this method involves a step of evaporation, designing of other volatile formulating agents, and processing and collecting of the volatile organic compound to be azeotroped may become necessary. It is therefore sometimes more preferable to add a following dehydrating agent.

As described above, a dehydrating agent may be added to the composition of the present invention to remove the water content of the composition in order to improve the storage stability. Examples of a dehydrating agent include an inorganic solid such as phosphorus pentoxide, sodium bicarbonate, sodium sulfate (anhydrous Glauber's salt), and molecular sieves. These solid dehydrating agent are acceptable, although a liquid hydrolyzable ester compound as described below is preferred, because the liquid state after addition leans towards being acidic or basic and the composition may in turn become easily condensed and therefore the storage stability becomes impaired, or for example the workability for removing the solid later on may be impaired when the solid dehydrating agents are used. Examples of a hydrolyzable ester compound include those selected from the group consisting of a trialkyl orthoformate such as trimethyl orthoformate, triethyl orthoformate, tripropyl orthoformate, and tributyl orthoformate, a trialkyl orthoacetate such as trimethyl orthoacetate, triethyl orthoacetate, tripropyl orthoacetate, and tributyl orthoacetate, and a compound thereof.

Other hydrolyzable ester compounds further include a hydrolyzable organic silicon compound represented by the formula R₄₋ₙSiYₙ wherein Y is a hydrolyzable group, R is an organic group which may or may not need to comprise a functional group, and n is an integer of from 1 to 4, preferably 3 or 4). Specific examples include a silane compound such as vinyltrimethoxysilane, methyltrimethoxysilane, methyltriethoxysilane, ethyltriethoxysilane, phenyltriethoxysilane, methyltriacetoxysilane, tetramethyl orthosilicate (tetramethoxysilane or methyl silicate), tetraethyl orthosilicate (tetraethoxysilane or ethyl silicate), tetrapropyl orthosilicate, and tetrabutyl orthosilicate, or a partially hydrolyzed condensation product thereof; a silane coupling agent such as γ-aminopropyltrimethoxysilane, γ-glycidoxypropyltrimethoxysilane, N-(β-aminoethyl)-γ-aminopropyltrimethoxysilane, γ-acryloxypropyltrimethoxysilane, γ-methacryloxypropyltrimethoxysilane, γ-glycidoxypropyltrimethoxysilane, γ-mercaptopropyltrimethoxysilane, and N-(β-aminoethyl)-γ-aminopropylmethyldimethoxysilane, or a partially hydrolyzed condensation product thereof. One or two or more among these can be incorporated into the composition.

The amount of the storage stability modifier (dehydrating agent) used is from 0.1 to 30 parts by weight, preferably from 0.3 to 20 parts by weight, more preferably from 0.5 to 10 parts by weight relative to 100 parts by weight of the vinyl polymer.

When adding these storage stability modifiers, it is preferable to have the curable composition in an anhydrous state before addition, but they may be added in a state containing water.

### <Agent for Imparting Adhesiveness>

A silane coupling agent or an agent for imparting adhesiveness other than a silane coupling agent may be added to the composition of the present invention. When an agent for imparting adhesiveness is added, the risk of the sealant to peel off from the adherend such as a siding board can be reduced due to varying of the width of joint etc. on account of vary due to external force. In addition, a primer used for improving adhesiveness may become unnecessary in some cases, and simplification of the construction operation is anticipated. Specific examples of a silane coupling agent include a silane coupling agent having a functional group such as an amino group, mercapto group, epoxy group, carboxyl group, vinyl group, isocyanate group, isocyanurate, and halogen. Specific examples of these include an isocyanate group-containing silane such as γ-isocyanatepropyltrimethoxysilane, γ-isocyanatepropyltriethoxysilane, γ-isocyanatepropylmethyldiethoxysilane, and γ-isocyanatepropylmethyldimethoxysilane; an amino group-containing silane such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane; a mercapto group-containing silane such as γ-mercaptopropyltrimethoxysilane, γ-mercaptopropyltriethoxysilane, γ-mercaptopropylmethyldimethoxysilane, and γ-mercaptopropylmethyldiethoxysilane; an epoxy group-containing silane such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β- (3, 4-epoxycyclohexyl)ethyltriethoxysilane; a carboxysilane such as β-carboxyethyltriethoxysilane, β-carboxyethylphenylbis(2-methoxyethoxy)silane, and N-β-(carboxymethyl)aminoethyl-y-aminopropyltrimethoxysilane; a vinyl unsaturated group-containing silane such as vinyltrimethoxysilane, vinyltriethoxysilane, γ-methacryloyloxypropylmethyldimethoxysilane, and γ-acroyloxypropylmethyltriethoxysilane; a halogen-containing silane such as γ-chloropropyltrimethoxysilane; an isocyanurate silane such as tris(trimethoxysilyl)isocyanurate, a polysulfane such as bis(3-triethoxysilylpropyl) tetrasulfane. Further, a reaction product of the said amino group-containing silane with the epoxy group-containing silane, the reaction product of the amino group-containing silane with the acroyloxy group-containing silane, and the reaction product of the amino group-containing silane with the isocyanate group-containing silane can also be used. A modified derivative thereof, i.e. for example an amino-modified silyl polymer, a silylated amino polymer, an unsaturated amino silane complex, a phenylamino long chain alkyl silane, an aminosilylated silicon, a block isocyanate silane, and a silylated polyester can also be used as a silane coupling agent. Moreover, a ketimine compound etc. obtained by the reaction of the said amino group-containing silane with for example a ketone compound such as methylisobutyl ketone can also be used as a silane coupling agent.

The silane coupling agent used in the present invention is generally used in the range of from 0.1 to 20 parts, relative to 100 parts of the polymer having a crosslinkable silyl group. In particular, it is preferred to use the silane coupling agent in the range of from 0.5 to 10 parts. The effect of the silane coupling agent added to the curable composition of the present invention is such that when used on various adherends, i.e. an inorganic base material such as glass, aluminum, stainless steel, zinc, copper, and mortar or an organic base material such as polyvinyl chloride, polyacrylate, polyester, polyethylene, polypropylene, and polycarbonate, it shows significant effect on improvement in adhesiveness in a non-primer condition or a primer-treated condition. The effect of improving adhesiveness to various adherends is particularly significant when used in a non-primer condition.

Specific examples other than silane coupling agents include, but is not particularly limited to, for example, a linear or branched block copolymer such as epoxy resin, phenol resin, polystyrene-polybutadiene-polystyrene, polystyrene-polyisoprene-polystyrene, polystyrene-polyisoprene/butadiene copolymer-polystyrene, polystyrene-polyethylene/propylene copolymer-polystyrene, polystyrene-polyethylene/butylene copolymer-polystyrene, and polystyrene-polyisobutene-polystyrene, an alkyl sulfonate ester, sulfur, an alkyl titanate, and an aromatic polyisocyanate. Epoxy resin can be used by allowing it to react with the said amino group-containing silane.

The above agent for imparting adhesiveness may be used alone, or two or more may be used in combination. Adhesiveness to the adherend can be improved by adding these agents for imparting adhesiveness. Although it is not particularly limited, in order to improve adhesiveness, especially adhesiveness to a metal adherend surface such as an oil pan, among the agent for imparting adhesiveness it is preferred to use the silane coupling agent for imparting adhesiveness at from 0.1 to 20 parts by weight.

The type and the amount added of the agent for imparting adhesiveness can be selected according to the type of Y and the number of a of the vinyl polymer of the present invention, and it is possible to control for example the curing property or the mechanical property of the present invention according to the objective or application. Careful selection is necessary because it especially affects curing property and elongation.

### <Plasticizer>

Various plasticizers may be used as necessary in the curable composition of the present invention. When a plasticizer is used in combination with a filler as described below, it may become more advantageous because elongation of the cured product can be increased and a large amount of a filler can be blended, but it is not always necessary to add a plasticizer. The plasticizer used is not particularly limited. Examples include, depending on the objective such as regulation of a physical property or adjustment of a characteristic, a phthalate ester such as dibutyl phthalate, diheptyl phthalate, di(2-ethylhexyl)phthalate, diisodecyl phthalate, and butyl benzyl phthalate; a non-aromatic dibasic acid ester such as dioctyl adipate, dioctyl sebacate, dibutyl sebacate, and isodecyl succinate; an aliphatic ester such as butyl oleate and methyl acetyl ricinolate; an ester of polyalkylene glycol such as diethylene glycol dibenzoate, triethylene glycol dibenzoate, and pentaerythritol ester; a phosphoric ester such as tricresyl phosphate and tributyl phosphate; a trimellitic ester; a polystyrene such as polystyrene and poly-α-methylstyrene; polybutadiene, polybutene, polyisobutylene, butadiene-acrylonitrile, and polychloroprene; a chlorinated paraffin; a hydrocarbon oil such as alkyl diphenyl and partially hydrogenated terphenyl; a process oil; a polyether polyol such as polyethylene glycol, polypropylene glycol, ethylene oxide-propylene oxide copolymer, and polytetramethylene glycol, and a polyether such as polyether an alkyl derivative where one or both termini or all of the termini of the hydroxyl group on these polyether polyols are converted into for example an alkyl ester group or an alkyl ether group; an epoxy group-containing plasticizer such as epoxidated soybean oil, benzyl epoxystearate, and E-PS; a polyester plasticizer obtained from a dibasic acid such as sebacic acid, adipic acid, azelaic acid, and phthalic acid, and a dihydric alcohol such as ethylene glycol, diethylene glycol, triethylene glycol, propylene glycol, and dipropylene glycol; a vinyl polymer obtained by polymerizing a vinyl monomer including an acrylic plasticizer using various methods.

Among these, by adding a polymeric plasticizer which is a polymer having a number average molecular weight of from 500 to 15,000, the viscosity and slump property of the curable composition, and the mechanical property of the cured product obtained by curing the composition such as tensile strength and elongation can be regulated. In addition, as compared to using a low molecular weight plasticizer which is a plasticizer that do not contain any polymer component in the molecule, the initial physical property can be retained for a longer period of time, and the drying property (also called the coatability) upon coating of an alkyd paint to the cured product can be improved. Although it is not limited, this polymeric plasticizer may be with or without a functional group.

The number average molecular weight of the polymeric plasticizer is from 500 to 15,000 as stated above, preferably from 800 to 10,000, and more preferably from 1,000 to 8,000. When the molecular weight is too low, the plasticizer will run off over time by heat or rain. When this happens, the initial physical property cannot be retained for a long period of time, and alkyd coatability cannot be improved. When the molecular weight is too high, viscosity rises and workability is impaired.

Among these polymeric plasticizers, a polyether plasticizer and a (meth)acrylic polymer plasticizer are preferred in view of high elongation property or high weather resistance. A method for synthesizing an acrylic polymer includes, for example, those obtained by conventional solution polymerization and solventless acrylic polymers. The latter acrylic plasticizer is more preferred for the objective of the present invention, because it does not use any solvents or chain transfer agents, but is produced by continuous high temperature polymerization method (USP 4414370, Japanese Patent Laid-Open No. 59-6207, Japanese Patent Publication No. 5-58005, Japanese Patent Laid-Open No. 1-313522, and USP 5010166). Examples of these include, but are not particularly limited to, a series of ARUFON UP products from TOAGOSEI CO., LTD. (UP-1000, UP-1110, UP-2000, and UP-2130) (called SOLID GRADE OLIGOMER) (see Bousui Journal, June, 2002). Needless to say, living radical polymerization can also be mentioned as another method for synthesis. According to this method, this method is preferred because the molecular weight distribution of the polymer thereof is narrow and viscosity-reducing is possible. Moreover, although it is not limiting, atom transfer radical polymerization is more preferred.

The molecular weight distribution of the polymeric plasticizer is not particularly limited. However, in view of viscosity, it is preferred that the distribution is narrow, that is preferably less than 1.8, more preferably 1.7 or less, particularly preferably 1.6 or less, further preferably 1.5 or less, particularly preferably 1.4 or less, and most preferably 1.3 or less.

Meanwhile, in view of viscosity, those having a branched structure in the main chain is preferred because they will have a lower viscosity with the same molecular weight. An example of this method is the aforementioned continuous high temperature polymerization method.

A plasticizer comprising the above polymeric plasticizer may be used alone or in combination of two or more, but it is not always necessary. Where necessary, a polymeric plasticizer may be used, and a low molecular weight plasticizer may also be used in combination so long as it is in the range that it does not have an adverse effect on the physical property. Moreover, for example, when the composition is produced by blending the vinyl polymer of the present invention with a polyether polymer which is one of the optional polymer components having a crosslinkable functional group, a phthalate ester or an acrylic polymer is particularly preferred in view of the compatibility of the mixture.

These plasticizers can also be incorporated at the time of polymer production.

The amount of the plasticizer used is not limited. It is from 5 to 150 parts by weight, preferably from 10 to 120 parts by weight, further preferably from 20 to 100 parts by weight, relative to 100 parts by weight of the polymer having a crosslinkable silyl group. When the amount is less than 5 parts by weight, its effect as a plasticizer will not be expressed well, and when the amount is greater than 150 parts by weight, the mechanical strength of the cured product will tend to be insufficient.

### <Filler>

Various fillers may used as necessary in the curable composition of the present invention. Examples of a filler include, but are not limited to, a reinforcing filler such as wood flour, pulp, cotton chip, asbestos, glass fiber, carbon fiber, mica, walnut coat powder, chaff powder, graphite, diatomaceous earth, clay, silica (such as fumed silica, precipitated silica, crystalline silica, fused silica, dolomite, silicic acid anhydride, hydrous silicic acid, and amorphous spherical silica), and carbon black; a filler such as heavy calcium carbonate, colloidal calcium carbonate, magnesium carbonate, diatomaceous earth, calcined clay, clay, talc, titanium oxide, bentonite, organic bentonite, ferric oxide, colcothar, fine aluminum powder, flint powder, zinc oxide, active zinc oxide, zinc powder, zinc carbonate, and Shirasu balloon, glass microballoon, an organic microballoon of phenol resin or vinylidene chloride resin, and a resin powder such as PVC powder and PMMA powder; a fiber filler such as asbestos, glass fiber and glass filament, carbon fiber, Kevler fiber, and polyethylene fiber.

Among these fillers, precipitated silica, fumed silica, crystalline silica, fused silica, dolomite, carbon black, calcium carbonate, titanium oxide, and talc are examples of those preferred.

In particular, when a cured product with high transparency and strength is to be obtained using these fillers, a filler selected from mainly for example fumed silica, precipitated silica, silicic acid anhydride, hydrous silicic acid, carbon black, surface-treated fine calcium carbonate, crystalline silica, fused silica, calcined clay, clay and active zinc oxide can be added. These are suitable for a transparent architectural sealant and a transparent DIY adhesive etc. Among these, an ultrafine silica powder having a specific surface area (by BET adsorption) of 10 m²/g or more, typically from 50 to 400 m²/g, and preferably from about 100 to 300 m²/g is preferred. In addition, a silica of which the surface is hydrophobically treated in advance with an organic silicon compound such as organosilane, organosilazane, and diorganocyclopolysiloxane is further preferred.

More specific examples of a silica filler with high reinforcing property include, but are not particularly limited to, a fumed silica, e.g. AEROSIL from NIPPON AEROSIL CO., LTD., and a precipitated silica, e.g. Nipsil from NIPPON SILICA INDUSTRIAL CO., LTD. A silica with an average particle size of between 1 nm or more and 30 µm or less can be used. Especially with fumed silica, the use of fumed silica with an average particle size of primary particle between 1 nm or more and 50 nm or less is more preferred because it gives particularly high reinforcing effect. The average particle size according to the present invention is determined by sieving. Specifically, powders are sorted using various aperture sieves (such as a microsieve), and the value equivalent to the aperture of the sieve through which 50% by weight of the total weight of the powder subjected to measurement passed through is determined (weight average particle size). A composition reinforced by a filler is superior in immediate fixation, and is suitable for an automotive glass glazing adhesive.

Transparency can also be obtained by using a resin powder such as PMMA powder as a filler.

Moreover, when a cured product with low strength and high elongation is to be obtained, a filler selected mainly from for example titanium oxide, calcium carbonate, talc, ferric oxide, zinc oxide and Shirasu balloon can be added. In general, when the specific surface area of calcium carbonate is small, the effect of improving the breaking strength, breaking elongation, adhesiveness and weather-resistant adhesiveness of the cured product may not be sufficient. As the value of specific surface area increases, the effect of improving the breaking strength, breaking elongation, adhesiveness and weather-resistant adhesiveness of the cured product will increase. The form of calcium carbonate that can be used include various forms such as cuboid, non-cuboid, and amorphous.

In addition, it is preferred that calcium carbonate is surface-treated with a surface-treating agent. When a surface-treated calcium carbonate is used, it seems that the workability of the composition of the present invention is improved, and the effect of improving the adhesiveness and weather-resistant adhesiveness of the curable composition is greater as compared to using calcium carbonate without surface treatment. Examples of the said surface-treating agent used include an organic compound such as fatty acid, fatty acid soap, fatty acid ester or various surfactants, and various coupling agents such as silane coupling agent and titanate coupling agent. Specific examples include, but are not limited to, a fatty acid such as caproic acid, caprylic acid, pelargonic acid, capric acid, undecanoic acid, lauric acid, myristic acid, palmitic acid, stearic acid, behenic acid, and oleic acid; a salt of these fatty acids such as sodium and potassium salts; and an alkyl ester of these fatty acids. Specific examples of a surfactant include a sulfate ester anionic surfactant such as for example polyoxyethylene alkyl ether sulfate ester, long chain alcohol sulfate ester, and sodium and potassium salts thereof; and a sulfonate anionic surfactant such as for example alkylbenzene sulfonate, alkyl naphthalene sulfonate, paraffin sulfonate, α-olefin sulfonate, alkyl sulfosuccinate, and sodium and potassium salts thereof. The amount of the surface-treating agent used for treatment is preferably in the range of from 0.1 to 20% by weight, more preferably in the range of from 1 to 5% by weight of calcium carbonate. When the amount is less than 0.1% by weight, the effect of improving the workability, adhesiveness and weather-resistant adhesiveness may not be sufficient, and when the amount is greater than 20% by weight, the storage stability of the curable composition may decrease.

Although it is not particularly limited, when using calcium carbonate, if the effect of improving for example the thixotropy of the formulation or the breaking strength, breaking elongation, adhesiveness and weather-resistant adhesiveness of the cured product is particularly expected, it is preferred to use a colloidal calcium carbonate.

On the other hand, heavy calcium carbonate may be added with the intent to for example viscosity-reducing or expanding the formulation and cost reduction. When heavy calcium carbonate is used, those shown below can be used as necessary.

Heavy calcium carbonate is a mechanically ground and processed natural chalk (chalk), marble, limestone, etc. There are dry and wet methods for grinding. The product from a wet grinding method is often not preferred, because it often impairs the storage stability of the curable composition of the present invention. Heavy calcium carbonate is made into products of various average particle sizes through sorting. Although it is not particularly limited, if the effect of improving the breaking strength, breaking elongation, adhesiveness and weather-resistant adhesiveness of the cured product is expected, it is preferred to use those having a specific surface area of between 1.5 m²/g or more and 50 m²/g or less, further preferably 2 m²/g or more and 50 m²/g or less, more preferably 2.4 m²/g or more and 50 m²/g or less, and particularly preferably 3 m²/g or more and 50 m²/g or less. When the specific surface area is less than 1.5 m²/g, its effect of improving may not be sufficient. Needless to say, this is not always the case when the objective is merely to for example lower the viscosity or to expand the formulation.

The value of specific surface area is a value measured by the air permeability method according to JIS K 5101 (a method of calculating the specific surface area from permeability of air against packed powder layer). It is preferred to use the specific surface area measurement instrument SS-100 from Shimadzu Corporation as the measuring device.

These fillers may be used alone or two or more may be used, according to the objective or as necessary. Although it is not particularly limited, for example, if heavy calcium carbonate having a specific surface area of 1.5 m²/g or more and a colloidal calcium carbonate are used in combination as necessary, the rise in the viscosity of the formulation can be suppressed at a moderate level, and the effect of improving the breaking strength, breaking elongation, adhesiveness and weather-resistant adhesiveness of the cured product can be greatly anticipated.

When a filler is used, the amount of the filler added is preferably used in the range of from 5 to 1,000 parts by weight, more preferably in the range of from 20 to 500 parts by weight, particularly preferably in the range of from 40 to 300 parts by weight, relative to 100 parts by weight of the polymer having a crosslinkable silyl group. When the amount incorporated is less than 5 parts by weight, the effect of improving the breaking strength, breaking elongation, adhesiveness and weather-resistant adhesiveness of the cured product may not be sufficient, and when the amount is greater than 1,000 parts by weight, the workability of the curable composition may decrease. The filler may be used alone or in combination of two or more.

### <Microballoon>

In addition, a microballoon may also be used in combination with these reinforcing fillers with the objective of providing lightening and cost reduction without great decrease in physical property.

Examples of such a microballoon (hereinafter referred to as balloon) include, but are not particularly limited to, a hollow body composed of a material of an inorganic or organic matter having a diameter of 1 mm or less, preferably 500 µm or less, further preferably 200 µm or less, as described in "Kinosei filler no saishin gijutsu (Latest functional filler technology)" (CMC). In particular, it is preferred to use a micro-hollow body having an absolute specific gravity of 1.0 g/cm³ or less, and it is further preferred to use a micro-hollow body of 0.5 g/cm³ or less.

Examples of the said inorganic balloon include silicate and non-silicate balloons. A silicate balloon includes for example Shirasu balloon, perlite, glass (silica) balloon, and fly ash balloon, and a non-silicate balloon includes for example alumina balloon, zirconia balloon, and carbon balloon. Specific examples of these inorganic balloons include WINLITE from THE IDICHI CHEMICAL COMPANY OF JAPAN and SANKILITE from SANKI ENGINEERING CO., LTD. as a Shirasu balloon; FUJI BALLOON from FUJI SILYSIA CHEMICAL LTD., CALLOON from NIPPON SHEET GLASS CO., LTD., SELSTAR Z-28 from SUMITOMO 3M LTD., MICRO BALLOON from EMERSON & CUMING, CELAMIC GLASSMODULES from PITTSBURGE CORNING, GLASS BUBBLES from 3M, Q-CEL from ASAHI GLASS CO., LTD., and E-SPHERES from TAIHEIYO CEMENT CORPORATION as a glass (silica) balloon; CEROSPHERES from PFAMARKETING and FILLITE from FILLITE U.S.A. as a fly ash balloon; BW from SHOWA DENKO K. K. as an alumina balloon; HOLLOW ZIRCONIUM SPHEES from ZIRCOA as a zirconia balloon; KUREKASPHERE from KUREHA CHEMICAL INDUSTRIES CO., LTD. and CARBOSPHERE from GENERAL TECHNOLOGIES as a carbon balloon; all of which are commercially available.

Examples of the said organic balloon can include a thermosetting resin balloon and a thermoplastic resin balloon. A thermosetting balloon includes phenol balloon, epoxy balloon, and urea balloon, and a thermoplastic balloon includes saran balloon, polystyrene balloon, polymethacrylate balloon, polyvinyl alcohol balloon, and styrene-acrylic balloon. Crosslinked thermoplastic resin balloon can also be used. A balloon herein may also be a foamed balloon or raw material of foamed ballon, wherein a formulation comprising a foaming agent may be allowed to foam to provide a balloon.

Specific examples of these organic balloons include UCAR and PHENOLIC MICROBALLOONS from UNION CARBIDE CORPORATION as a phenol balloon; ECCOSPHERES from EMERSON & CUMING as an epoxy balloon; ECCOSPHERES VF-O from EMERSON & CUMING as an urea balloon; SARAN MICROSPHERES from DOW CHEMICAL, EXPANCEL from NIPPON FILAMENT, and MATSUMOTO MICROSPHERE from MATSUMOTO YUSHI-SEIYAKU CO., LTD. as a saran balloon; DYLITE EXPANDABLE POLYSTYRENE from ARCO POLYMERS and EXPANDABLE POLYSTYRENE BEADS from BASF WYANDOTE as a polystyrene balloon; SX863 (P) from JAPAN SYNTHETIC RUBBER CO., LTD. as a crosslinked styrene-acrylate balloon; all of which are commercially available.

The above balloons may be used alone, or two or more may be used in combination. In addition, these balloons that were surface-treated with for example a fatty acid, a fatty acid ester, a rosin, a rosin acid lignin, a silane coupling agent, a titanium coupling agent, an aluminum coupling agent, or a polypropylene glycol to improve the dispersibility and workability of the formulation can also be used. These balloons are used for improvement of workability such as cuttability before curing of the formulation, and for cost reduction by lightening without losing flexibility, elongation and strength, as well as delustering of the surface, and designing such as sputtering, etc. after curing of the formulation.

The amount of the balloon incorporated is not particularly limited. It can be used preferably in the range of from 0.1 to 50 parts by weight, further preferably from 0.1 to 30 parts by weight, relative to 100 parts by weight of the polymer having a crosslinkable silyl group. When this amount is less than 0.1 parts by weight, the effect of lightening is small, and when the amount is 50 parts by weight or more, decrease in the mechanical property of the cured formulation such as tensile strength may be observed. In addition, when the specific gravity of the balloon is 0.1 or more, the amount is preferably from 3 to 50 parts by weight, further preferably from 5 to 30 parts by weight.

### <Agent for Regulating Physical Properties>

An agent for regulating physical properties to regulate the tensile property of the cured product produced may be added as necessary to the curable composition of the present invention.

An agent for regulating physical properties is not particularly limited. Examples include an alkylalkoxysilane such as methyltrimethoxysilane, dimethyldimethoxysilane, trimethylmethoxysilane, and n-propyltrimethoxysilane; an alkylisopropenoxysilane such as dimethyldiisopropenoxysilane, methyltriisopropenoxysilane, and γ-glycidoxypropylmethyldiisopropenoxysilane; a functional group-containing alkoxysilane such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane, and γ-mercaptopropylmethyldimethoxysilane; a silicon varnish; and a polysiloxane. By using the said agent for regulating physical properties, the hardness of the cured composition of the present invention may be increased, or the hardness may be decreased and elongation is increased. The above agent for regulating physical properties may be used alone, or two or more may be used in combination.

### <Silanol-Containing Compound>

A silanol-containing compound may be added to the curable composition of the present invention as necessary for example to change the physical property of the cured product. A silanol-containing compound is a compound having one silanol group per molecule, and/or a compound capable of producing a compound having one silanol group per molecule by reacting with water. Only one of these may be used, or both compounds may be used together.

Examples of a compound having one silanol group per molecule, which is a silanol-containing compound, include, but are not limited to, compounds where a silanol group is bound to the terminal of a polymer of which the main chain is constituted of silicon, carbon, and oxygen such as compounds represented by (R")₃SiOH, wherein R" is the same or different and represents a substituted or unsubstituted alkyl group or aryl group including the following compounds:
(CH₃)₃SiOH, (CH₃CH₂)₃SiOH, (CH₃CH₂CH₂)₃SiOH, (n-Bu)₃SiOH, (sec-Bu)₃SiOH, (t-Bu)₃SiOH, (t-Bu)Si(CH₃)₂OH, (C₅H₁₁)₃SiOH, (C₆H₁₃)₃SiOH, (C₆H₅)₃SiOH, (C₆H₅)₂Si(CH₃)OH, (C₆H₅)Si(CH₃) ₂OH, (C₆H₅)₂Si(C₂H₅)OH, C₆H₅Si (C₂H₅) ₂OH, C₆H₅CH₂Si(C₂H₅)₂OH, and C₁₀H₇Si(CH₃)₂OH,
   wherein C₆H₅ represents a phenyl group; and C₁₀H₇ represents a naphthyl group.
   Among these, (CH₃)₃SiOH etc. having a small molecular weight is preferred in view of availability and effect.

By allowing the reaction with the crosslinkable silyl group of a polymer having a crosslinkable silyl group or a siloxane bond produced by crosslinking to be carried out, the above compound having one silanol group per molecule gives a composition in which the number of crosslinking points is reduced, the cured product is imparted flexibility, and is superior in low tackiness of surface and resistance to dust attachment.

A compound capable of producing a compound having one silanol group per molecule by reacting with water, which is one of the components of the present invention, includes, but is not particularly limited to:
a trimethylsilylate of polyether polyol, a trimethylsilylate of polypropylene tetraol, and a trimethylsilylate of acrylic polyol, such as N,O-bis(trimethylsilyl)acetamide, N-(trimethylsilyl)acetamide, bis(trimethylsilyl)trifluoroacetamide, N-methyl-N-trimethylsilyl trifluoroacetamide, bis trimethylsilyl urea, N-(t-butyldimethylsilyl)N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyl trifluoromethanesulfonate, trimethylsilylphenoxide, trimethylsilylate of n-octanol, trimethylsilylate of 2-ethylhexanol, tris(trimethylsilyl)ate of glycerol, tris(trimethylsilyl)ate of trimethylolpropane, tris(trimethylsilyl)ate of pentaerythritol, tetra(trimethylsilyl)ate of pentaerythritol, (CH₃)₃SiNHSi(CH₃)₃, (CH₃)₃SiNSi(CH₃)₂, allyloxytrimethylsilane, N,O-bis(trimethylsilyl)acetamide, N-(trimethylsilyl)acetamide, bis(trimethylsilyl)trifluoroacetamide, N-methyl-N-trimethylsilyl trifluoroacetamide, bis trimethylsilyl urea, N-(t-butyldimethylsilyl)N-methyltrifluoroacetamide, (N,N-dimethylamino)trimethylsilane, (N,N-diethylamino)trimethylsilane, hexamethyldisilazane, 1,1,3,3-tetramethyldisilazane, N-(trimethylsilyl)imidazole, trimethylsilyl trifluoromethanesulfonate, trimethylsilylphenoxide, trimethylsilylate of n-octanol, trimethylsilylate of 2-ethylhexanol, tris(trimethylsilyl)ate of glycerol, tris(trimethylsilyl)ate of trimethylolpropane, tris(trimethylsilyl)ate of pentaerythritol, tetra(trimethylsilyl)ate of pentaerythritol, N,O-bis(trimethylsilyl)acetamide, N-(trimethylsilyl)acetamide, trimethylsilylphenoxide, trimethylsilylate of n-octanol, trimethylsilylate of 2-ethylhexanol, tris(trimethylsilylate) of glycerol, tris(trimethylsilylate) of trimethylolpropane, tris(trimethylsilylate) of pentaerythritol, tetra(trimethylsilyl) of pentaerythritol, trimethylsilylate of polypropylene glycol, and trimethylsilylate of polypropylene triol. These may be used alone, or two or more may be used in combination.

This compound capable of producing a compound having one silanol group per molecule by reacting with water produces a compound having one silanol group per molecule during storage, upon curing, or after curing by reacting with water. The compound having one silanol group per molecule thus produced is thought to reduce the number of crosslinking points and impart flexibility to the cured product by allowing the reaction with the crosslinkable silyl group of a vinyl polymer or a siloxane bond produced by crosslinking to be carried out as described above.

The structure of this silanol-containing compound can be selected according to the type of Y and the number of a of the vinyl polymer of the present invention. The curing property or the mechanical property of the present invention, for example, can be controlled according to the objective or application.

The silanol-containing compound may be used in combination with an air oxidation-curable material as described below. Using these in combination is preferred because the modulus of the cured product is maintained low, and the curing property of alkyd paint applied to a surface and dust attachment is improved.

The amount of the silanol-containing compound added can be regulated as appropriate according to the anticipated physical property of the cured product. The silanol-containing compound can be added at from 0.1 to 50 parts by weight, preferably from 0.3 to 20 parts by weight, further preferably from 0.5 to 10 parts by weight, relative to 100 parts by weight of the polymer having a crosslinkable silyl group. When the amount added is less than 0.1 parts by weight, the effect of addition is not shown, and when the amount is greater than 50 parts by weight, crosslinking becomes insufficient, and the strength of the cured product or the gel fraction becomes too low.

The timing for adding the silanol-containing compound is not particularly limited. The silanol-containing compound may be added at the time of polymer production, or at the time of production of the curable composition.

### <Thixotropic Agent (Anti-Sagging Agent)>

A thixotropic agent (anti-sagging agent) may be added as necessary to the curable composition of the present invention to prevent sagging and to improve workability.

A thixotropic agent (anti-sagging agent) is also called a thixotropy-imparting agent. Thixotropy imparts a property that exhibits fluidity when a strong pressure is applied such as when extruding in the form of beads from a cartridge, applying with for example a spatula, or spraying with for example a spray, and does not sag while being cured after spreading or applying.

Examples of a thixotropic agent (anti-sagging agent) include, but are not particularly limited to, an amido wax represented by DISPERLON (KUSUMOTO CHEMICALS, LTD.) or a hydrogenated castor oil, a hydrogenated castor oil derivative, a fatty acid derivative, a metal soap such as calcium stearate, aluminum stearate, and barium stearate, an organic compound such as 1,3,5-tris(trialkoxysilylalkyl)isocyanurate, and an inorganic compound such as calcium carbonate surface-treated with a fatty acid or resin acid, micropowder silica, and carbon black.

A micropowder silica means a natural or artificial inorganic filler having silicon dioxide as the main component. Specific examples include kaolin, clay, activated clay, silica sand, silica stone, diatomaceous earth, anhydrous aluminum silicate, hydrous magnesium silicate, talc, perlite, white carbon, mica micropowder, bentonite, and organic bentonite.

Among these, ultrafine particle anhydrous silica or organic bentonite produced by reacting a volatile compound comprising silicon in a gaseous phase are preferred. It is preferred that these have a specific surface area of at least 50 m²/g, more preferably a specific surface area of from 50 to 400 m²/g. In addition, either or both of hydrophilic silica and hydrophobic silica can be used. These may or may not need to be surface-treated. Preferred examples include a hydrophobic silica of which the surface is hydrophobically treated by a surface-treating agent such as silazane having a methyl group as the only organic substituent bound to the silicon atom, chlorosilane, alkoxysilane, or polysiloxane.

Specific examples of the above surface-treating agent include, a silazane such as hexamethyldisilazane; a halogenated silane such as trimethylchlorosilane, dimethyldichlorosilane, and methyltrichlorosilane; an alkoxysilane such as trimethylalkoxysilane, dimethyldialkoxysilane, and methyltrialkoxysilane wherein examples of the alkoxy group include a methoxy, ethoxy, propoxy, and butoxy groups); a siloxane such as cyclic or linear polydimethyl siloxane. These may be used alone, or two or more may be used in combination. Among these, a hydrophobic micropowder silica surface-treated with siloxane (dimethyl silicone oil) is preferred in view of imparting of thixotropy.

Moreover, the thixotropy increases when a polyether compound such as diethylene glycol, triethylene glycol, and polyethylene glycol, a reaction product of for example a polyether compound and a functional silane, or a non-ionic surfactant having an ethylene oxide chain is used in combination with a micropowder silica. This non-ionic surfactant may be used alone, or two or more may be used.

Specific examples of this micropowder silica include commercially available products such as product name Aerosil R974, R972, R972V, R972CF, R805, R812, R812S, RY200, RX200, RY200S, #130, #200, #300, and R202 etc. from NIPPON AEROSIL CO., LTD., product name NIPSIL SS series from NIPPON SILICA INDUSTRIAL CO., LTD., product name Rheorosil MT-10, MT-30, QS-102, and QS-103 from TOKUYAMA, product name Cabosil TS-720, MS-5, and MS-7 from CABOT, and S-BEN and ORGANITE from HOJUN.

An organic bentonite is a material consisting mainly of finely ground monmorillonite ore in a powder state, surface-treated with various organic compounds. The organic compounds used are for example an aliphatic primary amine and an aliphatic quaternary amine (both of which preferably have 20 or less carbons). Specific examples of this organic bentonite include product name ORBEN D and NewD ORBEN from SHIRAISHI KOGYO, LTD., product name HARDSIL from TSUCHIYA KAOLIN INDUSTRY CO., LTD., clay #30 from BERGESS PIGMENT, #33 from SOUTHERN CLAY, and "Bentone 34" (dimethyloctadecylammonium bentonite) from NATIONAL LEAD (United States).

The thixotropy index means the ratio of apparent viscosity between low rotation speed (for example from 0.5 to 12 rpm) and high rotation speed (for example from 2.5 to 60 rpm), as determined by viscosity measurement using a rotational viscometer (provided that the ratio between the high and low rotation speed is at least 5, further preferably in the range of from 5 to 10).

These thixotropic agents (anti-sagging agents) may be used alone, or two or more may be used in combination.

### <Photocurable Material>

A photocurable material may be added as necessary to the curable composition of the present invention. A photocurable material is a material where the molecular structure undergoes a chemical change in a short period of time by the effect of light, and a physical change such as curing occurs. By adding the photocurable material, the stickiness on the surface of the cured product (also called residual tackiness) upon curing of the curable composition can be reduced. The photocurable material is a material that may be cured by exposure to light. A representative photocurable material is for example a material that can be cured by letting it stand at room temperature for 1 day in an indoor sunny place (near a window). Many types of this compound are known including an organic monomer, oligomer, resin, or a composition comprising the same. Examples of the types included are, but are not limited to, an unsaturated acrylic compound, a polyvinyl cinnamate, or an azide resin, an epoxy compound, and a vinyl ether compound.

Specific examples of an unsaturated acrylic compound include, a (meth)acrylate ester of a low molecular weight alcohol (oligoester acrylate) such as ethylene glycol, glycerol, trimethylolpropane, pentaerythritol, and neopentyl alcohol; a (meth)acrylate ester of an alcohol where an acid such as bisphenol-A and isocyanuric acid or the said low molecular weight alcohol etc. is modified with ethylene oxide or propylene oxide; a (meth)acrylate ester such as a polyether polyol having a polyether as the main chain and a hydroxyl group at the terminal, a polymer polyol obtained by radical polymerizing a vinyl monomer in a polyol having a polyether as the main chain, a polyester polyol having a polyester as the main chain and a hydroxyl group at the terminal, and a polyol having a vinyl polymer or a (meth)acrylic polymer as the main chain and a hydroxyl group within the main chain; a (meth)acrylate ester having a vinyl polymer or a (meth)acrylic polymer as the main chain, obtained by copolymerizing a multifunctional acrylate into the main chain; an epoxy acrylate oligomer obtained by reacting an epoxy resin of for example bisphenol-A or novolac type with (meth)acrylate; an urethane acrylate oligomer having an urethane bond and a (meth)acrylic group within the molecular chain, obtained by reacting for example a polyol, polyisocyanate, or hydroxyl group-containing (meth)acrylate.

A polyvinyl cinnamate is a light-sensitive resin having a cinnamoyl group as the light-sensitive group, and includes a polyvinyl alcohol esterified with cinnamate, as well as many polyvinyl cinnamate derivatives.

An azide resin is known as a light-sensitive resin having an azide group as the light-sensitive group. A rubber sensitizing solution comprising an azide compound as a sensitizing agent is generally used, and other detailed examples are described in "Light-Sensitive Resin" (Mar. 17, 1972, Insatsu Gakkai Shuppanbu Ltd., p. 93-, from p. 106, p. 117-). These can be used alone or blended, and a sensitizer can be added as necessary.

Examples of an epoxy compound or a vinyl ether compound include a polyisobutylene having an epoxy group-or a vinyl ether group- terminal.

Among the above photocurable materials, an unsaturated acrylic compound is preferred because it is easy to handle.

The photocurable material is preferably added in the amount of from 0.01 to 20 parts by weight, relative to 100 parts by weight of the polymer having a crosslinkable silyl group. When the amount is less than 0.01 parts by weight, the effect is small, and when the amount is greater than 20 parts by weight, the physical property may be adversely affected. The effect may be enhanced when a sensitizer such as a ketone or a nitro compound, or an accelerator such as an amine is added.

### <Air Oxidation-Curable Material>

An air oxidation-curable material may be added as necessary to the curable composition of the present invention. An air oxidation-curable material is a compound having an unsaturated group that can be crosslinked and cured by oxygen in the air. By adding this air oxidation-curable material, the stickiness on the surface of the cured product (also called residual tackiness) upon curing of the curable composition can be reduced. The air oxidation-curable material according to the present invention is a material that is capable of curing by exposure to air, more specifically, a material that has a property to react with oxygen in the air and become cured. A representative air oxidation-curable material, for example, can be cured by letting it stand 1 day indoors in air.

Specific examples of an air oxidation-curable material include, a drying oil such as tung oil and linseed oil; various alkyd resins obtained by modifying these drying oils; an acrylic polymer, epoxy resin, silicone resin, and urethane resin modified from drying oil; a polymer or copolymer of 1,2-polybutadiene and 1,4-polybutadiene with C5 - C8 diene, as well as various modified products of the said polymer or copolymer (such as a modified maleinate and a modified boiled oil). Among the tung oil and diene polymer, a liquid (liquid diene polymer) or a modified product thereof is particularly preferred.

Specific examples of the above liquid diene polymer include a liquid polymer obtained by polymerizing or copolymerizing diene compounds such as butadiene, chloroprene, isoprene, and 1,3-pentadiene, a polymer such as NBR and SBR obtained by copolymerizing these diene compounds with a copolymerizable monomer such as acrylonitrile and styrene so that the diene compound would be the main component, as well as various modified products thereof (such as a modified maleinate and a modified boiled oil). These may be used alone, or two or more may be used in combination. Among these liquid diene compounds, a liquid polybutadiene is preferred.

An air oxidation-curable material may be used alone, or two or more may be used in combination. When a catalyst or a metal dryer that promotes oxidation curing reaction is used together, the effect may be enhanced. Examples of the catalyst and metal dryer include a metal salt such as cobalt naphthenate, lead naphthenate, zirconium naphthenate, cobalt 2-ethylhexanoate, and zirconium 2-ethylhexanoate and an amine compound.

The air oxidation-curable material may be used in combination with the aforementioned photocurable material, and can be further used in combination with the aforementioned silanol-containing compound. The combination use of these 2 or 3 components further exerts the effect. This is particularly preferable, because it may exert significant contamination control effect especially when it is exposed for an extended period of time, or even in an extremely contaminating region where there is much dust or fine particle sand.

The air oxidation-curable material is preferably added in the amount of from 0.01 to 20 parts by weight, relative to 100 parts by weight of the polymer having a crosslinkable silyl group. When the amount is less than 0.01 parts by weight, the effect is small, and when the amount is greater than 20 parts by weight, the physical property may be adversely affected.

### <Antioxidant>

An antioxidant may be added as necessary to the curable composition of the present invention. Various antioxidants are known, including, but are not limited to, for example various antioxidants described in e.g. "A Handbook of Antioxidants" (Taiseisha) and "Degradation and Stabilization of Polymeric Materials" (CMC, 235-242). Examples include a thioether such as MARK PEP-36 and MARK AO-23 (all of which are available from ASAHI DENKA CO., LTD.), and a phosphorus antioxidant such as Irgafos 38, Irgafos 168, Irgafos P-EPQ (all of which are available from CIBA SPECIALTY CHEMICALS). Among these, a hindered phenol compound as shown below is preferred.

Specific examples of a hindered phenol compound include 2,6-di-tert-butyl-4-methylphenol, 2,6-di-tert-butyl-4-ethylphenol, mono- (or di- or tri-) (α-methylbenzyl)phenol, 2,2'-methylene bis(4-ethyl-6-tertbutylphenol), 2,2'-methylene bis(4-methyl-6-tertbutylphenol), 4,4'-butylidenebis(3-methyl-6-tertbutylphenol), 4,4'-thiobis(3-methyl-6-tert-butylphenol), 2,5-di-tert-butylhydroquinone, 2,5-di-tert-amylhydroquinone, triethylene glycol-bis-[3-(3-t-butyl-5-methyl-4-hydroxyphenyl)propionate], 1,6-hexanediol-bis[3-(3,5-di-t-butyl-4-hydroxyphenyl)propionate], 2,4-bis-(n-octylthio)-6-(4-hydroxy-3,5-di-t-butylanilino)-1,3,5-triazine, pentaerythrityl-tetrakis[3-(3,5-di-t-butyl-4-hydroxyphenyl)propionate], 2,2-thio-diethylenebis[3-(3,5-di-t-butyl-4-hydroxyphenyl)propionate], octadecyl-3-(3,5-di-t-butyl-4-hydroxyphenyl)propionate, N,N'-hexamethylene bis(3,5-di-t-butyl-4-hydroxy-hydrocinnamamide), 3,5-di-t-butyl-4-hydroxy-benzylphosphonate-diethyl ester, 1,3,5-trimethyl-2,4,6-tris(3,5-di-t-butyl-4-hydroxybenzyl)benzene, bis(3,5-di-t-butyl-4-hydroxybenzylphosphonate ethyl)calcium, tris-(3,5-di-t-butyl-4-hydroxybenzyl)isocyanurate, 2,4-2,4-bis[(octylthio)methyl]o-cresol, N,N'-bis[3-(3,5-di-t-butyl-4-hydroxyphenyl)propionyl]hydrazine, tris(2,4-di-t-butylphenyl)phosphite, 2-(5-methyl-2-hydroxyphenyl)benzotriazole, 2-[2-hydroxy-3,5-bis(α,α-dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-dit-butyl-2-hydroxyphenyl)-5-chlorobenzotriazole, 2-(3,5-di-t-amyl-2-hydroxyphenyl)benzotriazole, 2-(2'-hydroxy-5'-t-octylphenyl)-benzotriazole, a condensation product with methyl-3-[3-t-butyl-5-(2H-benzotriazole-2-yl)-4-hydroxyphenyl]propionate-polyethylene glycol (molecular weight about 300), a hydroxyphenyl benzotriazole derivative, 2-(3,5-di-t-butyl-4-hydroxybenzyl)-2-n-butylmalonate bis(1,2,2,6,6-pentamethyl-4-piperidyl), and 2,4-di-t-butylphenyl-3,5-di-t-butyl-4-hydroxybenzoate.

Examples of product names include, but are not limited to, NOCRAC 200, NOCRAC M-17, NOCRAC SP, NOCRAC SP-N, NOCRAC NS-5, NOCRAC NS-6, NOCRAC NS-30, NOCRAC 300, NOCRAC NS-7, and NOCRAC DAH (all of which are available from OUCHISHINKO CHEMICAL INDUSTRIAL CO., LTD.), MARK AO-30, MARK AO-40, MARK AO-50, MARK AO-60, MARK AO-616, MARK AO-635, MARK AO-658, MARK AO-80, MARK AO-15, MARK AO-18, MARK 328, and MARK AO-37 (all of which are available from ASAHI DENKA CO., LTD.), IRGANOX-245, IRGANOX-259, IRGANOX-565, IRGANOX-1010, IRGANOX-1024, IRGANOX-1035, IRGANOX-1076, IRGANOX-1081, IRGANOX-1098, IRGANOX-1222, IRGANOX-1330, and IRGANOX-1425WL (all of which are available from CIBA SPECIALTY CHEMICALS), and Sumilizer GM and Sumilizer GA-80 (all of which are available from SUMITOMO CHEMICAL CO., LTD.).

The antioxidant may be used in combination with a light stabilizer as described below. By using in combination, the effect may be further exerted. It is particularly preferred because the heat resistance especially may be improved. CHINUBIN C353 and CHINUBIN B75 where an antioxidant and a light stabilizer are blended in advance (all of which are available from CIBA SPECIALTY CHEMICALS) may also be used.

The amount of the antioxidant used is preferably in the range of from 0.1 to 10 parts by weight, relative to 100 parts by weight of the polymer having a crosslinkable silyl group. When the amount added is less than 0.1 parts by weight, the effect of improvement of weather resistance is small, and when the amount is greater than 5 parts by weight, the effect is not large enough to be of economical advantage.

### <Light Stabilizer>

A light stabilizer may be added as necessary to the curable composition of the present invention. Various light stabilizers are known, including, for example, various light stabilizers described in e.g. "A Handbook of Antioxidants" (Taiseisha) and "Degradation and Stabilization of Polymeric Materials" (CMC, 235-242). A preferred light stabilizer includes, but is not limited to, an ultraviolet absorber or a hindered amine light stabilizer compound. Specific examples include a benzotriazole compound such as CHINUBIN P, CHINUBIN 234, CHINUBIN 320, CHINUBIN 326, CHINUBIN 327, CHINUBIN 329, and CHINUBIN 213 (all of which are available from CIBA SPECIALTY CHEMICALS) or a triazine compound such as CHINUBIN 1577, a benzophenone compound such as CHIMASSORB 81, and a benzoate compound such as CHINUBIN 120 (available from CIBA SPECIALTY CHEMICALS).

A hindered amine compound is also preferable. Such compounds include:
a condensation product of dimethyl succinate-1-(2-hydroxyethyl)-4-hydroxy-2,2,6,6-tetramethylpiperidine, poly[{6-(1,1,3,3-tetramethylbutyl)amino-1,3,5-triazine-2,4-diyl}{(2,2,6,6-tetramethyl-4-piperidyl)imino}], a condensation product of N,N'-bis(3-aminopropyl)ethylenediamine-2,4-bis[N-butyl-N-(1,2,2,6,6-pentamethyl-4-piperidyl)amino]-6-chloro-1,3,5-triazine, bis(2,2,6,6-tetramethyl-4-piperidyl)sebacate, and succinic acid-bis(2,2,6,6-tetramethyl-4-piperidinyl) ester.

Examples of product names include, but are not limited to, CHINUBIN 622LD, CHINUBIN 144, CHIMASSORB 944LD, CHIMASSORB 119FL, and Irgafos 168 (all of which are available from CIBA SPECIALTY CHEMICALS), MARK LA-52, MARK LA-57, MARK LA-62, MARK LA-67, MARK LA-63, MARK LA-68, MARK LA-82, and MARK LA-87, (all of which are available from ASAHI DENKA CO., LTD.), and SANOL LS-770, SANOL LS-765, SANOL LS-292, SANOL LS-2626, SANOL LS-1114, SANOL LS-744, SANOL LS-440 (all of which are available from SANKYO CO., LTD.).

The light stabilizer may be used in combination with the aforementioned antioxidant. By using in combination, the effect may be further exerted. It is particularly preferred because especially the weather resistance may be improved. The combination is not particularly limited, although a combination of the aforementioned hindered phenolic antioxidant and for example a benzotriazole ultraviolet absorber, or a combination of the aforementioned hindered phenolic antioxidant and a hindered amine light stabilizer compound is preferred. Alternatively, a combination of the aforementioned hindered phenolic antioxidant and for example a benzotriazole ultraviolet absorber and a hindered amine light stabilizer compound is preferred. CHINUBIN C353 and CHINUBIN B75 where a light stabilizer and an antioxidant is blended in advance (all of which are available from CIBA SPECIALTY CHEMICALS) may also be used.

The hindered amine light stabilizer may be used in combination with the aforementioned photocurable material. By using in combination, the effect may be further exerted. It is particularly preferred because especially the weather resistance may be improved. The combination is not particularly limited, although in this case, a hindered amine light stabilizer comprising a tertiary amine is preferred because the rise in viscosity during storage is small and therefore has good storage stability.

The amount of the light stabilizer used is preferably in the range of from 0.1 to 10 parts by weight, relative to 100 parts by weight of the polymer having a crosslinkable silyl group. When the amount added is less than 0.1 parts by weight, the effect of improvement of weather resistance is small, and when the amount is greater than 5 parts by weight, the effect is not large enough to be of economical advantage.

### <Epoxy Resin>

An epoxy resin and a curing agent for epoxy resin can be incorporated into the composition of the present invention. When a mixture of the vinyl polymer of the present invention and an epoxy resin is used, a cured product with high strength and high adhesion can be obtained. Conventionally well known epoxy resins can be widely used, including, for example bisphenol-A type epoxy resin, bisphenol-F type epoxy resin, bisphenol-AD type epoxy resin, bisphenol-S type epoxy resin, or a hydrogenated epoxy resin thereof; glycidyl ester type epoxy resin, glycidylamine type epoxy resin, alicyclic epoxy resin, novolac type epoxy resin, urethane modified epoxy resin having an urethane bond, fluorinated epoxy resin, polybutadiene or rubber modified epoxy resin having NBR, a flame retardant epoxy resin such as glycidyl ether of tetrabromobisphenol-A. These epoxy resins may be used alone, or two or more may be used in combination. Among these epoxy resins, bisphenol-A type epoxy resin is preferred in view of workability and the balance between for example the curing property, adhesive strength, adherend versatility, water resistance, and durability.

The said epoxy resin can be used in any amount. When it is used so that the property of the elastic body is maintained after curing, such as for elastic adhesives, it should be used in the range of generally from about 10 to 80 parts by weight, preferably in the range of from 20 to 70 parts by weight, relative to 100 parts by weight of the polymer having a crosslinkable silyl group. When the amount is less than 10 parts by weight, the adhesive strength or water resistance will be insufficient, and when the amount is greater than 80 parts by weight, decrease in for example the peeling strength occurs. These are therefore not preferred.

The composition of the present invention can comprise a curing agent for epoxy resin. Conventionally well known curing agent for epoxy resin can be widely used. Examples include an aliphatic amine such as ethylenediamine, diethylenetriamine, triethylenetetramine, tetraethylenepentamine, diethylaminopropylamine, hexamethylenediamine, methylpentamethylenediamine, trimethylhexamethylenediamine, guanidine, and oleylamine; an alicyclic amine such as menthenediamine, isophoronediamine, norbornanediamine, piperidine, N,N'-dimethylpiperazine, N-aminoethylpiperazine, 1,2-diaminocyclohexane, bis(4-amino-3-methylcyclohexyl)methane, bis(4-aminocyclohexyl)methane, polycyclohexyl polyamine, and 1,8-diazabicyclo[5,4,0]undecene-7 (DBU); an aromatic amine such as metaphenylenediamine, 4,4'-diaminodiphenylmethane, and 4,4'-diaminodiphenylsulfone; a fatty aromatic amine such as m-xylylenediamine, benzyldimethylamine, 2-(dimethylaminomethyl)phenol, and 2,4,6-tris(dimethylaminomethyl)phenol; an ether bond-containing amine such as 3,9-bis(3-aminopropyl)-2,4,8,10-tetraoxaspiro[5,5]undecane (ATU), morpholine, N-methylmorpholine, polyoxypropylenediamine, polyoxypropylenetriamine, and polyoxyethylenediamine; a hydroxyl group-containing amine such as diethanolamine and triethanolamine; an acid anhydride such as tetrahydrophthalic acid anhydride, methyltetrahydrophthalic acid anhydride, methylnadic acid anhydride, hexahydrophthalic acid anhydride, and dodecylsuccinic acid anhydride; a polyamide amine such as a polyamide obtained by reacting a dimer acid with a polyamine such as diethylenetriamine and triethylenetetramine, and a polyamide using a polycarboxylic acid other than a dimer acid; an imidazole such as 2-ethyl-4-methylimidazole; dicyandiamide; a polyoxypropylene amine such as polyoxypropylene diamine and polyoxypropylene triamine; a phenol; a modified amine such as an epoxy modified amine obtained by reacting the above amine with an epoxy compound, a Mannich modified amine obtained by reacting the above amine with formalin or a phenol, a Michael addition modified amine, and a ketimine; an amine salt such as 2-ethylhexanoate salt of 2,4,6-tris(dimethylaminomethyl)phenol. These curing agents may be used alone, or two or more may be used in combination. Among these curing agents for epoxy resin, 2,4,6-tris(dimethylaminomethyl)phenol or a polyoxypropylene diamine is preferred in view of the balance between the curing property and physical property.

The amount of the said curing agent for epoxy resin used will vary according to the amount of epoxy resin incorporated, but should be generally in the range of from about 1 to 60 parts by weight, preferably in the range of from about 2 to 50 parts by weight, relative to 100 parts by weight of the polymer having a crosslinkable silyl group. When the amount is less than 1 part by weight, the curing of the epoxy resin will be insufficient and lead to decrease in adhesive strength. When the amount is greater than 60 parts by weight, bleeding to the interface will occur and lead to decrease in adhesiveness. This is therefore not preferred.

### <Compatibilizing Agent>

A compatibilizing agent can be added to the curable composition of the present invention. A specific example of such an additive that can be used is for example a copolymer of multiple vinyl monomers described in the specification of Japanese Patent Laid-Open No. 2001-329025.

### <Other Additives>

Various additives may be added as necessary to the curable composition of the present invention, with the intent to regulate various physical properties of the curable composition or the cured product. Examples of such additives include a fire retardant, a hardness regulator, a metal deactivator, an antiozonant, a phosphorus peroxide-decomposing agent, a lubricant, a pigment, and a foaming agent. These various additives may be used alone or in combination of two or more.

Specific examples of such an additive are described in for example the specifications of Japanese Patent Publication No. 4-69659, Japanese Patent Publication No. 7-108928, Japanese Patent Laid-Open No. 63-254149, and Japanese Patent Laid-Open No. 64-22904.

The curable composition of the present invention can be used substantially without a solvent. A solvent may be used in view of for example workability, but it is desirable not to use a solvent due to its effect on the environment.

The curable composition of the present invention may be prepared as a one-component composition, in which all the incorporated components are formulated in advance and kept sealed, and cured by the moisture in the air after application, or as a two-component composition, in which components such as the curing catalyst, filler, plasticizer, and water are separately formulated as curing agents, and the said incorporated material and the polymer composition is blended before use. When preparing as a two-component composition, a colorant can be added upon blending of the 2 components. This is preferable for e.g. low-storied buildings, because it will facilitate accommodating the need for multiple colors demanded by the market, for example by allowing different color variation with a limited stock to be possible, in for example providing a sealant that matches with the color of the siding board. Further, for the same reason as with the two-component composition, a colorant can be added when using a one-component curable composition. Especially with a one-component curable composition in a can container, accommodating the need for multiple colors will be facilitated. When applying those prepared as a one-component composition, water may be added after taking out from the container, blended etc., and then allowed to be cured.

The workability using a colorant will be facilitated by blending for example a pigment and a plasticizer, and optionally a filler into a paste. Further, fine adjustments of the curing rate can be made on site by adding a retardant when blending the 2 components.

### <<Aspects>>

Some of the aspects of the curable composition of the present invention are as follows.
(1) A composition comprising 100 parts by weight of a vinyl polymer having a crosslinkable silyl group or a total of 100 parts by weight of the said vinyl polymer and a polymer having any of the said crosslinkable silyl groups (i) to (x), 0.01 to 100 parts by weight of a compound having an α, β- or α, γ-diol structure in the molecule, 5 to 150 parts by weight of a plasticizer, 1 to 200 parts by weight of calcium carbonate (preferably a mixture of colloidal calcium carbonate having a particle size of 0.5 µm or less and calcium carbonate having a particle size of 1 µm or more), 0.1 to 20 parts by weight of a thixotropic agent (anti-sagging agent), 0.1 to 10 parts by weight of an antioxidant, 0.1 to 10 parts by weight of a light stabilizer, 0.1 to 10 parts by weight of an ultraviolet absorber, 0.5 to 10 parts by weight of a dehydrating agent, 0.1 to 20 parts by weight of a silane coupling agent, 0.1 to 20 parts by weight of a curing catalyst, and 0 to 50 parts by weight of a microballoon. In these compositions, the curing catalyst is preferably a tetravalent tin compound, although a combination of a divalent tin and an organic amine or a non-tin compound can also be used.
(2) A specific formulation example of (1) will be shown below. A curable composition comprising 100 parts by weight of a vinyl polymer having a crosslinkable silyl group or a total of 100 parts by weight of the vinyl polymer and a polymer having any of the said crosslinkable silyl groups (i) to (x), 3 parts by weight of monoglyceride stearate, 100 parts by weight of colloidal calcium carbonate treated with fatty acid (particle size 0.08 µ, "HAKUENKA CCR" available from SHIRAISHI KOGYO, LTD.), 30 parts by weight of heavy calcium carbonate (particle size 2 µ, "WHITON SB" available from SHIRAISHI KOGYO, LTD.), 20 parts by weight of titanium oxide (R-820 available from ISHIHARA SANGYO CO., LTD.), 50 parts by weight of polypropylene glycol having a number average molecular weight of 3000 as a plasticizer, 2 parts by weight of a thixotropic agent (polyamide anti-sagging agent, D-6500 available from KUSUMOTO CHEMICALS, LTD.), 1 part by weight of a hindered phenol antioxidant (IRGANOX 1010 available from CIBA-GEIGY CORPORATION), 1 part by weight of a hindered amine light stabilizer (SANOL LS770 available from SANKYO CO., LTD.), 1 part by weight of a benzotriazole ultraviolet absorber (CHINUBIN 327 available from CIBA SPECIALTY CHEMICALS), 2 parts by weight of vinyltrimethoxysilane, 3 parts by weight of an amino silane compound (A-1120 available from NIPPON UNICAR CO., LTD.), 2 parts by weight of a curing catalyst (U-220 available from NITTO KASEI CO., LTD.), and 3 parts by weight of glass balloon (Q-CELL #200 available from ASAHI GLASS CO., LTD.).

In this composition, instead of or in addition to polypropylene glycol having a number average molecular weight of 3000, an acrylic plasticizer such as ARUFON UP series (UP-1000, UP-1110, UP-2000, and UP-2130 available from TOAGOSEI CO., LTD.), or a phthalate ester such as diisodecyl phthalate, a non-aromatic dibasic acid ester such as dioctyl adipate, or an aliphatic ester such as methyl acetyl ricinolate can be used.

In each of the compositions (1) and (2), a polyether polymer having a crosslinkable silyl group having a molecular weight distribution Mw/Mn of 1.60 or less such as 1.20 or Mw/Mn of greater than 1.60 such as 1.80 can be used. An oxyalkylene polymer having a crosslinkable silyl group comprising a total of 20 ppm or less impurity ions sodium, zinc, and cobalt can be used. Moreover, those having a Mw/Mn of greater than 1.60 and a total of 20 ppm or less impurity ions sodium, zinc, and cobalt can be used. As an oxyalkylene polymer having a crosslinkable silyl group, an oxyalkylene polymer having a reactive silicon group at the terminal with a number average molecular weight of 11000, a molecular weight distribution Mw/Mn of 1.80, and have reactive silicon groups introduced into 80% of all the termini can be used. This is obtained by reacting dimethoxy methyl silane with an oxyalkylene polymer having an allyl group at the terminal, obtained by reacting allyl chloride with a linear oxyalkylene polymer having a hydroxyl group at the terminal obtained by polymerizing propylene oxide using zinc hexacyanocobaltate as the catalyst and polypropylene glycol having a number average molecular weight of 3000 as the initiator.

### «Application»

The curable composition of the present invention can be employed in various applications including, but not limited to, for example an architectural elastic sealing agent, a sealing agent for siding board, a sealing agent for double glass, architectural and industrial sealing agents such as an automotive sealing agent, a material for electrical and electronic parts such as the back sealer of a solar battery, an electrical insulating material such as an insulating coating material for electric wire and cable, a tackifier, an adhesive, an elastic adhesive, a contact adhesive, a tile adhesive, a reactive hotmelt adhesive, a paint, a powder paint, a coating material, a foam, a sealing material for e.g. can lids, an electrical and electronic potting agent, a film, a gasket, a casting material, various molding materials, an artificial marble, and a rust proofing and waterproofing sealer for the edge (the cut edge) of a wire glass or shatterproof glass; vibration control, vibration damping, noise reduction, and earthquake enduring material used in e.g. automobile, ship, and consumer electronics; and liquid sealing agent and waterproof agent used in e.g. automotive parts, electronics parts, and various mechanical parts.

In addition, a molded product exhibiting rubber elasticity obtained from the curable composition of the present invention can be widely used, mainly on gaskets and packings. For example, in the automotive field, the composition can be used as a body part in a sealing material for maintaining airtightness, a glass vibration control material, and an auto body part vibration isolator, especially in a windseal gasket and a door glass gasket; as a chassis component in an engine and suspension rubber for vibration control and acoustic insulation, especially in an engine mount rubber; as an engine component, for example in a hose for cooling, fuel delivery, and exhaust gas control etc., a sealing material for engine oil, as well as in an exhaust gas cleaning device component and a brake component. In the consumer electronics field, the composition can be used as for example a packing, an O-ring, and a belt. Specific examples include an ornament for a lighting equipment; a waterproof packing; a vibration control rubber; an insect repellent packing; a vibration control and acoustic absorption material and air sealing material for a cleaner; a drip proof cover, a waterproof packing, a packing for heater component, a packing for electrode component, and a safety valve diaphragm for an electric water heater; a hose, a waterproof packing, and an electromagnetic valve for a sake warmer; a waterproof packing, a feed water tank packing, a water valve, a catch drain packing, a connection hose, a belt, and a packing for insulated heater component for a steam oven/microwave and rice cooker; and an oil packing for a burning appliance such as a steam outlet sealing; an oil packing, an O-ring, a drain packing, a pressure pipe, a blower pipe, an air intake/outtake packing, a vibration control rubber, an oil filler opening packing, an oil gauge packing, an oil feed pipe, a diaphragm valve, and an air pipe etc.; a speaker gasket, a speaker edge, a turntable sheet, a belt, and a pulley for an audio equipment. In the architecture field, the composition can be used in for example a structural gasket (zipper gasket), an air membrane structure roofing material, a waterproof material, a shaped sealing, a vibration isolator, an acoustic insulation, a setting block, and a sliding material. In the sports field, the composition can be used in for example an all weather pavement material and a gymnasium flooring etc. as a sports flooring; in a soling material and an insole material etc. as sports shoes; in a golf ball etc. as a ball for ballgames. In the vibration control rubber field, the composition can be used in for example a vibration control rubber for an automobile, a vibration control rubber for a railcar, a vibration control rubber for an aircraft, and a fender beam material. In the marine and civil engineering field, the composition can be used in for example a rubber expansion joint, a bearing, a waterstop, a waterproof sheet, a rubber dam, an elastic pavement, a vibration control pad, and a protective barrier etc. as a structural material; a rubber mold form, a rubber packer, a rubber skirt, a sponge mat, a mortar hose, and a mortar strainer etc. as a construction auxiliary material; a rubber sheet and an air hose etc. as a construction aid material; a rubber buoy and a wave absorbing material etc. as a safety precaution product; an oil fence, a silt fence, an antifouling material, a marine hose, a dredging hose, and a oil skimmer etc. as an environmental protection product. The composition can also be used in for example a rubber plate, a mat, and a foam plate.

The curable composition of the present invention is particularly advantageous as a sealant or an adhesive, particularly in an application that requires weather and heat resistance or in an application where transparency is necessary. Moreover, since the curable composition of the present invention is superior in weather resistance and adhesiveness, it can be used in the method of adhesion of tiles for outer walls without filling in the joints.

Examples of a polymer having a crosslinkable silyl group that can be used in the curable composition of the present invention, examples of an additive, and examples of applications are shown in Tables 1, 2 and 3.

According to the present invention, one or two or more polymer(s) from Table 1 can be used as necessary. In addition, one or two or more additives from "compounds having an α,β- or α,γ-diol structure in the molecule" specifically shown in Table 2 among others can be used. The composition comprising the above polymer and/or additive can be used in various applications shown in Table 3. By appropriately selecting a polymer from Table 1 and/or an additive from Table 2, very good products can be obtained for each of the applications exemplified in Table 3.

**Table 1**

| Examples of a polymer having a crosslinkable silyl group |
|---|
| (I) A polyether polymer having a crosslinkable functional group, in particular a polyether polymer having a crosslinkable silyl group, |
| (II) A polyether polymer having 1.2 or less crosslinkable silyl groups on average, |
| (III) A vinyl polymer having a molecular weight distribution of less than 1.8 and a crosslinkable silyl group at one of the termini, |
| (IV) A vinyl polymer having a crosslinkable functional group and a molecular weight distribution of 1.8 or more, etc. |

**Table 2**

| Examples of an additive |
|---|
| Compound having an α,β- or α,γ-diol structure in the molecule: glycerol monostearate, tetraglycerol monostearate, tetraglycerol distearate, and pentaerythritol monostearate. |
| Curing catalyst: dibutyltin diacetylacetonate, a reaction product of dibutyltin oxide with dioctyl phthalate, dibutyltin bistriethoxysilicate, an oxy derivative thereof (stannoxane compound), tin 2'ethylhexanoate, tin phelzatate, a reaction product of these with an amine compound such as laurylamine, or a mixture thereof, etc. |
| Dehydrating agent: vinyltrimethoxysilane, ethyl silicate, and N-(β-aminoethyl)-γ-aminopropyltrimethoxysilane, etc. |
| Agent for imparting adhesiveness: γ-aminopropyltrimethoxysilane, γ-aminopropylmethyldimethoxysilane, γ-(2-aminoethyl)aminopropyltrimethoxysilane, γ-(2-aminoethyl)aminopropylmethyldimethoxysilane, and a derivative thereof, etc. |
| Plasticizer: phthalate ester, PPG, PPT, and SOLID GRADE OLIGOMER (acrylic oligomer). |
| Filler: colloidal calcium carbonate, heavy calcium carbonate, silica, carbon black, and resin powder, etc. |
| Microballoon: glass balloon and organic resin balloon, etc. Agent for regulating physical properties: a compound having one silanol group per molecule, and/or a compound capable of producing a compound having one silanol group per molecule by reacting with water, etc. |
| Thixotropic agent: a polyamide wax, a hydrogenated castor oil derivative, and micropowder silica, etc. |
| Photocurable material: an unsaturated acrylic compound such as oligoester acrylate, etc. |
| Air oxidation-curable material: a drying oil such as tung oil and linseed oil, and liquid diene polymer, etc. |
| Antioxidant: hindered phenol compound, etc. |
| Light stabilizer: a benzotriazole, a triazine, a benzophenone, or a benzoate ultraviolet absorber, and a hindered amine light stabilizer, etc. |
| Epoxy resin: bisphenol-A type epoxy resin, etc. |
| Others: a fire retardant, a hardness regulator, a metal deactivator, an antiozonant, a phosphorus peroxide-decomposing agent, a lubricant, a pigment, a foaming agent, and a compatibilizing agent, etc. |

**Table 3**

| Examples of applications |
|---|
| an architectural elastic sealing agent, a sealing agent for siding board, a sealing agent for double glass, architectural and industrial sealing agents such as an automotive sealing agent, a material for electrical and electronic parts such as the back sealer of a solar battery, an electrical insulating material such as an insulating coating material for electric wire and cable, a tackifier, an adhesive, an elastic adhesive, a contact adhesive, a tile adhesive, a reactive hotmelt adhesive, a paint, a powder paint, a coating material, a foam, a sealing material for e.g. can lids, an electrical and electronic potting agent, a film, a gasket, a casting material, various molding materials, an artificial marble, and a rust proofing and waterproofing sealer for the edge (the cut edge) of a wire glass or shatterproof glass; vibration control, vibration damping, noise reduction, and base isolation materials used in e.g. automobile, ship, and consumer electronics; and liquid sealing agent and waterproof agent used in e.g. automotive parts, electronics parts, and various mechanical parts, etc. |

### [Examples]

Specific Examples and Comparative Examples of the present invention will be described below. The present invention is not to be limited to the following Examples.

In the following Examples and Comparative Examples, "parts" and "%" represent "parts by weight" and "% by weight", respectively.

### [Example for Polymer Synthesis]

An example for polymer synthesis according to the present invention is shown below.

"Parts" and "%" represent "parts by weight" and "% by weight", respectively. "Triamine" in the synthesis examples refers to pentamethyldiethylenetriamine.

In the synthesis examples below, "number average molecular weight" and "molecular weight distribution (the ratio of the weight average molecular weight to the number average molecular weight)" was calculated from standardized polystyrene-equivalent value method using gel permeation chromatography (GPC). The GPC column used was a column packed with polystyrene crosslinking gel (shodex GPC K-804 available from SHOWA DENKO K. K.), and the GPC solvent used was chloroform.

### (Synthesis Example 1)

Each of the following vinyl polymers having a silyl group at the terminal was obtained according to the method described in Production Example 4 of Japanese Patent Laid-Open No. 2001-279108.

A vinyl polymer having an alkenyl group at the terminal (polymer [P1]) was obtained using CuBr (251.82 g, 1.76 mol), acetonitrile (3360 mL), n-butyl acrylate (33.60 L), diethyl 2,5-dibromoadipate (351 g, 0.975 mol), triamine (248.0 mL, 1.405 mmol), 1,7-octadiene (8640 mL, 58.5 mol), potassium acetate (245 g), N,N-dimethylacetamide (30 L), hydrotalcite (4.5 kg, KYOWAAD 500SH, KYOWAAD 700SL available from KYOWA CHEMICAL INDUSTRY CO., LTD.), and xylene (6.0 L).

A poly(n-butyl acrylate) polymer having a silyl group at the terminal [P2] was obtained using the above polymer [P1] (1000 g), dimethoxy methyl hydrosilane (53.7 mL), methyl orthoformate (15.9 mL), and a platinum catalyst. The polymer obtained had a number average molecular weight of about 29000, and the average number of silyl groups introduced into the polymer, as determined by ¹H NMR, was 3.1 per molecule.

### (Synthesis Example 2)

A polymer having an alkenyl group at the terminal {a vinyl polymer of polybutyl acrylate having alkenyl at the terminal [P3] was obtained as above using CuBr (1.09 kg), butyl acrylate (130 kg), diethyl 2,5-dibromoadipate (2.28 kg), acetonitrile (57.1 kg), 1,7-octadiene (14.0 kg), and triamine (659 g).

A vinyl polymer having a silyl group at the terminal (polymer [P4]) was obtained using as raw materials the above polymer [P3] (54.9 kg), dimethoxy methyl hydrosilane (1.0 kg), methyl orthoformate (0.42 kg), and a 1,1,3,3-tetramethyl-1,3-divinyl disiloxane complex of zero-valent platinum in xylene. The polymer obtained had a number average molecular weight of about 27000, and the average number of silyl groups introduced into the polymer, as determined by ¹H NMR, was 1.9 per molecule.

### (Example 1 to 2)

A mixture of the polymer obtained in the above synthesis example [polymer P2] and formulating agents other than the dehydrating agent, agent for imparting adhesiveness, and curing catalyst in Table 4 was manually mixed well, mixed well using three paint rollers, and then the dehydrating agent, agent for imparting adhesiveness, and curing catalyst were combined, further stirred and blended well by manual mixing, followed by coating to a sheet of about 2 mm thick.

This sheet coating was let stand at room temperature for 3 days, further let stand at 50°C for 4 days to allow curing and maturing. Cured products all showing sufficient rubber elasticity was obtained. No. 3 dumbell specimens were punched out from the cured products after curing and maturing, and tensile physical property was evaluated (using a SHIMADZU autograph, measurement temperature: 23°C, tensile rate: 200 mm/sec). Various formulating agents, the number of parts added, and the results of stress when stretched to 100% (M100) are shown in Table 4 for each.

### (Comparative Examples 1 to 2)

The cured product was produced and the tensile physical property was evaluated as in Examples 1 to 2, except that the compound having an α,β- or α,γ-diol structure in the molecule was not added. Various formulating agents, the number of parts added, and the results are shown in Table 4 for each.

**Table 4**

| | | Example 1 | Example 2 | Comparative Example 1 | Comparative Example 2 |
|---|---|---|---|---|---|
| Polymer | Polymer [P2] | 100 | 100 | 100 | 100 |
| (*) | Monoglyceride Oleate | 5 | 5 | - | - |
| Calcium Carbonate | CCR | 150 | 150 | 150 | 150 |
| | NANOX 25A | 20 | 20 | 20 | 20 |
| Titanium Oxide | R-820 | 10 | 10 | 10 | 10 |
| Plasticizer | DIDP | 60 | - | 60 | - |
| | UP-1000 | - | 80 | - | 80 |
| Anti-Sagging Agent | DISPERLON 6500 | 2 | 2 | 2 | 2 |
| Light Stabilizer | LS-765 | 1 | 1 | 1 | 1 |
| Ultraviolet Absorber | CHINUBIN 213 | 1 | 1 | 1 | 1 |
| Dehydrating Agent | A-171 | 2 | 2 | 2 | 2 |
| Agent for Imparting Adhesiveness | A-1120 | 1 | 1 | 1 | 1 |
| | A-187 | 1 | 1 | 1 | 1 |
| Curing Catalyst | U-220 | 2 | 2 | 2 | 2 |
| Total | | 355 | 375 | 350 | 370 |
| M100 (MPa) | | 0.187 | 0.176 | 0.502 | 0.388 |

| | | | | | |
|---|---|---|---|---|---|
| (*): The compound having an α,β- or α,γ-diol structure. | | | | | |

### Calcium carbonate:

CCR: HAKUENKA CCR (colloidal calcium carbonate available from SHIRAISHI KOGYO, LTD.)
NANOX 25A: NANOX 25A (heavy calcium carbonate available from MARUO CALCIUM CO., LTD.)

### Titanium oxide:

R-820: TAIPEQUE R-820 (rutile-type available from ISHIHARA SANGYO CO., LTD.)

### Plasticizer:

DIDP: (diisodecyl phthalate)
UP-1020: ARUFON UP-1020 (TOAGOSEI CO., LTD.)

### Anti-sagging agent:

DISPERLON 6500: DISPERLON 6500 (KUSUMOTO CHEMICALS, LTD.)

### Light stabilizer:

LS-765: SANOL LS765 (HALS available from SANKYO CO., LTD.)

### Ultraviolet absorber:

CHINUBIN 213: CHINUBIN 213 (available from CIBA SPECIALTY CHEMICALS)

### Dehydrating agent:

A-171: vinyltrimethoxysilane (NIPPON UNICAR CO., LTD.)

### Agent for imparting adhesiveness:

A-1120: N-(β-aminoethyl)-γ-aminopropyltrimethoxysilane (NIPPON UNICAR CO., LTD.)
A-187: γ-glycidoxypropyltrimethoxysilane (NIPPON UNICAR CO., LTD.)

### Curing catalyst:

U-220: NEOSTAN U-220 (dibutyltin diacetylacetonate available from NITTO KASEI CO., LTD.)
The curable compositions from all of the Examples had no problem in workability. The cured products obtained by curing these showed a tendency to have lower modulus compared to the Comparative Examples in which the compound having an α,β- or α,γ-diol structure in the molecule was not added.

### (Examples 3 to 7)

Various formulating agents were added to the polymer obtained in the above synthesis example [polymer P4], manually mixed, made into a homogeneous liquid using a planetary mixer, filled into a cartridge and let stand to be stored for one week at room temperature. The cured products were produced and the tensile physical property was evaluated as in Examples 1 to 2. In addition, another cartridge filled in the same way was immediately stored at 50°C for 4 weeks without storing at room temperature, and then taken out in the same way to be compared to the skinning time before storage. Various formulating agents, the number of parts added, and the results for each are shown in Table 5 for each.

### (Comparative Example 3)

The cured product was produced and the tensile physical property and the curing property before storage were evaluated as in Examples 3 to 7, except that the compound having an α,β- or α,γ-diol structure in the molecule was not added. Various formulating agents, the number of parts added, and the results for each are shown in Table 5.

**Table 5**

| | | Example 3 | Example 4 | Example 5 | Example 6 | Comparative Example 3 |
|---|---|---|---|---|---|---|
| Polymer | Polymer [P4] | 100 | 100 | 100 | 100 | 100 |
| | Monoglyceride Oleate | 1.5 | 3 | - | - | - |
| (*) | Monoglyceride Stearate | - | - | 1.5 | - | - |
| | Monoglyceride Acetate | - | - | - | 3 | - |
| Calcium Carbonate | CCR | 150 | 150 | 150 | 150 | 150 |
| | NANOX 25A | 20 | 20 | 20 | 20 | 20 |
| Titanium Oxide | R-820 | 10 | 10 | 10 | 10 | 10 |
| Plasticizer | DIDP | 60 | 60 | 60 | 60 | 60 |
| Anti-Sagging Agent | DISPERLON 6500 | 2 | 2 | 2 | 2 | 2 |
| Light Stabilizer | LS-765 | 1 | 1 | 1 | 1 | 1 |
| Ultraviolet Absorber | CHINUBIN 213 | 1 | 1 | 1 | 1 | 1 |
| Dehydrating Agent | A-171 | 2 | 2 | 2 | 2 | 2 |
| Agent for Imparting Adhesiveness | A-1120 | 2 | 2 | 2 | 2 | 2 |
| Curing Catalyst | U-220 | 2 | 2 | 2 | 2 | 2 |
| Total | | 351.5 | 353.0 | 351.5 | 353.0 | 350.0 |
| M100 (MPa) | | 0.34 | 0.29 | 0.36 | 0.34 | 0.44 |
| Percentage of skinning time delayed after 50°C × 4 W storage, relative to the initial value (measured at 23°C) | | 1.1 | 1.7 | 1.4 | 1.0 | 5.3 |

| | | | | | | |
|---|---|---|---|---|---|---|
| (*): The compound having an α,β- or α,γ-diol structure. | | | | | | |

The curable compositions from all of the Examples had no problem in workability and showed good storage stability. The cured products obtained by curing these showed a tendency to have lower modulus compared to the Comparative Examples in which the compound having an α, β- or α,γ-diol structure in the molecule was not added.

## Claims

1. A curable composition comprising:
- a vinyl polymer (I) having at least one crosslinkable silyl group on average, and
- an ester compound (II) having an α,β- or α,γ-diol structure in the molecule, wherein the ester compound (II) is selected from the group consisting of: a glycerol monocarboxylic acid ester, a polyglycerol carboxylic acid ester, a pentaerythritol monocarboxylic acid ester, a pentaerythritol dicarboxylic acid ester, a sorbitan monocarboxylic acid ester, and a sorbitan dicarboxylic acid ester.

2. The curable composition according to claim 1, comprising a vinyl polymer (I) having a molecular weight distribution of less than 1.8.

3. The curable composition according to claim 1 or 2, wherein the crosslinkable silyl group is represented by the general formula (1):
-[Si(R¹)_{2-b}(Y)_{b}O]ₘ-Si(R²)₃₋ₐ(Y)ₐ (1)
wherein R¹ and R², the same or different, represent an alkyl group having 1 to 20 carbons, an aryl group having 6 to 20 carbons, an aralkyl group having 7 to 20 carbons, or a triorganosiloxy group represented by (R')₃SiO-, wherein R' represents a monovalent hydrocarbon group having 1 to 20 carbons, and the a plurality of R's may be the same or different; when two or more R¹s or R²s are present, the R¹s or R²s may be the same or different; Y is a hydroxyl group or a hydrolyzable group; when two or more Ys are present, the Ys may be the same or different; a represents 0, 1, 2, or 3; b represents 0, 1, or 2; and m represents an integer from 0 to 19; provided that a + mb ≥ 1.

4. The curable composition according to any one of claims 1 to 3, comprising a vinyl polymer (I) which has a main chain produced by polymerizing a monomer selected from the group consisting of a (meth)acrylic monomer, an acrylonitrile monomer, an aromatic vinyl monomer, a fluorine-containing vinyl monomer and a silicon-containing vinyl monomer as a main component.

5. The curable composition according to claim 4, comprising a vinyl polymer (I) having a (meth)acrylic polymer as a main chain.

6. The curable composition according to claim 5, comprising a vinyl polymer (I) having an acrylic polymer as a main chain.

7. The curable composition according to claim 6, comprising a vinyl polymer (I) having an acrylic ester polymer as a main chain.

8. The curable composition according to any one of claims 1 to 7, wherein the vinyl polymer (I) has a main chain produced by living radical polymerization.

9. The curable composition according to claim 8, wherein the vinyl polymer (I) has a main chain produced by atom transfer radical polymerization.

10. The curable composition according to claim 9, comprising a vinyl polymer (I) which has, as a catalyst, a metal complex selected from the group consisting of a copper complex, a nickel complex, a ruthenium complex, or an iron complex.

11. The curable composition according to any one of claims 1 to 10, wherein the crosslinkable silyl group of the vinyl polymer (I) is at the molecular chain terminal.

12. The curable composition according to any one of claims 1 to 11, further comprising a polyether polymer having at least one crosslinkable functional group on average.

13. The curable composition according to claim 12, wherein the polyether polymer has a main chain which is essentially polyoxyalkylene.

14. The curable composition according to claim 13, wherein the polyether polymer has a main chain which is essentially polypropylene oxide.

## Patentansprüche

1. Härtbare Zusammensetzung, umfassend:
- ein Vinylpolymer (I), das im Durchschnitt wenigstens eine vernetzbaren Silylgruppe aufweist, und
- eine Esterverbindung (II) mit einer α, β- oder α, γ-Diolstruktur in dem Molekül, wobei die Esterverbindung (II) aus der aus einem Glycerin-monocarboxylsäureester, einem Polyglycerincarboxylsäureester, einem Pentaerythritolmonocarboxylsäureester, einem Pentaerythritoldicarboxylsäureester, einem Sorbitanmonocarboxylsäureester und einem Sorbitandicarboxylsäureester bestehenden Gruppe ausgewählt ist.

2. Härtbare Zusammensetzung nach Anspruch 1, umfassend ein Vinylpolymer (I), das eine Molekulargewichtsverteilung kleiner als 1,8 besitzt.

3. Härtbare Zusammensetzung nach Anspruch 1 oder 2, wobei die vernetzbare Silylgruppe dargestellt ist durch die allgemeine Formel (1):
-[Si(R¹)_{2-b}(Y)_{b}O]ₘ-Si(R²)₃₋ₐ(Y)ₐ (1),
wobei R¹ und R² gleich oder verschieden sind und eine Alkylgruppe mit 1 bis 20 Kohlenstoffatomen, eine Arylgruppe mit 6 bis 20 Kohlenstoffatomen, eine Aralkylgruppe mit 7 bis 20 Kohlenstoffatomen oder eine Triorganosiloxygruppe darstellen, die dargestellt ist durch (R')₃SiO-, wobei R' eine monovalente Kohlenwasserstoffgruppe mit 1 bis 20 Kohlenstoffatomen darstellt und mehrere R' gleich oder verschieden sein können; wobei, wenn zwei oder mehr R¹ oder R² vorliegen, die R¹ oder R² gleich oder verschieden sein können; wobei Y eine Hydroxylgruppe oder eine hydrolysierbare Gruppe ist; wobei, wenn zwei oder mehr Y vorliegen, die Y gleich oder verschieden sein können; wobei a gleich 0, 1, 2 oder 3 ist; wobei b gleich 0, 1 oder 2 ist und m eine ganze Zahl von 0 bis 19 darstellt, mit der Voraussetzung, daß a + mb ≥ 1.

4. Härtbare Zusammensetzung nach einem der Ansprüche 1 bis 3, umfassend ein Vinylpolymer (I), das eine durch Polymerisieren eines aus der aus einem (Meth)Acrylmonomer, einem Acrylonitrilmonomer, einem aromatischen Vinylmonomer, einem fluorhaltigen Vinylmonomer und einem siliziumhaltigen Vinylmonomer bestehenden Gruppe gewählten Monomers gebildete Hauptkette hat, als einen Hauptbestandteil.

5. Härtbare Zusammensetzung nach Anspruch 4, umfassend ein Vinylpolymer (I), das ein (Meth)Acrylpolymer als eine Hauptkette hat.

6. Härtbare Zusammensetzung nach Anspruch 5, umfassend ein Vinylpolymer (I), das ein Acrylpolymer als eine Hauptkette hat.

7. Härtbare Zusammensetzung nach Anspruch 6, umfassend einen Vinylpolymer (I), das ein Acrylesterpolymer als eine Hauptkette hat.

8. Härtbare Zusammensetzung nach einem der Ansprüche 1 bis 7, wobei das Vinylpolymer (I) eine Hauptkette hat, die durch Polymerisation mit lebenden Radikalen erzeugt ist.

9. Härtbare Zusammensetzung nach Anspruch 8, wobei das Vinylpolymer (I) eine Hauptkette hat, die durch Atomüberführungsradikalpolymerisation erzeugt ist.

10. Härtbare Zusammensetzung nach Anspruch 9, umfassend ein Vinylpolymer (I), welches einen aus der aus einem Kupferkomplex, einem Nickelkomplex, einem Rutheniumkomplex oder einem Eisenkomplex bestehenden Gruppe ausgewählten Metalkomplex als einen Katalysator besitzt.

11. Härtbare Zusammensetzung nach einem der Ansprüche 1 bis 10, wobei die vernetzbare Silylgruppe vinylpolymers (I) an dem molekülkettenende vorliegt.

12. Härtbare Zusammensetzung nach einem der Ansprüche 1 bis 11, ferner umfassend ein Polyetherpolymer mit durchschnittlich wenigstens einer vernetzbaren funktionalen Gruppe.

13. Härtbare Zusammensetzung nach Anspruch 12, wobei das Polyetherpolymer eine Hauptkette hat, welche im wesentlichen Polyoxyalkylen ist.

14. Härtbare Zusammensetzung nach Anspruch 12, wobei das Polyetherpolymer eine Hauptkette hat, welche im wesentlichen Polypropylenoxid ist.

## Revendications

1. Composition durcissable comprenant :
- un polymère vinylique (I) ayant au moins un groupe silyle réticulable en moyenne ; et
- un composé ester (II) ayant une structure d'α,β- ou α,γ-diol dans la molécule, où le composé ester (II) est choisi dans le groupe consistant en : un ester d'acide monocarboxylique et de glycérol, un ester d'acide carboxylique et de polyglycérol, un ester d'acide monocarboxylique et de pentaérythritol, un ester d'acide dicarboxylique et de pentaérythritol, un ester d'acide monocarboxylique et de sorbitan et un ester d'acide dicarboxylique et de sorbitan.

2. Composition durcissable selon la revendication 1 comprenant un polymère vinylique (I) ayant une distribution de masse moléculaire inférieure à 1,8.

3. Composition durcissable selon la revendication 1 ou 2 où le groupe silyle réticulable est représenté par la formule générale (1) :
-[Si(R¹)_{2-b}(Y)_{b}O]ₘ-Si(R²)₃₋ₐ(Y)ₐ (1)
où R¹ et R², identiques ou différents, représentent un groupe alkyle ayant 1 à 20 carbones, un groupe aryle ayant 6 à 20 carbones, un groupe aralkyle ayant 7 à 20 carbones ou un groupe triorganosiloxy représenté par (R')₃SiO-, où R' représente un groupe hydrocarboné monovalent ayant 1 à 20 carbones, et la pluralité de R' peuvent être identiques ou différents; quand deux ou plusieurs R¹ ou R² sont présents, les R¹ ou R² peuvent être identiques ou différents ; Y est un groupe hydroxyle ou un groupe hydrolysable ; quand deux ou plusieurs Y sont présents, les Y peuvent être identiques ou différents ; a représente 0, 1, 2 ou 3 ; b représenté 0, 1 ou 2 ; et m représente un entier de 0 à 19 ; à condition que a + mb ≥ 1.

4. Composition durcissable selon l'une quelconque des revendications 1 à 3 comprenant un polymère vinylique (I) qui a une chaîne principale produite par polymérisation d'un monomère choisi dans le groupe consistant en un monomère (méth)acrylique, un monomère acrylonitrile, un monomère vinylique aromatique, un monomère vinylique fluoré et un monomère vinylique contenant du silicium comme composant principal.

5. Composition durcissable selon la revendication 4 comprenant un polymère vinylique (I) ayant un polymère (méth)acrylique comme chaîne principale.

6. Composition durcissable selon la revendication 5 comprenant un polymère vinylique (I) ayant un polymère acrylique comme chaîne principale.

7. Composition durcissable selon la revendication 6 comprenant un polymère vinylique (I) ayant un polymère d'ester acrylique comme chaîne principale.

8. Composition durcissable selon l'une quelconque des revendications 1 à 7 où le polymère vinylique (I) a une chaîne principale produite par polymérisation radicalaire vivante.

9. Composition durcissable selon la revendication 8 où le polymère vinylique (I) a une chaîne principale produite par polymérisation radicalaire à transfert d'atomes.

10. Composition durcissable selon la revendication 9 comprenant un polymère vinylique (I) qui a, comme catalyseur, un complexe métallique choisi dans le groupe consistant en un complexe du cuivre, un complexe du nickel, un complexe du ruthénium ou un complexe du fer.

11. Composition durcissable selon l'une quelconque des revendications 1 à 10 où le groupe silyle réticulable du polymère vinylique (I) est à l'extrémité de la chaîne moléculaire.

12. Composition durcissable selon l'une quelconque des revendications 1 à 11 comprenant en outre un polymère de polyéther ayant au moins un groupe fonctionnel réticulable en moyenne.

13. Composition durcissable selon la revendication 12 où le polymère de polyéther a une chaîne principale qui est essentiellement un polyoxyalkylène.

14. Composition durcissable selon la revendication 13 où le polymère de polyéther a une chaîne principale qui est essentiellement du poly(oxyde de propylène).
